(19) Europäisches Patentamt
European Patent Office
Office européen des brevets

(11) EP 1 102 245 A1

# (12) EUROPEAN PATENT APPLICATION

(43) Date of publication:
**23.05.2001 Bulletin 2001/21**

(51) Int Cl.[7]: **G11B 5/708**, C09C 3/12, C09C 1/24

(21) Application number: **00310100.3**

(22) Date of filing: **14.11.2000**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **15.11.1999 JP 32414999**
**16.11.1999 JP 32619099**

(71) Applicant: **Toda Kogyo Corporation**
**Hiroshima-shi, Hiroshima-ken (JP)**

(72) Inventors:
- **Hayashi, Kazuyuki**
  **Hiroshima-shi, Hiroshima-ken (JP)**
- **Morii, Hiroko**
  **Hiroshima-shi, Hiroshima-ken (JP)**
- **Kamigaki, Mamoru**
  **Kure-shi, Hiroshime-ken (JP)**
- **Ishitani, Seiji**
  **Hiroshima-shi, Hiroshima-ken (JP)**

(74) Representative: **Woods, Geoffrey Corlett**
**J.A. KEMP & CO.**
**Gray's Inn**
**14 South Square**
**London WC1R 5LX (GB)**

## (54) Black filler for magnetic recording medium and magnetic recording medium using the same

(57) A magnetic recording medium comprises a non-magnetic base film; and a magnetic recording layer comprising a binder resin, magnetic particles and a black filler having an average diameter of 0.08 to 1.0 µm and comprising:

- hematite particles as core particles;
- a coating formed on the surface of said hematite particles, comprising at least one organosilicon compound selected from:

  (1) organosilane compounds obtainable from alkoxysilane compounds, and
  (2) polysiloxanes or modified polysiloxanes; and

- a carbon black coat which is provided on said coating layer in an amount of from more than 30 to 60 parts by weight based on 100 parts by weight of said hematite particles.

EP 1 102 245 A1

## Description

The present invention relates to a black filler for magnetic recording medium and a magnetic recording medium using the black filler. More particularly, the present invention relates to a black filler exhibiting not only an excellent dispersibility in vehicle due to less amount of carbon black desorbed or fallen-off from the surface thereof, but also a more excellent blackness, a lower volume resistivity value and a well-controlled myristic acid adsorption and a magnetic recording medium exhibiting not only an excellent durability, a good electromagnetic performance, an excellent surface smoothness, a smaller light transmittance and a lower surface electrical resistivity value, but also a small friction coefficient and an excellent running durability.

With recent tendencies of miniaturization and weight reduction of video or audio magnetic recording and reproducing apparatuses as well as long-time recording by these apparatuses, magnetic recording media such as magnetic tapes or magnetic discs have been strongly required to have a high performance, namely high recording density, high durability, good electromagnetic performance or the like.

The magnetic recording media such as magnetic tapes or magnetic discs are contacted with a magnetic head upon recording and reproduction, so that a magnetic recording layer thereof tends to be abraded, resulting in contamination of the magnetic head as well as deterioration in recording and reproducing characteristics thereof. For this reason, it has been conventionally demanded to provide high-durability magnetic recording media having a high abrasion resistance.

Hitherto, in order to enhance an abrasion resistance of the magnetic recording layer of magnetic recording media, it has been attempted to incorporate various fillers such as alumina ($Al_2O_3$), hematite ($\alpha$-$Fe_2O_3$) and dichromium trioxide ($Cr_2O_3$) into the magnetic recording layer.

For instance, as magnetic recording media using alumina ($Al_2O_3$), there have been proposed magnetic recording media in which $\alpha$-$Al_2O_3$ particles containing an amorphous phase are used as a filler (Japanese Patent Application Laid-Open (KOKAI) No. 5-36059(1993)), magnetic recording media in which $\alpha$-$Al_2O_3$ particles having a specific crystal structure are used as a filler (Japanese Patent Application Laid-Open (KOKAI) No. 7-244836(1995)) and the like; as magnetic recording media using hematite ($\alpha$-$Fe_2O_3$), there have been proposed magnetic recording media in which granular $\alpha$-$Fe_2O_3$ particles are used as a filler (Japanese Patent Application Laid-Open (KOKAI) No. 61-194628 (1986)), magnetic recording media in which liquid hydrocarbon and $\alpha$-$Fe_2O_3$ particles are used (Japanese Patent Application Laid-Open (KOKAI) No. 54-70806(1979)) and the like; and as magnetic recording media using dichromium trioxide ($Cr_2O_3$), there have been proposed magnetic recording media in which acicular $Cr_2O_3$ particles are used as a filler (Japanese Patent Application Laid-Open (KOKAI) No. 62-112221(1987)) and the like.

Specifically, the magnetic recording medium described in Japanese Patent Application Laid-Open (KOKAI) No. 61-194628(1986) contains magnetic particles having a specific surface area of not less than about 28 $m^2/g$ and granular $\alpha$-$Fe_2O_3$ having an average particle diameter of about 0.05 to 1 um. This magnetic recording medium is produced by dispersing a mixture composed of 300 parts by weight of Co-coated $\gamma$-$Fe_2O_3$, 38 parts by weight of vinyl chloride-vinyl acetate copolymer, 24 parts by weight of polyurethane resin, 7 parts by weight of stearic acid, one part by weight of silicone oil, a prescribed amount of granular $\alpha$-$Fe_2O_3$ having a predetermined particle size and 800 parts by weight of a mixed solvent containing methyl ethyl ketone and toluene in equal amounts, for 40 minutes using a ball mill to prepare a magnetic coating composition, and then coating a base film with the magnetic coating composition.

However, these fillers have respective inherent problems. Namely, it is known that alumina shows a poor dispersibility in binder resin. With increase in amount of alumina added, the obtained magnetic recording medium is considerably deteriorated in electromagnetic performance. Hematite particles exhibit a relatively good dispersibility in binder resin. However, in order to obtain magnetic recording media having a sufficient durability, it is required to add a considerably large amount of the hematite particles thereto, resulting in deteriorated filling percentage of magnetic particles and, therefore, poor electromagnetic performance. Further, the use of dichromium trioxide is unfavorable from environmental and hygienic viewpoints.

It is also known that when the amount of these fillers added to the magnetic layer is increased, resultant magnetic recording media are improved in durability, but deteriorated in dispersibility of magnetic particles in vehicle, thereby causing a considerable deterioration in electromagnetic performance thereof.

Accordingly, it has been strongly demanded to provide magnetic recording media containing such a filler which does not adversely affect the dispersibility of magnetic particles in vehicle even when the filler is added in an amount sufficient to impart a high durability thereto, thereby preventing the magnetic recording media from being deteriorated in electromagnetic performance thereof.

In current general-purpose video tape systems, the end position of such a magnetic tape is recognized by detecting a transparent leader tape provided at the tape end thereof using a sensor.

However, with recent demands for high-density recording on magnetic recording media, the particle size of magnetic particles used therein becomes much finer, so that a magnetic recording layer containing such magnetic particles has a high light transmittance. As a result, there arises the risk of occurrence of errors upon detecting the

end position of the magnetic tape. Therefore, it has been strongly required that a magnetic recording portion of the magnetic tape has a sufficiently high blackness, i.e., a low light transmittance.

Further, it has been demanded to further improve characteristics of magnetic recording media. That is, it is strongly required to provide magnetic recording media having not only the above-described characteristics but also a small surface electrical resistivity, an improved running property and the like.

When the surface electrical resistivity of magnetic recording media is large, the amount of electrostatic charge thereon is increased, so that cut chips of the magnetic recording media or dusts are adhered onto the surfaces of the magnetic recording media upon production and use thereof, thereby causing problems such as increase in drop-outs.

Magnetic recording media have been continuously required to enhance performances thereof. In particular, it has been strongly required to improve physical properties of these magnetic recording media such as running property in addition to the above-described high-density recording property.

The running property of magnetic recording media (tapes) can be ensured by adding a fatty acid such as myristic acid or stearic acid (hereinafter referred to merely as "myristic acid") in an amount of usually about 0.5 to 5 % by weight based on the weight of magnetic particles, into a magnetic recording layer generally formed as an upper layer of the respective magnetic recording medium, and then allowing the myristic acid to be gradually oozed out on the surface of the magnetic recording layer so as to render the surface slidable.

When the amount of the myristic acid oozed out on the surface of the magnetic recording layer is too small, it is not possible to ensure a good running property of the magnetic recording media. On the contrary, when a large amount of the myristic acid is added to the magnetic recording layer so as to allow a large amount of myristic acid to be subsequently oozed out on the surface thereof, the myristic acid is preferentially adsorbed onto the surface of each magnetic particle dispersed in the magnetic recording layer, thereby inhibiting the magnetic particles from being contacted with or adsorbed into resins. As a result, it is difficult to disperse the magnetic particles in vehicle. Also, the increase in amount of the myristic acid as a non-magnetic component causes deterioration in magnetic properties of the magnetic recording media. Further, since the myristic acid acts as a plasticizer, there arises problems such as deterioration in mechanical strength of the magnetic recording media.

Recently, with further reduction in thickness of the magnetic recording layer, the absolute amount of myristic acid added to the magnetic recording layer is decreased. In addition, since the particle size of the magnetic particles have become much finer in order to meet the requirement of high-density recording, the BET specific surface area thereof is increased, so that a large amount of myristic acid is absorbed onto the surfaces of the magnetic particles. Under these conditions, it is more and more difficult to properly adjust the amount of the myristic acid oozed out on the surface of the magnetic recording layer by the amount of the myristic acid added into the magnetic recording layer, thereby ensuring a good running property of the magnetic recording layer.

Accordingly, it has been strongly required to properly adjust the amount of myristic acid oozed out on the surface of the magnetic recording layer and ensure a good running property of the magnetic recording media.

It is widely known that carbon black fine particles as a black filler are incorporated into a magnetic recording layer. Also, there have been proposed magnetic recording media in which black titanium (TiO) particles are used as a black filler (Japanese Patent Publication (KOKOKU) Nos. 62-21185(1987) and 62-22179(1987)), magnetic recording media in which graphite fluoride is used a black filler (Japanese Patent Application Laid-Open (KOKAI) No. 56-156930 (1981)), or the like.

In order to improve surface electrical resistance and running durability of the magnetic recording media, there have been proposed such magnetic particles on the surfaces of which carbon and/or graphite are deposited or adhered in an amount of 0.2 to 10.0 % by weight based on the weight of the magnetic particles (corresponding to 0.2 to 11.11 parts by weight based on 100 parts by weight of the magnetic particles) by various methods such as gas-phase growth, e.g., chemical vapor deposition (CVD) or physical vapor deposition (PVD), reduction of organic compounds, and thermal decomposition or incomplete combustion of hydrocarbons (Japanese Patent Application Laid-Open (KOKAI) No. 10-269558(1998)).

Thus, at present, it has been most strongly demanded to provide magnetic recording media having not only an excellent durability and a good electromagnetic performance, but also a low light transmittance and a small surface electrical resistivity, and further showing a good surface smoothness, a small friction coefficient and an excellent running durability. However, such magnetic recording media capable of satisfying all of these requirements have not been obtained yet.

The above-described conventional magnetic recording media containing a filler such as alumina, hematite or dichromium trioxide, are considerably deteriorated in electromagnetic performance when the amount of the filler added thereto is increased in order to enhance the durability thereof. Therefore, the use of these fillers has failed to produce magnetic recording media capable of exhibiting both excellent durability and good electromagnetic performance.

When carbon black fine particles are used as a black filler, it is possible to obtain magnetic recording media having a low light transmittance due to excellent blackness of the carbon black fine particles added. However, since the carbon black fine particles inherently show a poor dispersibility in vehicle, the dispersibility of magnetic particles

in vehicle is also deteriorated, thereby adversely affecting properties of the obtained magnetic recording media, e.g., deterioration in electromagnetic performance, durability or the like. In this regard, Japanese Patent Application Laid-Open (KOKAI) No. 4-139619(1992) describes that "When the binder resin and the magnetic particles are kneaded together to produce a coating material, if carbon black particles are added to the composition, there arises such a problem that the magnetic particles are deteriorated in orientation and filling property, as described below in Comparative Examples. Further, the carbon black particles are bulky particles having a bulk density of about 0.1 g/$cm^3$, resulting in poor handling and processing properties thereof. Besides, the carbon black particles have problems concerning safety and hygiene such as carcinogenesis".

Thus, it has been demanded to provide a black filler as an alternate material of the carbon black fine particles. However, the above-described conventional fillers cannot contribute to sufficient reduction in light transmittance of magnetic recording media as compared to the carbon black fine particles, since alumina, hematite and dichromium trioxide show white, red and green colors, respectively.

Further, the black titanium tends to be readily oxidized and, therefore, is insufficient in stability in air. The graphite fluoride tends to suffer from the deterioration in electromagnetic performance due to poor dispersibility in binder resin.

The magnetic particles described in Japanese Patent Application Laid-Open (KOKAI) No. 10-269558(1998) tend to suffer from desorption of carbon from the surfaces thereof. Therefore, magnetic recording media produced using the magnetic particles are deteriorated in gloss, surface roughness, linear absorption, friction coefficient and running property.

As a result of the present inventors' earnest studies in view of the above problems, it has been found that by using as a filler to be incorporated into a magnetic recording layer of the magnetic recording medium, black filler having an average diameter of 0.08 to 1.0 µm and comprising:

hematite particles as core particles;
a coating layer formed on surface of the hematite particle, comprising at least one organosilicon compound selected from the group consisting of:

(1) organosilane compounds obtained from an alkoxysilane compounds, and
(2) polysiloxane or modified polysiloxane; and

a carbon black coat formed on the coating layer comprising at least one organosilicon compound, in an amount of from more than 30 to 60 parts by weight based on 100 parts by weight of the hematite particles,
such a magnetic recording medium can exhibit not only an excellent durability, a good electromagnetic performance, a smaller light transmittance and a lower surface electrical resistivity value, but also a small friction coefficient, an excellent surface smoothness and an excellent running durability. The present invention has been attained based on this finding.

An object of the present invention is to provide a black filler exhibiting not only an excellent dispersibility in vehicle due to less amount of carbon black desorbed or fallen-off from the surface thereof, but also a more excellent blackness, a lower volume resistivity value and a well-controlled myristic acid adsorption.

Another object of the present invention is to provide a magnetic recording medium exhibiting not only an excellent durability, a good electromagnetic performance, an excellent surface smoothness, a smaller light transmittance and a lower surface electrical resistivity value, but also a small friction coefficient and an excellent running durability.

To accomplish the aims, in a first aspect of the present invention, there is provided a magnetic recording medium comprising:

a non-magnetic base film; and
a magnetic recording layer comprising a binder resin, magnetic particles, and a black filler having an average diameter of 0.08 to 1.0 um,
the said black filler comprising:

hematite particles as core particles;
a coating layer formed on surface of the said hematite particle, comprising at least one organosilicon compound selected from the group consisting of:

(1) organosilane compounds obtained from an alkoxysilane compounds, and
(2) polysiloxanes or modified polysiloxanes; and

a carbon black coat formed on the said coating layer comprising at least one organosilicon compound, in an amount of from more than 30 to 60 parts by weight based on 100 parts by weight of the said hematite particles.

In a second aspect of the present invention, there is provided a magnetic recording medium comprising:

a non-magnetic base film; and
a magnetic recording layer comprising a binder resin, magnetic particles, and a black filler having an average diameter of 0.08 to 1.0 μm,
the said black filler comprising:

hematite particles as core particles, having a coat formed on at least a part of the surface of hematite particles, which coat comprises at least one compound selected from the group consisting of hydroxides of aluminum, oxides of aluminum, hydroxides of silicon and oxides of silicon in an amount of 0.01 to 50 % by weight, calculated as Al or $SiO_2$, based on the total weight of the hematite particles;
a coating layer formed on surface of the said hematite particle having the said coat, comprising at least one organosilicon compound selected from the group consisting of:

(1) organosilane compounds obtained from an alkoxysilane compounds, and
(2) polysiloxanes or modified polysiloxanes; and

a carbon black coat formed on the said coating layer comprising at least one organosilicon compound, in an amount of from more than 30 to 60 parts by weight based on 100 parts by weight of the said hematite particles.

In a third aspect of the present invention, there is provided a magnetic recording medium comprising:

a non-magnetic base film; and
a magnetic recording layer comprising a binder resin, as magnetic particles magnetic metal particles containing iron as a main component, and a black filler having an average diameter of 0.08 to 1.0 μm
the said black filler comprising:

hematite particles as core particles;
a coating layer formed on surface of the said hematite particle, comprising at least one organosilicon compound selected from the group consisting of:

(1) organosilane compounds obtained from an alkoxysilane compounds, and
(2) polysiloxanes or modified polysiloxanes; and

a carbon black coat formed on the said coating layer comprising at least one organosilicon compound, in an amount of from more than 30 to 60 parts by weight based on 100 parts by weight of the said hematite particles.

In a fourth aspect of the present invention, there is provided a magnetic recording medium comprising:

a non-magnetic base film; and
a magnetic recording layer comprising a binder resin, as magnetic particles magnetic metal particles containing iron as a main component, and a black filler having an average diameter of 0.08 to 1.0 μm
the said black filler comprising:

hematite particles as core particles, having a coat formed on at least a part of the surface of the hematite particles, which coat comprises at least one compound selected from the group consisting of hydroxides of aluminum, oxides of aluminum, hydroxides of silicon and oxides of silicon in an amount of 0.01 to 50 % by weight, calculated as Al or $SiO_2$, based on the total weight of the hematite particles;
a coating layer formed on surface of the said hematite particle having the said coat, comprising at least one organosilicon compound selected from the group consisting of:

(1) organosilane compounds obtained from an alkoxysilane compounds, and
(2) polysiloxanes or modified polysiloxanes; and

a carbon black coat formed on the said coating layer comprising at least one organosilicon compound, in an amount

of from more than 30 to 60 parts by weight based on 100 parts by weight of the said hematite particles.

In a fifth aspect of the present invention, there is provided a magnetic recording medium comprising:

a non-magnetic base film;
a non-magnetic undercoat layer formed on the non-magnetic base film; and
a magnetic recording layer formed on the non-magnetic undercoat layer, comprising a binder resin, magnetic particles and a black filler having an average diameter of 0.08 to 1.0 μm
the said black filler comprising:

hematite particles as core particles;
a coating layer formed on surface of the said hematite particle, comprising at least one organosilicon compound selected from the group consisting of:

(1) organosilane compounds obtained from an alkoxysilane compounds, and
(2) polysiloxanes or modified polysiloxanes; and

a carbon black coat formed on the said coating layer comprising at least one organosilicon compound, in an amount of from more than 30 to 60 parts by weight based on 100 parts by weight of the said hematite particles.

In a sixth aspect of the present invention, there is provided a magnetic recording medium comprising:

a non-magnetic base film;
a non-magnetic undercoat layer formed on the non-magnetic base film; and
a magnetic recording layer formed on the non-magnetic undercoat layer, comprising a binder resin, magnetic particles, and a black filler having an average diameter of 0.08 to 1.0 μm
the said black filler comprising:

hematite particles as core particles, having a coat formed on at least a part of the surface of the hematite particles, which coat comprises at least one compound selected from the group consisting of hydroxides of aluminum, oxides of aluminum, hydroxides of silicon and oxides of silicon in an amount of 0.01 to 50 % by weight, calculated as Al or $SiO_2$, based on the total weight of the hematite particles;
a coating layer formed on surface of the said hematite particle having the said coat, comprising at least one organosilicon compound selected from the group consisting of:

(1) organosilane compounds obtained from an alkoxysilane compounds, and
(2) polysiloxanes or modified polysiloxanes; and

a carbon black coat formed on the said coating layer comprising at least one organosilicon compound, in an amount of from more than 30 to 60 parts by weight based on 100 parts by weight of said hematite particles.

In a seventh aspect of the present invention, there is provided a magnetic recording medium comprising:

a non-magnetic base film;
a non-magnetic undercoat layer formed on the non-magnetic base film; and
a magnetic recording layer formed on the non-magnetic undercoat layer, comprising a binder resin, as magnetic particles magnetic metal particles containing iron as a main component, and a black filler having an average diameter of 0.08 to 1.0 μm
the said black filler comprising:

hematite particles as core particles;
a coating layer formed on surface of the said hematite particle, comprising at least one organosilicon compound selected from the group consisting of:

(1) organosilane compounds obtained from an alkoxysilane compounds, and
(2) polysiloxanes or modified polysiloxanes; and

a carbon black coat formed on the said coating layer comprising at least one organosilicon compound, in an amount

of from more than 30 to 60 parts by weight based on 100 parts by weight of the said hematite particles.

In an eighth aspect of the present invention, there is provided a magnetic recording medium comprising:

a non-magnetic base film;
a non-magnetic undercoat layer formed on the non-magnetic base film; and
a magnetic recording layer formed on the non-magnetic undercoat layer, comprising a binder resin, as magnetic particles magnetic metal particles containing iron as a main component, and a black filler having an average diameter of 0.08 to 1.0 μm
the said black filler comprising:

hematite particles as core particles, having a coat formed on at least a part of the surface of the hematite particles, which coat comprises at least one compound selected from the group consisting of hydroxides of aluminum, oxides of aluminum, hydroxides of silicon and oxides of silicon in an amount of 0.01 to 50 % by weight, calculated as Al or $SiO_2$, based on the total weight of the hematite particles;
a coating layer formed on surface of the said hematite particle having the said coat, comprising at least one organosilicon compound selected from the group consisting of:

(1) organosilane compounds obtained from an alkoxysilane compounds, and
(2) polysiloxanes or modified polysiloxanes; and

a carbon black coat formed on the said coating layer comprising at least one organosilicon compound, in an amount of from more than 30 to 60 parts by weight based on 100 parts by weight of the said hematite particles.

In a ninth aspect of the present invention, there is provided a black filler having an average diameter of 0.08 to 1.0 μm and comprising:

hematite particles as core particles;
a coating layer formed on surface of the said hematite particle, comprising at least one organosilicon compound selected from the group consisting of:

(1) organosilane compounds obtained from an alkoxysilane compounds, and
(2) polysiloxanes or modified polysiloxanes; and

a carbon black coat formed on the said coating layer comprising at least one organosilicon compound, in an amount of from more than 30 to 60 parts by weight based on 100 parts by weight of the said hematite particles.

In a tenth aspect of the present invention, there is provided a black filler having an average diameter of 0.08 to 1.0 μm and comprising:

hematite particles as core particles, having a coat formed on at least a part of the surface of the hematite particles, which coat comprises at least one compound selected from the group consisting of hydroxides of aluminum, oxides of aluminum, hydroxides of silicon and oxides of silicon in an amount of 0.01 to 50 % by weight, calculated as Al or $SiO_2$, based on the total weight of the hematite particles;
a coating layer formed on surface of the said hematite particle, comprising at least one organosilicon compound selected from the group consisting of:

(1) organosilane compounds obtained from an alkoxysilane compounds, and
(2) polysiloxanes or modified polysiloxanes; and

a carbon black coat formed on the said coating layer comprising at least one organosilicon compound, in an amount of from more than 30 to 60 parts by weight based on 100 parts by weight of the said hematite particles.

The present invention is described in detail below.
First, a black filler according to the present invention is explained.
A black filler according to the present invention has an average diameter of 0.08 to 1.0 μm and comprises hematite particles as core particles which may be coated with at least one compound selected from the group consisting of hydroxides of aluminum, oxides of aluminum, hydroxides of silicon and oxides of silicon; a coating layer formed on

surface of the core particles and comprising an organosilicon compound; and a carbon black coat formed on the coating layer comprising the organosilicon compound.

As the core particles of the black filler according to the present invention, there may be used hematite particles such as hematite particles or hematite particles containing manganese in an amount of 5 to 40 % by weight based on the weight of the Mn-containing hematite particles. In the consideration of sufficient blackness of the black filler, it is preferred that the Mn-containing hematite particles be used as the core particles.

The particle shape of the hematite particles as the core particles may include a granular shape such as a spherical shape, an irregular (anisotropic) shape, an octahedral shape, a hexahedral shape, a polyhedral shape or the like; an acicular shape such as a needle shape, a spindle shape, a rice ball shape or the like; and a plate shape, or the like.

The lower limit of the average particle size of the hematite particles as the core particles is usually 0.075 µm, preferably 0.085 µm, more preferably 0.095 µm, and the upper limit thereof is usually 0.95 µm, preferably 0.65 µm, more preferably 0.45 µm.

(i) In the case where the shape of the core particles is granular-shaped, the lower limit of the average particle diameter of the granular-shaped hematite particles is usually 0.075 µm, preferably 0.085 µm, more preferably 0.095 µm, and the upper limit thereof is usually 0.95 µm, preferably 0.65 µm, more preferably 0.45 µm.

(ii) In the case where the shape of the core particles is acicular-shaped, the lower limit of the average particle diameter (average major axis diameter) of the acicular-shaped hematite particles is usually 0.075 µm, preferably 0.085 µm, more preferably 0.095 µm, and the upper limit thereof is usually 0.95 µm, preferably 0.65 µm, more preferably 0.45 µm; and the lower limit of the aspect ratio (average major axis diameter/average minor axis diameter) of the acicular-shaped hematite particles is usually 2:1, preferably 2.5:1, more preferably 3:1, and the upper limit thereof is usually 20:1, preferably 15:1, more preferably 10:1.

(iii) In the case where the shape of the core particles is plate-shaped, the lower limit of the average particle diameter (average plate surface diameter) of the plate-shaped hematite particles is usually 0.075µm, preferably 0.085 µm, more preferably 0.095 µm, and the upper limit thereof is usually 0.95 µm, preferably 0.65 µm, more preferably 0.45 µm; and the lower limit of the plate ratio (average plate surface diameter/average thickness) of the plate-shaped hematite particles is usually 2:1, preferably 2.5:1, more preferably 3:1, and the upper limit thereof is usually 50:1, preferably 45:1, more preferably 40:1.

When the average particle size of the hematite particles is more than 0.95 µm, the obtained black filler may be coarse particles, thereby causing the deterioration of the tinting strength, so that the light transmittance of the magnetic recording medium obtained may become high. On the other hand, when the average particle size is less than 0.075 µm, the intermolecular force between the particles may be increased due to the reduction in particle diameter, so that agglomeration of the particles tends to be caused. As a result, it may become difficult to uniformly coat the surface of the hematite particles with the organosilicon compounds, and uniformly form the carbon black coat on the surface of the coating layer comprising the organosilicon compounds.

When the aspect ratio of the acicular-shaped hematite particles is more than 20:1, the particles may be entangled with each other in vehicle, so that it may become difficult to uniformly coat the surface of the acicular-shaped hematite particles with the organosilicon compounds, and uniformly form the carbon black coat on the surface of the coating layer comprising the organosilicon compounds.

Further, in the case where the upper limit of the plate ratio of the plate-shaped hematite particles exceeds 50:1, the particles may tend to be stacked each other, and it also may become difficult to uniformly coat the surfaces of the plate-shaped hematite particles with the organosilicon compounds, and uniformly form the carbon black coat on the surface of the coating layer composed of the organosilicon compounds.

The lower limit of the blackness of the Mn-containing hematite particles as core particles used in the present invention is usually 22 when represented by a L* value thereof, and the upper limit of the blackness thereof is usually 28, preferably 26 when represented by a L* value thereof. The lower limit of the blackness of the hematite particles as core particles used in the present invention is usually 22 when represented by a L* value thereof, and the upper limit of the blackness thereof is usually 38, preferably 36 when represented by a L* value thereof. When the L* value of the core particles exceeds the above-mentioned upper limit, the blackness thereof may become insufficient so that it is difficult to obtain black filler having an excellent blackness.

The lower limit of the BET specific surface area of the hematite particles as core particles is usually 1.0 $m^2/g$, preferably 2.0 $m^2/g$, more preferably 2.5 $m^2/g$, and the upper limit thereof is usually 200 $m^2/g$, preferably 150 $m^2/g$, more preferably 100 $m^2/g$. When the BET specific surface area is less than 1.0 $m^2/g$, the hematite particles as core particles may become coarse particles, or the sintering between the particles may be caused, so that the obtained black filler also may become coarse particles and tend to be deteriorated in tinting strength and as a result, the light transmittance of the magnetic recording medium obtained may become high. On the other hand, when the BET specific

surface area thereof is more than 200 $m^2/g$, the intermolecular force between the particles may be increased due to the fineness thereof, so that it may become difficult to uniformly coat the surfaces of the hematite particles with the organosilicon compounds, and uniformly form the carbon black coat on the surface of the coating layer composed of the organosilicon compounds.

As to the particle diameter distribution of the hematite particles used as core particles, the geometrical standard deviation value thereof is preferably not more than 1.8, more preferably not more than 1.7, still more preferably not more than 1.6. When the geometrical standard deviation value thereof is more than 1.8, coarse particles may be contained therein, so that the particles may be inhibited from being uniformly dispersed. As a result, it may also become difficult to uniformly coat the surfaces of the hematite particles with the organosilicon compounds, and uniformly form the carbon black coat on the surface of the coating layer composed of the organosilicon compounds. The lower limit of the geometrical standard deviation value is 1.01 under the consideration of an industrial productivity. The volume resistivity value of the core particles is usually about $1 \times 10^7$ to $1 \times 10^9$ Ω.cm.

The myristic acid adsorption of the core particles is usually 0.4 to 1.0 $mg/m^2$, preferably 0.4 to 0.9 $mg/m^2$.

In the hematite particles used as core particles of the present invention, the surfaces of the hematite particles as the core particles may be preliminarily coated with at least one compound selected from the group consisting of hydroxide of aluminum, oxides of aluminum, hydroxides of silicon and oxides of silicon (hereinafter referred to as "hydroxides and/or oxides of aluminum and/or silicon"), if required. In this case, since it is possible to more effectively reduce the carbon black desorption percentage, the dispersibility of the obtained black filler in a vehicle may become improved as compared to those having no hydroxides and/or oxides of aluminum and/or silicon coat, so that a magnetic recording medium having more excellent durability and electromagnetic performance, can be obtained.

The amount of the hydroxides and/or oxides of aluminum and/or silicon coat is 0.01 to 50 % by weight (calculated as Al, $SiO_2$ or a sum of Al and $SiO_2$) based on the weight of the hematite particles as the core particles.

By controlling the amount of hydroxides and/or oxides of aluminum and/or silicon coat to 0.01 to 50% by weight, it is possible to more effectively reduce the carbon black desorption percentage.

The hematite particles having the hydroxides and/or oxides of aluminum and/or silicon coat may be substantially identical in a particle size, a geometrical standard deviation of particle sizes, a BET specific surface area, volume resistivity value and a blackness (L* value), to those having no hydroxides and/or oxides of aluminum and/or silicon coat.

The coating layer formed on the surface of the core particle comprises at least one organosilicon compound selected from the group consisting of (1) organosilane compounds obtained from alkoxysilane compounds; and (2) polysiloxanes or modified polysiloxanes selected from the group consisting of (2-A) polysiloxanes modified with at least one compound selected from the group consisting of polyethers, polyesters and epoxy compounds (hereinafter referred to merely as "modified polysiloxanes"), and (2-B) polysiloxanes whose molecular terminal is modified with at least one group selected from the group consisting of carboxylic acid groups, alcohol groups and a hydroxyl group (hereinafter referred to merely as "terminal-modified polysiloxanes").

The organosilane compounds (1) can be produced from alkoxysilane compounds represented by the formula (I):

$$R^1{}_aSiX_{4-a} \qquad (I)$$

wherein $R^1$ is $C_6H_5$-, $(CH_3)_2CHCH_2$- or n-$C_bH_{2b+1}$- (wherein b is an integer of 1 to 18); X is $CH_3O$- or $C_2H_5O$-; and a is an integer of 0 to 3.

The alkoxysilane compounds may be dried or heat-treated for producing the organosilane compounds (1), for example, at a temperature of usually 40 to 200°C, preferably 60 to 150°C for usually 10 minutes to 12 hours, preferably 30 minutes to 3 hours.

Specific examples of the alkoxysilane compounds may include methyltriethoxysilane, dimethyldiethoxysilane, phenyltriethyoxysilane, diphenyldiethoxysilane, methyltrimethoxysilane, dimethyldimethoxysilane, phenyltrimethoxysilane, diphenyldimethoxysilane, isobutyltrimethoxysilane, decyltrimethoxysilane or the like. Among these alkoxysilane compounds, in view of the desorption percentage and the adhering effect of carbon black, methyltriethoxysilane, phenyltriethyoxysilane, methyltrimethoxysilane, dimethyldimethoxysilane and isobutyltrimethoxysilane are preferred, and methyltriethoxysilane and methyltrimethoxysilane are more preferred.

As the polysiloxanes (2), there may be used those compounds represented by the formula (II):

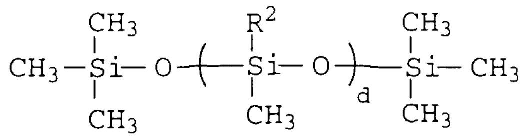 (II)

wherein $R^2$ is H- or $CH_3$-, and d is an integer of 15 to 450.

Among these polysiloxanes, in view of the desorption percentage and the adhering effect of carbon black, polysiloxanes having methyl hydrogen siloxane units are preferred.

As the modified polysiloxanes (2-A), there may be used:

(a) polysiloxanes modified with polyethers represented by the formula (III):

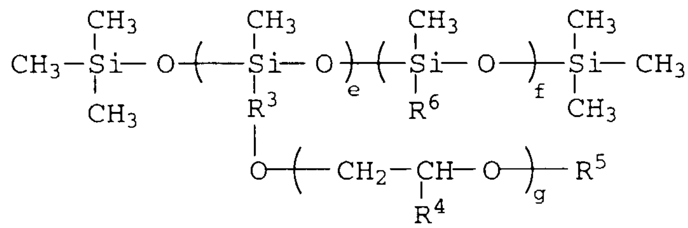 (III)

wherein $R^3$ is $-(-CH_2-)_h-$; $R^4$ is $-(-CH_2-)_i-CH_3$; $R^5$ is -OH, -COOH, $-CH=CH_2$, $-CH(CH_3)=CH_2$ or $-(-CH_2-)_j-CH_3$; $R^6$ is $-(-CH_2-)_k-CH_3$; g and h are an integer of 1 to 15; i, j and k are an integer of 0 to 15; e is an integer of 1 to 50; and f is an integer of 1 to 300;

(b) polysiloxanes modified with polyesters represented by the formula (IV):

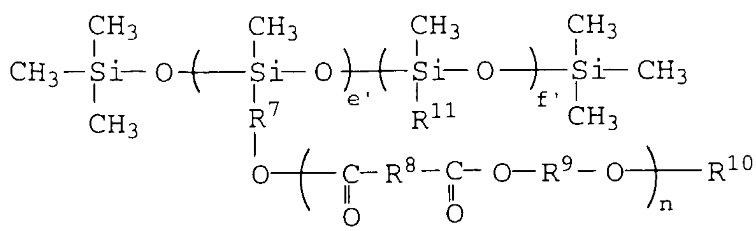 (IV)

wherein $R^7$, $R^8$ and $R^9$ are $-(-CH_2-)_q-$ and may be the same or different; $R^{10}$ is -OH, -COOH, $-CH=CH_2$, $-CH(CH_3)=CH_2$ or $-(-CH_2-)_r-CH_3$; $R^{11}$ is $-(-CH_2-)_s-CH_3$; n and q are an integer of 1 to 15; r and s are an integer of 0 to 15; e' is an integer of 1 to 50; and f' is an integer of 1 to 300;

(c) polysiloxanes modified with epoxy compounds represented by the formula (V):

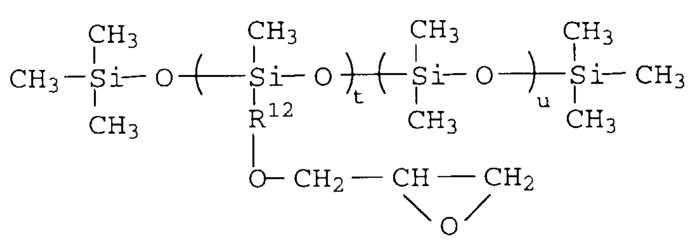 (V)

wherein $R^{12}$ is $-(-CH_2-)_v-$; v is an integer of 1 to 15; t is an integer of 1 to 50; and u is an integer of 1 to 300; or a mixture thereof.

Among these modified polysiloxanes (2-A), in view of the desorption percentage and the adhering effect of carbon black, the polysiloxanes modified with the polyethers represented by the formula (III), are preferred.

As the terminal-modified polysiloxanes (2-B), there may be used those represented by the formula (VI):

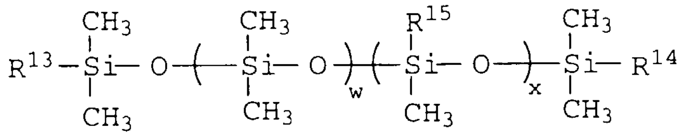

(VI)

wherein $R^{13}$ and $R^{14}$ are -OH, $R^{16}$OH or $R^{17}$COOH and may be the same or different; $R^{15}$ is $-CH_3$ or $-C_6H_5$; $R^{16}$ and $R^{17}$ are $-(-CH_2-)y-$; wherein y is an integer of 1 to 15; w is an integer of 1 to 200; and x is an integer of 0 to 100. Among these terminal-modified polysiloxanes, in view of the desorption percentage and the adhering effect of carbon black, the polysiloxanes whose terminals are modified with carboxylic acid groups are preferred.

The amount of the coating layer composed of the organosilicon compounds is usually 0.02 to 5.0 % by weight, preferably 0.03 to 4.0 % by weight, more preferably 0.05 to 3.0 % by weight (calculated as Si) based on the weight of the hematite particles coated with the organosilicon compounds.

When amount of the coating layer composed of the organosilicon compounds is less than 0.02 % by weight, it may become difficult to form the carbon black coat on the coating layer in such an amount enough to improve the blackness and volume resistivity thereof.

As the carbon black fine particles used in the present invention, there may be exemplified commercially available carbon blacks such as furnace black, channel black or the like. Specific examples of the commercially available carbon blacks usable in the present invention, may include #3050, #3150, #3250, #3750, #3950, MA100, MA7, #1000, #2400B, #30, MA77, MA8, #650, MA11, #50, #52, #45, #2200B, MA600, etc. (tradename, produced by MITSUBISHI CHEMICAL CORP.), SEAST 9H, SEAST 7H, SEAST 6, SEAST 3H, SEAST 300, SEAST FM, etc. (tradename, produced by TOKAI CARBON CO., LTD.), Raven 1250, Raven 860, Raven 1000, Raven 1190 ULTRA, etc. (tradename, produced by COLOMBIAN CHEMICALS COMPANY), Ketchen black EC, Ketchen black EC600JD, etc. (tradename, produced by KETCHEN INTERNATIONAL CO., LTD.), BLACK PEARLS-L, BLACK PEARLS 1000, BLACK PEARLS 4630, VULCAN XC72, REGAL 660, REGAL 400, etc. (tradename, produced by CABOT SPECIALTY CHEMICALS INK CO., LTD.), or the like.

In the consideration of the reducing effect of the myristic acid- adsorption, the carbon black fine particles having a pH value of not more than 9.0 is preferred. Especially, there may be exemplified #3050, #3150, #3250, #3750, #3950, MA100, MA7, #1000, #2400B, #30, MA77, MA8, #650, MA11, #50, #52, #45, #2200B, MA600 (tradename, produced by MITSUBISHI CHEMICAL CORP.), SEAST 9H, SEAST 7H, SEAST 6, SEAST 3H, SEAST 300, SEAST FM (tradename, produced by TOKAI CARBON CO., LTD.), Raven 1250, Raven 860, Raven 1000, Raven 1190 ULTRA (tradename, produced by COLOMBIAN CHEMICALS COMPANY), BLACK PEARLS-L, BLACK PEARLS 1000, BLACK PEARLS 4630, REGAL 660, REGAL 400 (tradename, produced by CABOT SPECIALTY CHEMICALS INK CO., LTD.).

Further, in the consideration of more uniform coat of carbon black to the coating layer comprising at least one organosilicon compound, the carbon black fine particles having a DBP oil absorption of not more than 180 ml/100 g is preferred. Especially, there may be exemplified #3050, #3150, #3250, MA100, MA7, #1000, #2400B, #30, MA77, MA8, #650, MA11, #50, #52, #45, #2200B, MA600 (tradename, produced by MITSUBISHI CHEMICAL CORP.), SEAST 9H, SEAST 7H, SEAST 6, SEAST 3H, SEAST 300, SEAST FM (tradename, produced by TOKAI CARBON CO., LTD.), Raven 1250, Raven 860, Raven 1000, Raven 1190 ULTRA (tradename, produced by COLOMBIAN CHEMICALS COMPANY), BLACK PEARLS-L, BLACK PEARLS 1000, BLACK PEARLS 4630, REGAL 660, REGAL 400 (tradename, produced by CABOT SPECIALTY CHEMICALS INK CO., LTD.).

The lower limit of the average particle size of the carbon black fine particles used is usually 0.002 μm, preferably 0.005 μm, and the upper limit thereof is usually 0.05 μm. preferably 0.035 μm. When the average particle size of the carbon black fine particles used is less than 0.002 μm, the carbon black fine particles used are too fine to be well handled.

On the other hand, when the average particle size thereof is more than 0.05 μm, since the particle size of the carbon black fine particles used is much larger, it is necessary to apply a larger mechanical shear force for forming the uniform carbon black coat on the coating layer composed of the organosilicon compounds, thereby rendering the coating process industrially disadvantageous.

The amount of the carbon black coat (first carbon black coat) formed on the coating layer composed of the organosilicon compounds is usually 1 to 30 parts by weight, preferably 3 to 25 parts by weight based on 100 parts by weight of the hematite particles as the core particles.

When the amount of the first carbon black coat formed is less than 1 part by weight, the amount of an adhesive capable of being bonded to the carbon black also may become smaller due to insufficient amount of the first carbon

black coat. As a result, when carbon black for forming a second carbon black coat is added in a large amount, e.g., more than 30 parts by weight based on 100 parts by weight of the core particles, the carbon black desorption percentage may be increased, thereby failing to not only sufficiently reduce a volume resistivity value of the obtained composite particles, but also impart a sufficient blackness and an improved myristic acid adsorption thereto.

When the amount of the first carbon black coat adhered is more than 30 parts by weight, carbon black may tend to be desorbed or fallen-off from the surfaces of the core particles. As a result, the obtained black filler also may tend to suffer from desorption of carbon black from the surfaces thereof.

In the present invention, the amount of a layer composed of carbon black which is formed onto the surface of the first carbon black coat (hereinafter referred to merely as "second carbon black coat") through dimethylpolysiloxanes is usually 1 to 30 parts by weight, preferably 3 to 25 parts by weight based on 100 parts by weight of the core particles.

When the amount of the second carbon black coat adhered is more than 30 parts by weight, the carbon black desorption percentage may be increased.

The total amount of carbon black adhered is in the range of from more than 30 to 60 parts by weight based on 100 parts by weight of the core particles.

When the total amount of carbon black adhered is not more than 30 parts by weight, it may be difficult to reduce the myristic acid adsorption to not more than 0.3 mg/m$^2$. On the contrary, when the total amount of carbon black adhered is more than 60 parts by weight, the myristic acid adsorption may become less than 0.01 mg/m$^2$. As a result, it may be difficult to control the amount of myristic acid oozed onto the surface of the magnetic recording layer.

The thickness of carbon black adhered is usually not more than 0.06 µm, preferably not more than 0.04 µm, more preferably not more than 0.02 µm, still more preferably not more than 0.01µm.

In the present invention, the first and second carbon black coats may be integrated together by bonding carbon black particles contained in the respective coats with each other using an adhesive. As the adhesive capable of firmly and uniformly bonding the coats with each other and reducing the myristic acid adsorption, there may be suitably used dimethyl polysiloxane represented by the following chemical formula:

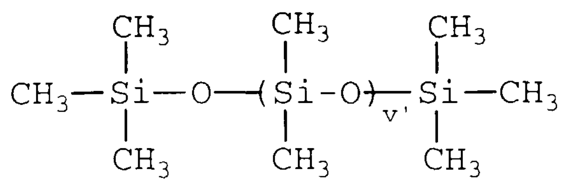

wherein v' is a is an integer of 15 to 450.

The amount of the adhesive used is usually 0.1 to 5 parts by weight based on 100 parts by weight of the core particles.

When the amount of the adhesive adhered is less than 0.1 part by weight, it may be difficult to sufficiently adhere the second carbon black coat on the first carbon black coat. As a result, it may be difficult to improve the myristic acid adsorption of the obtained black filler.

When the amount of the adhesive used is more than 5 parts by weight, although the carbon black can be sufficiently adhered, the effect is already saturated and, therefore, such a large amount of the adhesive is unnecessary and meaningless.

The particle shape and size of the black filler according to the present invention, are considerably varied depending upon those of the core particles. More specifically, the particle shape or configuration of the black filler is approximately similar to that of the core particles, and the particle size of the black filler is slightly larger than that of the core particles.

The lower limit of the average particle size of the black filler according to the present invention is usually 0.08 µm, preferably 0.09 µm, more preferably 0.1 µm, and the upper limit thereof is usually 1.0 µm, preferably 0.7 µm, more preferably 0.5 µm.

More specifically, when the granular-shaped hematite particles are used as core particles, the lower limit of the average particle diameter of the black filler according to the present invention is usually 0.08 um, preferably 0.09 µm, more preferably 0.1 µm, and the upper limit thereof is usually 1.0 µm, preferably 0.7 µm, more preferably 0.5 µm.

When the acicular-shaped hematite particles are used as core particles, the lower limit of the average particle diameter (average major axis diameter) of the black filler according to the present invention is usually 0.08 µm, preferably 0.09 µm, more preferably 0.1 µm and the upper limit thereof is usually 1.0 µm, preferably 0.7 µm, more preferably 0.5 µm; and the lower limit of the aspect ratio (average major axis diameter/average minor axis diameter) of the black filler according to the present invention, is usually 2:1, preferably 2.5:1, more preferably 3:1, and the upper limit thereof

is usually 20:1, preferably 15:1, more-preferably 10:1.

When the plate-shaped hematite particles are used as core particles, the lower limit of the average particle diameter (average plate surface diameter) of the black filler according to the present invention is usually 0.08 µm, preferably 0.09 µm, more preferably 0.1 µm and the upper limit thereof is usually 1.0 µm, preferably 0.7 µm, more preferably 0.5 µm; and the lower limit of the plate ratio (average plate surface diameter/average thickness) of the black filler according to the present invention, is usually 2:1, preferably 2.5:1, more preferably 3:1, and the upper limit thereof is usually 50:1, preferably 20:1, more preferably 10:1.

When the average particle size of the black filler is less than 0.08 µm, the black filler may tend to be agglomerated by the increase of intermolecular force due to the reduction in particle size, thereby deteriorating the dispersibility in a vehicle upon production of the magnetic coating composition. As a result, the obtained magnetic recording media may suffer from deterioration in surface smoothness, durability and electromagnetic performance. When the average particle diameter of the black filler is more than 1.0 µm, the obtained black filler may be coarse particles, and deteriorated in tinting strength, so that it may become difficult to reduce the light transmittance of the magnetic recording medium.

In case of the acicular-shaped black filler, when the aspect ratio of the black filler is more than 20.0:1, the black filler may be entangled with each other in the binder resin, thereby deteriorating the dispersibility in a vehicle upon production of the magnetic coating composition. As a result, it may become difficult to obtain the magnetic recording media showing excellent surface smoothness, durability and electromagnetic performance.

In case of the plate-shaped black filler, when the plate ratio of the black filler is more than 50.0:1, the black filler may be stacked each other in the binder resin, thereby deteriorating the dispersibility in a vehicle upon production of the magnetic coating composition. As a result, it may become difficult to obtain the magnetic recording media showing excellent surface smoothness, durability and electromagnetic performance.

The percentage of desorption of carbon black from the black filler according to the present invention, is preferably not more than 20 %, more preferably not more than 10 %. When the desorption percentage of the carbon black is more than 20 %, the desorbed carbon black may tend to inhibit the black filler from being uniformly dispersed in the binder resin upon production of the magnetic coating composition, so that it may become difficult to obtain magnetic recording media which are excellent in surface smoothness, durability and electromagnetic performance.

As to the blackness of the black filler according to the present invention, in the case the Mn-containing hematite particles are used as core particles, the upper limit of the blackness of the black filler is usually 18.5, preferably 18.0 when represented by L* value. In the case the hematite particles are used as core particles, the upper limit of the blackness of the black filler is usually 20.5, preferably 20.0 when represented by L* value.

When the L* value of the black filler is more than the above-mentioned upper limit, the lightness of the obtained black filler may become high, so that the black filler having a sufficient blackness cannot be obtained and as a result, it may become difficult to reduce the light transmittance of the magnetic recording medium. The lower limit of the blackness thereof is preferably 15.0 when represented by L* value.

The volume resistivity of the black filler according to the present invention is preferably not more than $1 \times 10^4$ Ω·cm, more preferably $1 \times 10^1$Ω·cm to $7.5 \times 10^3$ Ω·cm, still more preferably $1 \times 10^1$Ω·cm to $5 \times 10^3$ Ω·cm. When the volume resistivity is more than $1 \times 10^4$ Ω·cm, it may be difficult to reduce the surface electrical resistivity value of the obtained magnetic recording media to a sufficiently low level.

The black filler according to the present invention has a myristic acid adsorption of usually 0.01 to 0.3 mg/$m^2$, preferably 0.01 to 0.29 mg/$m^2$, more preferably 0.01 to 0.28 mg/$m^2$.

When the myristic acid adsorption of the black filler is less than 0.01 mg/$m^2$, it may be difficult to control the amount of myristic acid oozed onto the surface of the magnetic recording layer, due to less amount of myristic acid adsorbed into the black filler. As a result, upon repeated use of the magnetic tape, it may be difficult to maintain a sufficiently low friction coefficient thereof for a long period of time.

When the myristic acid adsorption of the black filler is more than 0.3 mg/$m^2$, the amount of myristic acid adsorbed into the black filler becomes too large. As a result, the amount of myristic acid oozed onto the surface of the magnetic recording layer may become comparatively small, so that it may be difficult to ensure a good running property of the obtained magnetic recording medium.

The BET specific surface area of the black filler according to the present invention, is usually 1 to 200 $m^2$/g, preferably 2 to 150 $m^2$/g, more preferably 2.5 to 100 $m^2$/g. When the BET specific surface area thereof is less than 1 $m^2$/g, the obtained black filler may be coarse and/or the sintering between the particles is caused, thereby deteriorating the tinting strength, so that it may become difficult to reduce the light transmittance of the magnetic recording medium. On the other hand, when the BET specific surface area is more than 200 $m^2$/g, the black filler tend to be agglomerated together by the increase in intermolecular force due to the reduction in particle diameter, thereby deteriorating the dispersibility in a binder resin upon production of the magnetic coating composition, so that the obtained magnetic recording media may suffer from deterioration in surface smoothness, durability and electromagnetic performance.

The geometrical standard deviation value of the black filler according to the present invention is preferably not more than 1.8. When the geometrical standard deviation value thereof is more than 1.8, the black filler may contain

a large amount of coarse particles, so that it may become difficult to disperse the particles in vehicle upon the production of a magnetic coating composition and, therefore, obtain magnetic recording media which are excellent in surface smoothness, durability and electromagnetic performance. In the consideration of the surface smoothness, durability and electromagnetic performance of the obtained magnetic recording media, the geometrical standard deviation of diameters of the black filler is preferably not more than 1.7, more preferably not more than 1.6. Further in the consideration of industrial productivity of the black filler, the lower limit of the geometrical standard deviation of diameters thereof is 1.01.

Next, the magnetic recording medium of the present invention is described.

Magnetic recording media are generally comprise:

(1) a non-magnetic base film and a magnetic recording layer formed on the non-magnetic base film, which comprises a binder resin, magnetic particles and a filler; or

(2) a non-magnetic base film, a non-magnetic undercoat layer formed on the non-magnetic base film, which comprises a binder resin and non-magnetic particles, and a magnetic recording layer formed on the non-magnetic undercoat layer, which comprises a binder resin, magnetic particles and a filler.

As the non-magnetic base film, the following materials which are at present generally used for the production of a magnetic recording medium are usable as a raw material: a synthetic resin such as polyethylene terephthalate, polyethylene, polypropylene, polycarbonate, polyethylene naphthalate, polyamide, polyamideimide and polyimide; foil and plate of a metal such as aluminum and stainless steel; and various kinds of paper. The thickness of the non-magnetic base film varies depending upon the material, but it is usually about 1.0 to 300 μm, preferably 2.0 to 200 μm.

In the case of a magnetic disc, polyethylene terephthalate is usually used as the non-magnetic base film. The thickness thereof is usually 50 to 300 μm, preferably 60 to 200 μm. In the case of a magnetic tape, when polyethylene terephthalate is used as the base film, the thickness thereof is usually 3 to 100 μm, preferably 4 to 20 μm. When polyethylene naphthalate is used, the thickness thereof is usually 3 to 50 μm, preferably 4 to 20 μm. When polyamide is used, the thickness thereof is usually 2 to 10 μm, preferably 3 to 7 μm.

As the magnetic particles used in the present invention, there may be exemplified magnetic iron oxide particles such as maghemite particles, magnetite particles and berthollide compound particles which are an intermediate oxide between maghemite and magnetite; magnetic particles obtained by incorporating any one or more different kinds of elements other than Fe, such as Co, Al, Ni, P, Zn, Si, B or the like in the said magnetic iron oxide particles; magnetic iron oxide particles obtained by coating the surface of the above-mentioned magnetic iron oxide particles or those containing different kinds of elements, with cobalt, both cobalt and iron or the like (hereinafter referred to merely as "magnetic cobalt-coated iron oxide particles"); magnetic metal particles containing iron as a main component; magnetic metal particles containing iron as a main component and elements other than Fe at least one selected from the group consisting of Co, Al, Ni, P, Si, Zn, B, Nd, La, Sm and Y, including magnetic iron-based alloy particles; magnetoplumbite-type ferrite particles such as plate-like ferrite particles containing Ba, Sr or Ba-Sr; plate-like magnetoplumbite-type ferrite particles obtained by incorporating divalent metals or tetravalent metals (such as Co, Ni, Zn, Mg, Mn, Nb, Cu, Ti, Sn, Zr, Mo or the like) as a coercive force-reducing agent in the plate-like magnetoplumbite-type ferrite particles; or the like.

With the consideration of the high-density recording, magnetic cobalt-coated iron oxide particles, magnetic metal particles containing iron as a main component, and magnetic iron-based alloy particles containing elements other than Fe at least one selected from the group consisting of Co, Al, Ni, P, Si, Zn, B, Nd, La, Sm, Y or the like are preferable.

Especially, the magnetic metal particles containing iron as a main component comprising (i) iron and Al; (ii) iron, Co and Al, (iii) iron, Al and at least one rare-earth metal such as Nd, La and Y, or (iv) iron, Co, Al and at least one rare-earth metal such as Nd, La and Y is more preferable from the point of the durability of the magnetic recording medium. Further, the magnetic acicular metal particles containing iron as a main component comprising iron, Al and at least one rare-earth metal such as Nd, La and Y is still more preferable.

More specifically, the magnetic acicular metal particles containing iron as a main component may be exemplified as follows.

1) Magnetic acicular metal particles comprises iron; and cobalt of usually 0.05 to 40 % by weight, preferably 1.0 to 35 % by weight, more preferably 3 to 30 % by weight (calculated as Co) based on the weight of the magnetic acicular metal particles.

2) Magnetic acicular metal particles comprises iron; and aluminum of usually 0.05 to 10 % by weight, preferably 0.1 to 7 % by weight (calculated as Al) based on the weight of the magnetic acicular metal particles.

3) Magnetic acicular metal particles comprises iron; cobalt of usually 0.05 to 40 % by weight, preferably 1.0 to 35 % by weight, more preferably 3 to 30 % by weight (calculated as Co) based on the weight of the magnetic acicular

metal particles; and aluminum of usually 0.05 to 10 % by weight, preferably 0.1 to 7 % by weight (calculated as Al) based on the weight of the magnetic acicular metal particles.

4) Magnetic acicular metal particles comprises iron; cobalt of usually 0.05 to 40 % by weight, preferably 1.0 to 35 % by weight, more preferably 3 to 30 % by weight (calculated as Co) based on the weight of the magnetic acicular metal particles; and at least one selected from the group consisting of Nd, La and Y of usually 0.05 to 10 % by weight, preferably 0.1 to 7 % by weight (calculated as the corresponding element) based on the weight of the magnetic acicular metal particles.

5) Magnetic acicular metal particles comprises iron; aluminum of usually 0.05 to 10 % by weight, preferably 0.1 to 7 % by weight (calculated as Al) based on the weight of the magnetic acicular metal particles; and at least one selected from the group consisting of Nd, La and Y of usually 0.05 to 10 % by weight, preferably 0.1 to 7 % by weight (calculated as the corresponding element) based on the weight of the magnetic acicular metal particles.

6) Magnetic acicular metal particles comprises iron; cobalt of usually 0.05 to 40 % by weight, preferably 1.0 to 35 % by weight, more preferably 3 to 30 % by weight (calculated as Co) based on the weight of the magnetic acicular metal particles; aluminum of usually 0.05 to 10 % by weight, preferably 0.1 to 7 % by weight (calculated as Al) based on the weight of the magnetic acicular metal particles; and at least one selected from the group consisting of Nd, La and Y of usually 0.05 to 10 % by weight, preferably 0.1 to 7 % by weight (calculated as the corresponding element) based on the weight of the magnetic acicular metal particles.

7) Magnetic acicular metal particles comprises iron; cobalt of usually 0.05 to 40 % by weight, preferably 1.0 to 35 % by weight, more preferably 3 to 30 % by weight (calculated as Co) based on the weight of the magnetic acicular metal particles; and at least one selected from the group consisting of Ni, P, Si, Zn, Ti, Cu and B of usually 0.05 to 10 % by weight, preferably 0.1 to 7 % by weight (calculated as the corresponding element) based on the weight of the magnetic acicular metal particles.

8) Magnetic acicular metal particles comprises iron; aluminum of usually 0.05 to 10 % by weight, preferably 0.1 to 7 % by weight (calculated as Al) based on the weight of the magnetic acicular metal particles; and at least one selected from the group consisting of Ni, P, Si, Zn, Ti, Cu and B of usually 0.05 to 10 % by weight, preferably 0.1 to 7 % by weight (calculated as the corresponding element) based on the weight of the magnetic acicular metal particles.

9) Magnetic acicular metal particles comprises iron; cobalt of usually 0.05 to 40 % by weight, preferably 1.0 to 35 % by weight, more preferably 3 to 30 % by weight (calculated as Co) based on the weight of the magnetic acicular metal particles; aluminum of usually 0.05 to 10 % by weight, preferably 0.1 to 7 % by weight (calculated as Al) based on the weight of the magnetic acicular metal particles; and at least one selected from the group consisting of Ni, P, Si, Zn, Ti, Cu and B of usually 0.05 to 10 % by weight, preferably 0.1 to 7 % by weight (calculated as the corresponding element) based on the weight of the magnetic acicular metal particles.

10) Magnetic acicular metal particles comprises iron; cobalt of usually 0.05 to 40 % by weight, preferably 1.0 to 35 % by weight, more preferably 3 to 30 % by weight (calculated as Co) based on the weight of the magnetic acicular metal particles; at least one selected from the group consisting of Nd, La and Y of usually 0.05 to 10 % by weight, preferably 0.1 to 7 % by weight (calculated as the corresponding element) based on the weight of the magnetic acicular metal particles; and at least one selected from the group consisting of Ni, P, Si, Zn, Ti, Cu and B of usually 0.05 to 10 % by weight, preferably 0.1 to 7 % by weight (calculated as the corresponding element) based on the weight of the magnetic acicular metal particles.

11) Magnetic acicular metal particles comprises iron; aluminum of usually 0.05 to 10 % by weight, preferably 0.1 to 7 % by weight (calculated as Al) based on the weight of the magnetic acicular metal particles; at least one selected from the group consisting of Nd, La and Y of ordinarily 0.05 to 10 % by weight, preferably 0.1 to 7 % by weight (calculated as the corresponding element) based on the weight of the magnetic acicular metal particles; and at least one selected from the group consisting of Ni, P, Si, Zn, Ti, Cu and B of usually 0.05 to 10 % by weight, preferably 0.1 to 7 % by weight (calculated as the corresponding element) based on the weight of the magnetic acicular metal particles.

12) Magnetic acicular metal particles comprises iron; cobalt of usually 0.05 to 40 % by weight, preferably 1.0 to 35 % by weight, more preferably 3 to 30 % by weight (calculated as Co) based on the weight of the magnetic acicular metal particles; aluminum of usually 0.05 to 10 % by weight, preferably 0.1 to 7 % by weight (calculated as Al) based on the weight of the magnetic acicular metal particles; at least one selected from the group consisting of Nd, La and Y of usually 0.05 to 10 % by weight, preferably 0.1 to 7 % by weight (calculated as the corresponding element) based on the weight of the magnetic acicular metal particles; and at least one selected from the group consisting of Ni, P, Si, Zn, Ti, Cu and B of usually 0.05 to 10 % by weight, preferably 0.1 to 7 % by weight (calculated as the corresponding element) based on the weight of the magnetic acicular metal particles.

The iron content in the particles is the balance, and is preferably 50 to 99 % by weight, more preferably 60 to 95 % by weight (calculated as Fe) based on the weight of the magnetic particles containing iron as a main component.

From the consideration of the excellent durability of the magnetic recording medium, it is preferred to use as magnetic particles magnetic acicular metal particles containing iron as a main component, which contain aluminum of 0.05 to 10 % by weight (calculated as Al) based on the weight of the magnetic acicular metal particles containing iron as a main component, which are present within the particle.

It is more preferable to use as magnetic particles magnetic acicular metal particles containing iron as a main component containing Al in an amount of 0.05 to 10 % by weight (calculated as Al) based on the weight of the magnetic acicular metal particles and a rare-earth metal such as Nd, La and Y in an amount of 0.05 to 10 % by weight (calculated as element) based on the weight of the magnetic acicular metal particles. Especially, magnetic acicular metal particles containing iron as a main component containing Al and Nd therein are the even more preferable.

The magnetic particles may have not only an acicular shape but also a cubic shape, a plate-like shape or the like. Meanwhile, the term "acicular shape" used herein should be construed as including "needle shape", "spindle shape", "rice grain shape" and the like.

The magnetic particles have an average major axial diameter (an average particle diameter or average plate surface diameter) of usually 0.01 to 0.50 μm, preferably 0.03 to 0.30 μm; an average minor axial diameter (an average thickness) of usually 0.0007 to 0.17 μm, preferably 0.003 to 0.10 μm; and a geometrical standard deviation of major axial diameters of usually not more than 2.5, preferably 1.01 to 2.3.

When the magnetic particles have an acicular shape, the aspect ratio thereof is usually not less than 3:1, preferably not less than 5:1. In the consideration of good dispersibility of the magnetic particles in vehicle upon the production of a magnetic coating composition, the upper limit of the aspect ratio is usually 15:1, preferably 10:1.

When the magnetic particles have a plate shape, the plate ratio thereof is usually not less than 2:1, preferably not less than 3:1. In the consideration of good dispersibility of the magnetic particles in vehicle upon the production of a magnetic coating composition, the upper limit of the plate ratio is usually 20:1, preferably 15:1.

The magnetic particles have a BET specific surface area of usually not less than 15 $m^2/g$, preferably not less than 20 $m^2/g$. In the consideration of good dispersibility of the magnetic particles in vehicle upon the production of a magnetic coating composition, the upper limit of the BET specific surface area is preferably 100 $m^2/g$, more preferably 80 $m^2/g$.

As to magnetic properties of the magnetic particles, in the case of acicular magnetic iron oxide particles or Co-coated acicular magnetic iron oxide particles, the coercive force value thereof is usually 250 to 1,700 Oe (19.9 to 135.3 kA/m), preferably 300 to 1,700 Oe (23.9 to 135.3 kA/m); and the saturation magnetization value thereof is usually 60 to 90 emu/g (60 to 90 $Am^2/kg$), preferably 65 to 90 emu/g (65 to 90 $Am^2/kg$).

In the case of acicular magnetic metal particles containing iron as a main component or acicular magnetic alloy particles containing iron as a main component, the coercive force value thereof is usually 800 to 3,500 Oe (63.7 to 278.5 kA/m), preferably 900 to 3,500 Oe (71.6 to 278.5 kA/m); and the saturation magnetization value thereof is usually 90 to 170 emu/g (90 to 170 $Am^2/kg$), preferably 100 to 170 emu/g (100 to 170 $Am^2/kg$).

In the case of plate-like magnetoplumbite-type ferrite particles, the coercive force value thereof is usually 500 to 4,000 Oe (39.8 to 318.3 kA/m), preferably 650 to 4,000 Oe (51.7 to 318.3 kA/m); and the saturation magnetization value thereof is usually 40 to 70 emu/g (40 to 70 $Am^2/kg$), preferably 45 to 70 emu/g (45 to 70 $Am^2/kg$).

As the binder resin used in the present invention, the following resins which are at present generally used for the production of a magnetic recording medium are usable: vinyl chloride-vinyl acetate copolymer, vinyl chloride-vinyl acetate-maleic acid copolymer, urethane resin, styrenebutadiene copolymer, butadiene-acrylonitrile copolymer, polyvinyl butyral, cellulose derivative such as nitrocellulose, polyester resin, synthetic rubber resin such as polybutadiene, epoxy resin, polyamide resin, polyisocyanate, electron radiation curing acryl urethane resin and mixtures thereof.

Each of these resin binders may contain a functional group such as -OH, -COOH, $-SO_3M$, $-OPO_2M_2$ and $-NH_2$, wherein M represents H, Na or K. With the consideration of the dispersibility of the magnetic particles and the black filler as a filler upon the production of the magnetic coating composition, a binder resin containing a functional group -COOH or $-SO_3M$ is preferable.

The thickness of the magnetic recording layer obtained by applying the magnetic coating composition on the surface of the non-magnetic base film and dried, is usually in the range of 0.01 to 5.0 μm. If the thickness is less than 0.01 μm, uniform coating may be difficult, so that unfavorable phenomenon such as unevenness on the coating surface may be observed. On the other hand, when the thickness exceeds 5.0 μm, it may be difficult to obtain desired electromagnetic performance due to an influence of diamagnetism. The preferable thickness is in the range of 0.05 to 1.0 μm.

The mixing ratio of the binder resin to the magnetic particles in the magnetic recording layer is usually 5 to 50 parts by weight, preferably 6 to 30 parts by weight based on 100 parts by weight of the magnetic particles.

When the content of the binder resin is more than 50 parts by weight, the content of the magnetic particles in the magnetic recording layer comparatively becomes too small, resulting in low filling percentage of the magnetic particles and further in deteriorated electromagnetic performance of the obtained magnetic recording media. When the content of the binder resin is less than 5 parts by weight, the blending ratio of the binder resin to the magnetic particles become too small, thereby failing to sufficiently disperse the magnetic particles in the magnetic coating composition, so that a coating film formed from such a magnetic coating composition tends to have an insufficient surface smoothness. Further, since the magnetic particles cannot be sufficiently bonded together through the binder resin, the obtained coating film tends to become brittle.

The blending ratio of the black filler to the magnetic particles in the magnetic recording layer is usually 1 to 30 parts by weight, preferably 3 to 25 parts by weight based on 100 parts by weight of the magnetic particles.

When the content of the black filler in the magnetic recording layer is as small as less than 1 part by weight, the obtained magnetic recording media may be insufficient in its durability, and it becomes difficult to sufficiently reduce the light transmittance and surface electrical resistivity of the magnetic recording media. When the content of the black filler is more than 30 parts by weight, the obtained magnetic recording media have a sufficient durability as well as low light transmittance and small surface electrical resistivity. However, in this case, the amount of non-magnetic components in the magnetic recording layer becomes too large, thereby failing to produce magnetic recording media suitable for high-density recording.

It is possible to add an additive such as a lubricant, a polishing agent, an antistatic agent, etc. which are generally used for the production of a magnetic recording medium, to the magnetic recording layer. The mixing ratio of the additive to the binder resin is preferably 0.1 to 50 parts by weight based on 100 parts by weight of the binder resin.

The magnetic recording medium of the fifth to eighth aspects in the present invention, comprises a non-magnetic base film, a non-magnetic undercoat layer formed on the non-magnetic base film and a magnetic recording layer formed on the non-magnetic undercoat layer.

The thickness of the non-magnetic undercoat layer is preferably 0.2 to 10.0 μm. When the thickness of the non-magnetic undercoat layer is less than 0.2 μm, it may be difficult to improve the surface roughness of the non-magnetic substrate, and the stiffness of a coating film formed thereon tends to be unsatisfactory. In the consideration of reduction in total thickness of the magnetic recording medium as well as the stiffness of the coating film, the thickness of the non-magnetic undercoat layer is more preferably in the range of 0.5 to 5.0 μm. As the binder resin, the same binder resin as that used for the production of the magnetic recording layer is usable.

The mixing ratio of the non-magnetic particles to the binder resin is usually 5 to 2000 parts by weight, preferably 100 to 1000 parts by weight based on 100 parts by weight of the binder resin.

When the content of the non-magnetic particles is as small as less than 5 parts by weight, such a non-magnetic undercoat layer in which the non-magnetic particles are uniformly and continuously dispersed may not be obtained upon coating, resulting in insufficient surface smoothness and insufficient stiffness of the non-magnetic substrate. When the content of the non-magnetic particles is more than 2,000 parts by weight, the non-magnetic particles may not be sufficiently dispersed in a non-magnetic coating composition since the amount of the non-magnetic particles is too large as compared to that of the binder resin. As a result, when such a non-magnetic coating composition is coated onto the non-magnetic base film, it may become difficult to obtain a coating film having a sufficiently smooth surface. Further, since the non-magnetic particles may not be sufficiently bonded together through the binder resin, the obtained coating film tends to become brittle.

It is possible to add an additive such as a lubricant, a polishing agent, an antistatic agent, etc. which are generally used for the production of a magnetic recording medium, to the non-magnetic undercoating layer. The mixing ratio of the additive to the binder resin is preferably 0.1 to 50 parts by weight based on 100 parts by weight of the binder resin.

As the non-magnetic particles used in the non-magnetic undercoat layer of the present invention, there may be exemplified non-magnetic inorganic particles ordinarily used for forming a non-magnetic undercoat layer in conventional magnetic recording media. Specific examples of the non-magnetic particles may include hematite particles, iron oxide hydroxide particles, titanium oxide particles, zinc oxide particles, tin oxide particles, tungsten oxide particles, silicon dioxide particles, α-alumina particles, β-alumina particles, γ-alumina particles, chromium oxide particles, cerium oxide particles, silicon carbide particles, titanium carbide particles, silicon nitride particles, boron nitride particles, calcium carbonate particles, barium carbonate particles, magnesium carbonate particles, strontium carbonate particles, calcium sulfate particles, barium sulfate particles, molybdenum disulfide particles, barium titanate particles or the like. These non-magnetic particles may be used singly or in the form of a mixture of any two or more thereof. Among them, the use of hematite particles, iron oxide hydroxide particles, titanium oxide particles and the like is preferred.

In the present invention, in order to improve the dispersibility of the non-magnetic particles in vehicle upon the production of non-magnetic coating composition, the non-magnetic particles may be surface-treated with hydroxides of aluminum, oxides of aluminum, hydroxides of silicon, oxides of silicon or the like to form a coat made of any of these compounds on the surfaces thereof. Further, the non-magnetic particles may contain Al, Ti, Zr, Mn, Sn, Sb or the like inside thereof, if required, in order to improve various properties of the obtained magnetic recording media such as light transmittance, surface electrical resistivity, mechanical strength, surface smoothness, durability or the like.

The particle shape of the non-magnetic particles as the core particles may include a granular shape such as a spherical shape, an irregular (anisotropic) shape, an octahedral shape, a hexahedral shape, a polyhedral shape or the like; an acicular shape such as a needle shape, a spindle shape, a rice ball shape or the like; and a plate shape,

or the like. In the consideration of surface smoothness of the obtained non-magnetic undercoat layer, the non-magnetic particles preferably have an acicular shape. The term "acicular shape" used herein should be construed as including "needle shape", "spindle shape", "rice grain shape" or the like.

The lower limit of the average particle size of the non-magnetic particles as the core particles is usually 0.01 µm, and the upper limit thereof is usually 0.3 µm.

(i) In the case where the shape of the core particles is granular-shaped, the lower limit of the average particle diameter of the granular-shaped non-magnetic particles is usually 0.01 µm, preferably 0.015 µm, more preferably 0.02 µm, and the upper limit thereof is usually 0.3 um, preferably 0.25 µm, more preferably 0.2 µm.

(ii) In the case where the shape of the core particles is acicular-shaped, the lower limit of the average particle diameter (average major axis diameter) of the acicular-shaped non-magnetic particles is usually 0.01 µm, preferably 0.015 µm, more preferably 0.02 µm, and the upper limit thereof is usually 0.3 µm, preferably 0.25 µm, more preferably 0.2 µm; and the lower limit of the aspect ratio (average major axis diameter/average minor axis diameter) thereof is usually 2:1, preferably 2.5:1, more preferably 3:1, and the upper limit thereof is usually 20:1, preferably 15:1, more preferably 10:1.

(iii) In the case where the shape of the core particles is plate-shaped, the lower limit of the average particle diameter (average plate surface diameter) of the plate-shaped non-magnetic particles is usually 0.01 µm, preferably 0.015 µm, more preferably 0.02 µm, and the upper limit thereof is usually 0.3 µm, preferably 0.25 µm, more preferably 0.2 µm; and the lower limit of the plate ratio (average plate surface diameter/average thickness) thereof is usually 2:1, preferably 2.5:1, more preferably 3:1, and the upper limit thereof is usually 50:1, preferably 45:1, more preferably 40:1.

The magnetic recording medium according to the first aspect of the present invention in which the black filler coated with no hydroxides and/or oxides of aluminum and/or silicon coat are used, has a coercive force value of usually 250 to 4,000 Oe (19.9 to 318.3 kA/m), preferably 300 to 4,000 Oe (23.9 to 318.3 kA/m); a squareness (residual magnetic flux density Br/saturation magnetic flux density Bm) of usually 0.85 to 0.95, preferably 0.86 to 0.95; a gloss (of the coating film) of usually 165 to 300 %, preferably 170 to 300 %; a surface roughness Ra (of the coating film) of usually not more than 9.4 nm, preferably 2.0 to 9.0 nm, more preferably 2.0 to 8.6 nm; a linear absorption (of the coating film) of usually 1.25 to 5.00 $\mu m^{-1}$, preferably 1.35 to 5.00 $\mu m^{-1}$; a friction coefficient of usually 0.25 to 0.30, preferably 0.25 to 0.29; and a surface electrical resistivity (of the coating film) of usually not more than $5.0 \times 10^8$ $\Omega/cm^2$ , preferably not more than $2.5 \times 10^8$ $\Omega/cm^2$, more preferably not more than $1.0 \times 10^8$ $\Omega/cm^2$.

The magnetic recording medium according to the second aspect of the present invention in which the black filler coated with hydroxides and/or oxides of aluminum and/or silicon coat are used, has a coercive force value of usually 250 to 4,000 Oe (19.9 to 318.3 kA/m), preferably 300 to 4,000 Oe (23.9 to 318.3 kA/m); a squareness (residual magnetic flux density Br/saturation magnetic flux density Bm) of usually 0.85 to 0.95, preferably 0.86 to 0.95; a gloss (of the coating film) of usually 170 to 300 %, preferably 175 to 300 %; a surface roughness Ra (of the coating film) of usually not more than 9.0 nm, preferably 2.0 to 8.6 nm, more preferably 2.0 to 8.2 nm; a linear absorption (of the coating film) of usually 1.25 to 5.00 $\mu m^{-1}$, preferably 1.35 to 5.00 $\mu m^{-1}$; a friction coefficient of usually 0.21 to 0.26, preferably 0.21 to 0.25; and a surface electrical resistivity (of the coating film) of usually not more than $5.0 \times 10^8$ $\Omega/cm^2$, preferably not more than $2.5 \times 10^8$ $\Omega/cm^2$, more preferably not more than $1.0 \times 10^8$ $\Omega/cm^2$.

The magnetic recording medium according to the third aspect of the present invention in which the black filler coated with no hydroxides and/or oxides of aluminum and/or silicon coat are used as a filler and magnetic metal particles containing iron as a main component or magnetic alloy particles containing iron as a main component are used as magnetic particles, has a coercive force value of usually 800 to 3,500 Oe (63.7 to 278.5 kA/m), preferably 900 to 3,500 Oe (71.6 to 278.5 kA/m); a squareness (residual magnetic flux density Br/saturation magnetic flux density Bm) of usually 0.85 to 0.95, preferably 0.86 to 0.95; a gloss (of the coating film) of usually 190 to 300 %, preferably 195 to 300 %; a surface roughness Ra (of the coating film) of usually not more than 8.6 nm, preferably 2.0 to 8.2 nm, more preferably 2.0 to 7.8 nm; a linear absorption (of the coating film) of usually 1.25 to 5.00 $\mu m^{-1}$, preferably 1.35 to 5.00 $\mu m^{-1}$; a friction coefficient of usually 0.25 to 0.30, preferably 0.25 to 0.29; and a surface electrical resistivity (of the coating film) of usually not more than $5.0 \times 10^8$ $\Omega/cm^2$, preferably not more than $2.5 \times 10^8$ $\Omega/cm^2$, more preferably not more than $1.0 \times 10^8$ $\Omega/cm^2$.

The magnetic recording medium according to the fourth aspect of the present invention in which the black filler coated with hydroxides and/or oxides of aluminum and/or silicon coat are used as a filler and magnetic metal particles containing iron as a main component or magnetic alloy particles containing iron as a main component are used as magnetic particles, has a coercive force value of usually 800 to 3,500 Oe (63.7 to 278.5 kA/m), preferably 900 to 3,500 Oe (71.6 to 278.5 kA/m); a squareness (residual magnetic flux density Br/saturation magnetic flux density Bm) of usually 0.85 to 0.95, preferably 0.86 to 0.95; a gloss (of the coating film) of usually 195 to 300 %, preferably 200 to 300 %; a surface roughness Ra (of the coating film) of usually not more than 8.2 nm, preferably 2.0 to 7.8 nm,

more preferably 2.0 to 7.4 nm; a linear absorption (of the coating film) of usually 1.25 to 5.00 $\mu m^{-1}$, preferably 1.35 to 5.00 $\mu m^{-1}$; a friction coefficient of usually 0.21 to 0.26, preferably 0.21 to 0.25; and a surface electrical resistivity (of the coating film) of usually not more than 5.0 $\times$ $10^8$ $\Omega/cm^2$, preferably not more than 2.5 $\times$ $10^8$ $\Omega/cm^2$, more preferably not more than 1.0 $\times$ $10^8$ $\Omega/cm^2$.

As to the electromagnetic performance of the magnetic recording medium of the first and third aspects in the present invention in which the black filler coated with no hydroxides and/or oxides of aluminum and/or silicon coat are used as a filler, in the case where magnetic particles having a coercive force value of not less than 250 Oe (19.9 kA/m) and less than 1200 Oe (95.5 kA/m) is used therein, the output at a recording frequency of 4 MHz is usually not less than +1.1 dB, preferably not less than +1.6 dB when the output is expressed by a relative value on the basis of a reference tape produced by the same method as used in the present invention except that alumina is used as a filler in an amount of 7.0 parts by weight based on 100 parts by weight of the magnetic particles; and in the case where magnetic particles having a coercive force value of 1200 to 4,000 Oe (95.5 to 318.3 kA/m) are used in such a magnetic recording medium, the output at a recording frequency of 7 MHz is usually not less than +1.1 dB, preferably not less than +1.6 dB.

As to the electromagnetic performance of the magnetic recording medium of the second and fourth aspects in the present invention in which the black filler coated with hydroxides and/or oxides of aluminum and/or silicon coat are used as a filler, in the case where magnetic particles having a coercive force value of not less than 250 Oe (19.9 kA/m) and less than 1200 Oe (95.5 kA/m) are used therein, the output at a recording frequency of 4 MHz is usually not less than +1.6 dB, preferably not less than +2.1 dB when also expressed by the same relative value as described above; and in the case where magnetic particles having a coercive force value of 1200 to 4,000 Oe (95.5 to 318.3 kA/m) are used, the output at a recording frequency of 7 MHz is usually not less than +1.6 dB, preferably not less than +2.1 dB.

As to the durability of the magnetic recording medium using as a filler the black filler coated with no hydroxides and/or oxides of aluminum and/or silicon coat, the running durability time thereof is usually not less than 24 minutes, preferably not less than 25 minutes, more preferably not less than 26 minutes when measured by the below-described method. Further, the degree (rank) of contamination of the magnetic head under the above condition is usually B or A, preferably A.

As to the durability of the magnetic recording medium using as a filler the black filler coated with hydroxides and/or oxides of aluminum and/or silicon coat, the running durability time thereof is usually not less than 25 minutes, preferably not less than 26 minutes, more preferably not less than 27 minutes. Further, the degree (rank) of contamination of the magnetic head under the above condition is usually B or A, preferably A.

The magnetic recording medium according to the fifth aspect of the present invention in which the black filler coated with no hydroxides and/or oxides of aluminum and/or silicon coat are used as a filler and the non-magnetic undercoating layer is disposed between the non-magnetic base film and the magnetic recording film, has a coercive force value of usually 250 to 4,000 Oe (19.9 to 318.3 kA/m), preferably 300 to 4,000 Oe (23.9 to 318.3 kA/m); a squareness (residual magnetic flux density Br/saturation magnetic flux density Bm) of usually 0.85 to 0.95, preferably 0.86 to 0.95; a gloss (of the coating film) of usually 165 to 300 %, preferably 170 to 300 %; a surface roughness Ra (of the coating film) of usually not more than 9.5 nm, preferably 2.0 to 9.0 nm, more preferably 2.0 to 8.5 nm; a linear absorption (of coating film) of usually 1.40 to 5.00 $\mu m^{-1}$, preferably 1.45 to 5.00 $\mu m^{-1}$; a surface electrical resistivity value (of coating film) of usually not more than 5 $\times$ $10^8$ $\Omega/cm^2$, preferably not more than 2.5 $\times$ $10^8$ $\Omega/cm^2$, more preferably not more than 1 $\times$ $10^8$ $\Omega/cm^2$; and a friction coefficient of usually 0.25 to 0.30, preferably 0.25 to 0.29.

The magnetic recording medium according to the sixth aspect of the present invention in which the black filler coated with hydroxides and/or oxides of aluminum and/or silicon coat are used as a filler and the non-magnetic undercoating layer is disposed between the non-magnetic base film and the magnetic recording film, has a coercive force value of usually 250 to 4,000 Oe (19.9 to 318.3 kA/m), preferably 300 to 4,000 Oe (23.9 to 318.3 kA/m); a squareness (residual magnetic flux density Br/saturation magnetic flux density Bm) of usually 0.85 to 0.95, preferably 0.86 to 0.95; a gloss (of the coating film) of usually 170 to 300 %, preferably 175 to 300 %; a surface roughness Ra (of the coating film) of usually not more than 9.0 nm, preferably 2.0 to 8.5 nm, more preferably 2.0 to 8.0 nm; a linear absorption (of coating film) of usually 1.45 to 5.00 $\mu m^{-1}$, preferably 1.50 to 5.00 $\mu m^{-1}$; a surface electrical resistivity value (of coating film) of usually not more than 5 $\times$ $10^8$ $\Omega/cm^2$, preferably not more than 2.5 $\times$ $10^8$ $\Omega/cm^2$, more preferably not more than 1 $\times$ $10^8$ $\Omega/cm^2$; and a friction coefficient of usually 0.21 to 0.26, preferably 0.21 to 0.25.

The magnetic recording medium according to the seventh aspect of the present invention in which the black filler coated with no hydroxides and/or oxides of aluminum and/or silicon coat are used as a filler, magnetic metal particles containing iron as a main component or magnetic alloy particles containing iron as a main component are used as magnetic particles and the non-magnetic undercoating layer is disposed between the non-magnetic base film and the magnetic recording film, has a coercive force value of usually 800 to 3,500 Oe (63.7 to 278.5 kA/m), preferably 900 to 3,500 Oe (71.6 to 278.5 kA/m); a squareness (residual magnetic flux density Br/saturation magnetic flux density Bm) of usually 0.85 to 0.95, preferably 0.86 to 0.95; a gloss (of the coating film) of usually 190 to 300 %, preferably

195 to 300 %; a surface roughness Ra (of the coating film) of usually not more than 8.5 nm, preferably 2.0 to 8.0 nm, more preferably 2.0 to 7.5 nm; a linear absorption (of the coating film) of usually 1.40 to 5.00 $\mu m^{-1}$, preferably 1.45 to 5.00 $\mu m^{-1}$; a surface electrical resistivity (of the coating film) of usually not more than $5.0 \times 10^8$ $\Omega/cm^2$, preferably not more than $2.5 \times 10^8$ $\Omega/cm^2$, more preferably not more than $1.0 \times 10^8$ $\Omega/cm^2$; and a friction coefficient of usually 0.25 to 0.30, preferably 0.25 to 0.29.

The magnetic recording medium according to the eighth aspect of the present invention in which the black filler coated with hydroxides and/or oxides of aluminum and/or silicon coat are used as a filler, magnetic metal particles containing iron as a main component or magnetic alloy particles containing iron as a main component are used as magnetic particles and the non-magnetic undercoating layer is disposed between the non-magnetic base film and the magnetic recording film, has a coercive force value of usually 800 to 3,500 Oe (63.7 to 278.5 kA/m), preferably 900 to 3,500 Oe (71.6 to 278.5 kA/m); a squareness (residual magnetic flux density Br/saturation magnetic flux density Bm) of usually 0.85 to 0.95, preferably 0.86 to 0.95; a gloss (of the coating film) of usually 195 to 300 %, preferably 200 to 300 %; a surface roughness Ra (of the coating film) of usually not more than 8.0 nm, preferably 2.0 to 7.5 nm, more preferably 2.0 to 7.0 nm; a linear absorption (of the coating film) of usually 1.45 to 5.00 $\mu m^{-1}$, preferably 1.50 to 5.00 $\mu m^{-1}$; a surface electrical resistivity (of the coating film) of usually not more than $5.0 \times 10^8$ $\Omega/cm^2$, preferably not more than $2.5 \times 10^8$ $\Omega/cm^2$, more preferably not more than $1.0 \times 10^8$ $\Omega/cm^2$; and a friction coefficient of usually 0.21 to 0.26, preferably 0.21 to 0.25.

As to the electromagnetic performance of the magnetic recording medium of the fifth and seventh aspects in the present invention, which has a non-magnetic undercoat layer and contains as a filler the black filler coated with no hydroxides and/or oxides of aluminum and/or silicon coat, in the case where magnetic particles having a coercive force value of not less than 250 Oe (19.9 kA/m) and less than 1,200 Oe (95.5kA/m) is used therein, the output value at a recording frequency of 4 MHz is usually not less than +1.2 dB, preferably not less than +1.7 dB; and in the case where magnetic particles having a coercive force value of 1,200 to 4,000 Oe (95.5 to 318.3 kA/m) are used in such a magnetic recording medium, the output value at a recording frequency of 7 MHz is usually not less than +1.2 dB, preferably not less than +1.7 dB.

As to the electromagnetic performance of the magnetic recording medium of the sixth and eighth aspects in the present invention, which has a non-magnetic undercoat layer and contains as a filler the black filler coated with hydroxides and/or oxides of aluminum and/or silicon coat, in the case where magnetic particles having a coercive force value of not less than 250 Oe (19.9 kA/m) and less than 1,200 Oe (95.5kA/m) is used therein, the output value at a recording frequency of 4 MHz is usually not less than +1.7 dB, preferably not less than +2.2 dB; and in the case where magnetic particles having a coercive force value of 1,200 to 4,000 Oe (95.5 to 318.3 kA/m) are used in such a magnetic recording medium, the output value at a recording frequency of 7 MHz is usually not less than +1.7 dB, preferably not less than +2.2 dB.

As to the durability of the magnetic recording medium of the fifth and seventh aspects in the present invention which has a non-magnetic undercoat layer and uses as a filler the black filler coated with no hydroxides and/or oxides of aluminum and/or silicon coat, the running durability time is usually not less than 24 minutes, preferably not less than 25 minutes, more preferably not less than 26 minutes. Further, the degree (rank) of contamination of the magnetic head under the above condition is usually B or A, preferably A.

As to the durability of the magnetic recording medium of the sixth and eighth aspects in the present invention which has a non-magnetic undercoat layer and uses as a filler the black filler coated with hydroxides and/or oxides of aluminum and/or silicon coat, the running durability time is usually not less than 25 minutes, preferably not less than 26 minutes, more preferably not less than 27 minutes. Further, the degree (rank) of contamination of the magnetic head under the above condition is usually B or A, preferably A.

Next, the process for producing the filler according to the present invention, is described.

The coating of the hematite particles as core particles with the alkoxysilane compounds, the polysiloxanes, the modified polysiloxanes, or the terminal-modified polysiloxanes, may be conducted (i) by mechanically mixing and stirring the hematite particles as core particles together with the alkoxysilane compounds, the polysiloxanes, the modified polysiloxanes, or the terminal-modified polysiloxanes; or (ii) by mechanically mixing and stirring both the components together while spraying the alkoxysilane compounds, the polysiloxanes, the modified polysiloxanes, or the terminal-modified polysiloxanes onto the hematite particles as core particles. In these cases, substantially whole amount of the alkoxysilane compounds, the polysiloxanes, the modified polysiloxanes, or the terminal-modified polysiloxanes added can be applied onto the surfaces of the hematite particles as core particles.

In addition, by conducting the above-mentioned mixing or stirring treatment (i) of the hematite particles as core particles together with the alkoxysilane compounds, at least a part of the alkoxysilane compounds coated on the hematite particles as core particles may be changed to the organosilane compounds. In this case, there is also no affection against the formation of the carbon black coat thereon.

In order to uniformly coat the surfaces of the hematite particles as core particles with the alkoxysilane compounds, the polysiloxanes, the modified polysiloxanes, or the terminal-modified polysiloxanes, it is preferred that the

hematite particles as core particles are preliminarily diaggregated by using a pulverizer.

As apparatus (a) for mixing and stirring treatment (i) of the core particles with the alkoxysilane compounds, the polysiloxanes, the modified polysiloxanes, or the terminal-modified polysiloxanes to form the coating layer thereof, and as apparatus (b) for mixing and stirring treatment (ii) of carbon black fine particles with the particles whose surfaces are coated with the alkoxysilane compounds, the polysiloxanes, the modified polysiloxanes, or the terminal-modified polysiloxanes to form the carbon black coat, there may be preferably used those apparatus capable of applying a shear force to the particles, more preferably those apparatuses capable of conducting the application of shear force, spaturate force and compressed force at the same time.

As such apparatuses, there may be exemplified wheel-type kneaders, ball-type kneaders, blade-type kneaders, roll-type kneaders or the like. Among them, wheel-type kneaders are preferred.

Specific examples of the wheel-type kneaders may include an edge runner (equal to a mix muller, a Simpson mill or a sand mill), a multi-mull, a Stotz mill, a wet pan mill, a Conner mill, a ring muller, or the like. Among them, an edge runner, a multi-mull, a Stotz mill, a wet pan mill and a ring muller are preferred, and an edge runner is more preferred.

Specific examples of the ball-type kneaders may include a vibrating mill or the like. Specific examples of the blade-type kneaders may include a Henschel mixer, a planetary mixer, a Nawter mixer or the like. Specific examples of the roll-type kneaders may include an extruder or the like.

In order to coat the surfaces of the core particles with the alkoxysilane compounds, the polysiloxanes, the modified polysiloxanes, or the terminal-modified polysiloxanes as uniformly as possible, the conditions of the above mixing or stirring treatment may be appropriately controlled such that the linear load is usually 2 to 200 Kg/cm (19.6 to 1960 N/cm), preferably 5 to 150 Kg/cm (49 to 1470 N/cm), more preferably 15 to 100 Kg/cm (147 to 980 N/cm); and the treating time is usually 5 to 120 minutes, preferably 10 to 90 minutes. It is preferred to appropriately adjust the stirring speed in the range of usually 2 to 2,000 rpm, preferably 5 to 1,000 rpm, more preferably 10 to 800 rpm.

The amount of the alkoxysilane compounds, the polysiloxanes, the modified polysiloxanes, or the terminal-modified polysiloxanes added, is preferably 0.15 to 45 parts by weight based on 100 parts by weight of the hematite particles as core particles.

A carbon black coat is formed on at least a part of the surface of the coating layer composed of the alkoxysilane compounds, the polysiloxanes, the modified polysiloxanes or the terminal-modified polysiloxanes, and is composed of at least two carbon black layers integrally adhered with each other through an adhesive. If required, 3 or more carbon black layers are integrally adhered with each other through an adhesive to form the carbon black coat.

Specially, the carbon black fine particles are added to the hematite particles coated with the alkoxysilane compounds, the polysiloxanes, the modified polysiloxanes or the terminal-modified polysiloxanes, and the resultant mixture is mixed and stirred to form a first carbon black coat on at least a part of the coating layer composed of the alkoxysilane compounds, the polysiloxanes, the modified polysiloxanes or the terminal-modified polysiloxanes, thereby obtaining composite particles.

It is preferred that the carbon black fine particles are added little by little and slowly, especially about 5 to 60 minutes.

The conditions of the above mixing and stirring treatment may be appropriately controlled such that the linear load is usually 2 to 200 Kg/cm (19.6 to 1960 N/cm), preferably 5 to 150 Kg/cm (49 to 1470 N/cm), more preferably 10 to 150 Kg/cm (98 to 1470 N/cm); and the treating time is usually 5 to 120 minutes, preferably 10 to 90 minutes. It is preferred to appropriately adjust the stirring speed in the range of usually 2 to 2,000 rpm, preferably 5 to 1,000 rpm, more preferably 10 to 800 rpm.

The amount of carbon black fine particles added for forming the first carbon black coat is 1 to 30 parts by weight based on 100 parts by weight of the core particles. When the amount of carbon black fine particles added is less than 1 part by weight, the amount of the first carbon black coat adhered may be insufficient, so that the amount of an adhesive subsequently adhered thereto also becomes insufficient. In consequence, even though a large amount of carbon black fine particles are added to form a second carbon black coat, it may be difficult to adhere a sufficient amount of carbon black fine particles onto the first carbon black coat.

Then, the adhesive is added to the composite particles on which the first carbon black coat is formed, and the resultant mixture is mixed under stirring. Thereafter, carbon black fine particles are further added to the obtained composite particles, and the resultant particles are mixed under stirring to form the carbon black coat on the first carbon black coat through the adhesives. Then, the obtained composite particles may be dried or heat-treated to obtain the black filler.

The mixing and stirring conditions may be adequately controlled such that the linear load is usually 2 to 200 Kg/cm (19.6 to 1960 N/cm), preferably 5 to 150 Kg/cm (49 to 1470 N/cm), more preferably 10 to 150 Kg/cm (98 to 1470 N/cm); the treating time is usually 5 to 120 minutes, preferably 10 to 90 minutes; and the stirring speed is usually 2 to 2,000 rpm, preferably 5 to 1,000 rpm, more preferably 10 to 800 rpm.

The amount of the adhesive added is 0.1 to 5.0 parts by weight based on 100 parts by weight of the core

particles. When the amount of the adhesive added is less than 0.1 part by weight, it may become difficult to adhere a sufficient amount of carbon black on the first carbon coat, thereby failing to form a sufficient second carbon black coat thereon. When the amount of the adhesive added is more than 5.0 parts by weight, the adhesion effect is already saturated and, therefore, it is unnecessary and meaningless to add such a large amount of the adhesive.

The mixing and stirring conditions upon adhesion of the second carbon black coat may be appropriately selected such that the carbon black fine particles can be uniformly adhered to the adhesive. More specifically, the treating conditions may be adequately controlled such that the linear load is usually 2 to 200 Kg/cm (19.6 to 1960 N/cm), preferably 5 to 150 Kg/cm (49 to 1470 N/cm), more preferably 10 to 150 Kg/cm (98 to 1470 N/cm); the treating time is 5 to 120 minutes, preferably 10 to 90 minutes; and the stirring speed is usually 2 to 2,000 rpm, preferably 5 to 1,000 rpm.

The amount of carbon black fine particles added for forming the second carbon black coat is 1 to 30 parts by weight based on 100 parts by weight of the core particles. When the amount of the carbon black fine particles added is less than 1 part by weight, the amount of carbon black adhered onto the surface of the adhesive is too small, so that the adhesive may be exposed to the surface of each particle. As a result, the obtained particles are deteriorated in dispersibility in vehicle, and it may become difficult to reduce the volume resistivity value thereof and improve the myristic acid absorption thereof. When the amount of the carbon black fine particles added is more than 30 parts by weight, the obtained black filler tend to suffer from desorption of carbon black from the surfaces thereof, resulting in deteriorated dispersibility in vehicle.

After the carbon black coat is formed on the surface of the coating layer, the resultant composite particles may be dried or heat-treated, for example, at a temperature of usually 40 to 200°C, preferably 60 to 150°C for usually 10 minutes to 12 hours, preferably 30 minutes to 3 hours.

The alkoxysilane used to coat the core particles in the thus obtained composite particles is finally converted into the organosilane compound.

At least a part of the surface of the hematite particles as core particles may be coated with at least one compound selected from the group consisting of hydroxides of aluminum, oxides of aluminum, hydroxides of silicon and oxides of silicon, in advance of mixing and stirring with the alkoxysilane compounds, the polysiloxanes, the modified polysiloxanes, or the terminal-modified polysiloxanes.

The coating composed of at least one compound selected from the group consisting of hydroxides of aluminum, oxides of aluminum, hydroxides of silicon and oxides of silicon may be conducted by adding an aluminum compound, a silicon compound or both the compounds to a water suspension in which the hematite particles are dispersed, followed by mixing and stirring, and further adjusting the pH of the suspension, if required, thereby coating the surfaces of the hematite particles with at least one compound selected from the group consisting of hydroxides of aluminum, oxides of aluminum, hydroxides of silicon and oxides of silicon. The thus obtained particles coated with the hydroxides and/or oxides of aluminum and/or silicon are then filtered out, washed with water, dried and pulverized. Further, the particles coated with the hydroxides and/or oxides of aluminum and/or silicon may be subjected to post-treatments such as deaeration treatment and compaction treatment.

As the aluminum compounds, there may be exemplified aluminum salts such as aluminum acetate, aluminum sulfate, aluminum chloride or aluminum nitrate, alkali aluminates such as sodium aluminate, or the like.

The amount of the aluminum compound added is 0.01 to 50 % by weight (calculated as Al) based on the weight of the hematite particles. When the amount of the aluminum compound added is less than 0.01 % by weight, it may be difficult to sufficiently coat the surfaces of the hematite particles with hydroxides or oxides of aluminum, thereby failing to improve the effective reduction of the carbon black desorption percentage. On the other hand, when the amount of the aluminum compound added is more than 50 % by weight, the coating effect is saturated and, therefore, it is meaningless to add such an excess amount of the aluminum compound.

As the silicon compounds, there may be exemplified water glass #3, sodium orthosilicate, sodium metasilicate, colloidal silica or the like.

The amount of the silicon compound added is 0.01 to 50 % by weight (calculated as $SiO_2$) based on the weight of the hematite particles. When the amount of the silicon compound added is less than 0.01 % by weight, it may be difficult to sufficiently coat the surfaces of the hematite particles with hydroxides or oxides of silicon, thereby failing to improve the effective reduction of the carbon black desorption percentage. On the other hand, when the amount of the silicon compound added is more than 50 % by weight, the coating effect is saturated and, therefore, it is meaningless to add such an excess amount of the silicon compound.

In the case where both the aluminum and silicon compounds are used in combination for the coating, the total amount of the aluminum and silicon compounds added is preferably 0.01 to 50.00 % by weight (calculated as a sum of Al and $SiO_2$) based on the weight of the hematite particles.

Next, the process for producing the magnetic recording medium according to the present invention is described.

The magnetic recording medium according to the first aspect of the present invention can be produced by an

ordinary method, i.e., by coating the surface of the non-magnetic base film with a magnetic coating composition comprising magnetic particles, a binder resin, a black filler and a solvent to form a magnetic recording layer thereon, and then magnetically orienting the magnetic recording layer.

The magnetic recording medium according to the fifth aspect of the present invention can be produced by an ordinary method, i.e., by coating the surface of the non-magnetic base film with a non-magnetic coating composition comprising non-magnetic particles, a binder resin and a solvent to form a coating film thereon; drying the coating film to form a non-magnetic undercoat layer; coating the surface of the non-magnetic undercoat layer with a magnetic coating composition comprising magnetic particles, a binder resin, a black filler and a solvent to form a magnetic recording layer thereon, and then magnetically orienting the magnetic recording layer.

Upon kneading and dispersing the non-magnetic coating composition and magnetic coating composition, as kneaders, there may be used, for example, twin-screw kneader, twin-screw extruder, pressure kneader, twin-roll mill, triple-roll mill or the like; and as dispersing devices, there may be used ball mill, sand grinder, attritor, disper, homogenizer, ultrasonic dispersing device or the like.

The coating of the non-magnetic coating composition and magnetic coating composition may be conducted using gravure coater, reverse-roll coater, slit coater, die coater or the like. The thus obtained coating film may be magnetically oriented using counter magnet, solenoid magnet or the like.

As the solvents, there may be exemplified those ordinarily used for the production of conventional magnetic recording media such as methyl ethyl ketone, toluene, cyclohexanone, methyl isobutyl ketone, tetrahydrofuran or a mixture thereof.

The total amount of the solvent(s) used in the non-magnetic coating composition or magnetic coating composition is 65 to 1,000 parts by weight based on 100 parts by weight of the non-magnetic particles or magnetic particles. When the amount of the solvent used is less than 65 parts by weight, the viscosity of the obtained non-magnetic coating composition or magnetic coating composition may be too high, so that it is difficult to coat such a composition. When the amount of the solvent used is more than 1,000 parts by weight, the amount of the solvent vaporized upon coating may be too large, resulting in industrial disadvantages.

In the case where the black filler having an average diameter of 0.08 to 1.0 μm and comprising hematite particles as core particles which may be coated with at least one compound selected from the group consisting of hydroxides of aluminum, oxides of aluminum, hydroxides of silicon and oxides of silicon; a coating layer formed on surface of each core particle and comprising an organosilicon compound; and a carbon black coat formed on the organosilicon coating, are used as a black filler to be incorporated into the magnetic recording layer, there is obtained the magnetic recording medium capable of exhibiting not only an excellent durability and a good electromagnetic performance, but also a low light transmittance and a small surface electrical resistivity, and further exhibiting a small friction coefficient and an excellent running durability.

The reason why the magnetic recording medium according to the present invention has an excellent durability and a good electromagnetic performance, is considered as follows. That is, due to the fact that the amount of carbon black desorbed from the surface of each black filler is very small, respective components present in the system, especially the magnetic particles are well dispersed without being adversely affected by carbon black. Further, since carbon black coat is formed onto the surface of the black filler, irregularities are formed thereon. Therefore, the magnetic particles are prevented from contacting with each other because such black filler having surface irregularities are interposed therebetween, so that the magnetic particles tends to be packed with a high density in the magnetic recording layer.

Especially, in the case of using the alkoxysilane compounds, metalloxane bonds (≡Si-O-M, wherein M represents a metal atom contained in the hematite particle as core particle, such as Si, Al or Fe) are formed between the metal elements such as Si, Al or Fe which are contained within the hematite particle or present at the surface thereof, and alkoxy groups of the alkoxysilane compounds on which the carbon black coat is formed, so that the organosilicon compounds onto which the carbon black coat is formed, can be more strongly bonded to the surface of the hematite particle. Further, in the case of using the polysiloxanes or modified polysiloxanes, the functional groups in the polysiloxanes or modified polysiloxanes onto which the carbon black coat is formed, are strongly bonded to the surface of the hematite particle.

The reason why the magnetic recording medium according to the present invention exhibits a low light transmittance, is considered as follows. That is, the low light transmittance is attributed to the excellent blackness of the black filler contained in the magnetic recording layer and optional non-magnetic undercoat layer. More specifically, in the black filler of the present invention, carbon black fine particles which behave as an agglomarated matter caused by usually fine particles, are adhered on the surfaces of the hematite particles through the organosilicon compounds, so that the carbon black coat is uniformly and densely formed on the surface thereof. Therefore, the effect and function of the carbon black are more remarkably exhibited.

The reason why the magnetic recording medium according to the present invention has a small surface electrical resistivity value, is considered. That is, the carbon black uniformly and densely adhered on the surface of the

black filler which is uniformly dispersed in the magnetic recording layer, are continuously connected and contacted with each other, so that the surface electrical resistivity value of the magnetic recording layer itself is considerably reduced.

The reason why the friction coefficient of the magnetic recording medium according to the present invention can be reduced, is considered as follows. That is, since the myristic acid-absorption of the black filler incorporated into the magnetic recording layer, is limited to the specific range, an appropriately controlled amount of the myristic acid can be oozed onto the surface of the magnetic recording layer for a long period of time, thereby enabling the myristic acid to effectively exhibit its function as lubricant.

The reason why the magnetic recording medium of the present invention can show an excellent running durability, is considered as follows. That is, for the same reason as described above, an appropriate amount of myristic acid can be oozed onto the surface of the magnetic recording layer in a well-controlled condition, resulting in stable running durability of the magnetic recording medium.

The black filler of the present invention exhibits not only an excellent dispersibility in vehicle, but also a more excellent blackness, a lower volume resistivity value and a well-controlled myristic acid adsorption. Therefore, when the black filler is used in magnetic recording medium, the obtained magnetic recording medium can exhibit a smooth surface, a smaller transmittance and a lower surface electrical resistivity value. In addition, the amount of myristic acid oozed from the magnetic recording layer can be controlled adequately. Accordingly, the black filler of the present invention is suitable as fillers for magnetic recording media.

By using the above black filler, the magnetic recording medium according to the present invention can exhibit not only a more excellent durability, a higher electromagnetic performance, a smaller light transmittance and a lower surface electrical resistivity value, but also a small friction coefficient and an excellent running durability. Therefore, the magnetic recording medium of the present invention is suitable as magnetic recording media for high-density recording.

In the magnetic recording medium according to the present invention, by using a black filler of the present invention, it is capable of reducing an amount of carbon black fine particles added together therewith, due to sufficient blackness thereof. As a result, the magnetic recording medium has an excellent durability and a good electromagnetic performance. Further, the magnetic recording medium having the non-magnetic undercoating layer, since the black filler having an excellent blackness and a low volume resistivity are used, has a smooth surface, a low light transmittance and a small surface electrical resistivity. Therefore, the magnetic recording medium of the present invention is more suitable as those for high-density recording.

## EXAMPLES

The present invention is described in more detail by Examples and Comparative Examples, but the Examples are only illustrative and, therefore, not intended to limit the scope of the present invention.

Various properties were measured by the following methods.

(1) The average particle diameter, the average major axial diameter and average minor axial diameter of hematite particles, composite particles, black filler and carbon black fine particles were respectively expressed by the average of values (measured in a predetermined direction) of about 350 particles which were sampled from a micrograph obtained by magnifying an original electron micrograph by four times in each of the longitudinal and transverse directions.

(2) The aspect ratio of the particles was expressed by the ratio of average major axial diameter to average minor axial diameter thereof. The plate ratio of the particles was expressed by the ratio of the average plate surface diameter to the average thickness thereof.

(3) The geometrical standard deviation of particle diameter was expressed by values obtained by the following method. That is, the particle sizes were measured from the above magnified electron micrograph. The actual particle sizes and the number of the particles were calculated from the measured values. On a logarithmic normal probability paper, the particle sizes were plotted at regular intervals on the abscissa-axis and the accumulative number (under integration sieve) of particles belonging to each interval of the particle sizes were plotted by percentage on the ordinate-axis by a statistical technique.

The particle sizes corresponding to the number of particles of 50 % and 84.13 %, respectively, were read from the graph, and the geometrical standard deviation was calculated from the following formula:

Geometrical standard deviation =

{particle sizes corresponding to 84.13 %

under integration sieve}/

{particle sizes (geometrical average

diameter) corresponding to 50 % under

integration sieve}

The closer to 1 the geometrical standard deviation value, the more excellent the particle size distribution.

(4) The specific surface area was expressed by the value measured by a BET method.

(5) The amount of Mn, Al and Si which were present within hematite particles, composite particles or black filler, or on surfaces thereof, and the amount of Si contained in the organosilicon compounds, were measured by a fluorescent X-ray spectroscopy device 3063 M (manufactured by Rigaku Denki Kogyo Co., Ltd.) according to JIS K0119 "General rule of fluorescent X-ray analysis".

(6) The amount of carbon black coat formed on the surface of the composite particles or black filler was measured by "Horiba Metal, Carbon and Sulfur Analyzer EMIA-2200 Model" (manufactured by Horiba Seisakusho Co., Ltd.).

(7) The thickness of carbon black coat formed on the surfaces of the black filler is expressed by the value which was obtained by first measuring an average thickness of carbon black coat formed onto the surfaces of the particles on a photograph (× 5,000,000) obtained by magnifying (ten times) a micrograph (× 500,000) produced at an accelerating voltage of 200 kV using a transmission-type electron microscope (JEM-2010, manufactured by Japan Electron Co., Ltd.), and then calculating an actual thickness of carbon black coat formed from the measured average thickness.

(8) The desorption percentage (T %) of carbon black desorbed from the composite particles or black filler was measured by the following method.

That is, 3 g of the sample particles and 40 ml of ethanol were placed in a 50-ml precipitation pipe and then was subjected to ultrasonic dispersion for 20 minutes. Thereafter, the obtained dispersion was allowed to stand for 120 minutes, and separated the carbon black desorbed from the sample particles on the basis of the difference in specific gravity therebetween. Next, the thus separated sample particles were mixed again with 40 ml of ethanol, and the obtained mixture was further subjected to ultrasonic dispersion for 20 minutes. Thereafter, the obtained dispersion was allowed to stand for 120 minutes, thereby separating the sample particles and carbon black desorbed, from each other. The thus separated black filler were dried at 100°C for one hour, and then the carbon content thereof was measured by the "Horiba Metal, Carbon and Sulfur Analyzer EMIA-2200 Model" (manufactured by HORIBA SEISAKUSHO CO., LTD.). The desorption percentage (T %) was calculated according to the following formula:

$$T (\%) = \{(W_a - W_e)/W_a\} \times 100$$

wherein $W_a$ represents an amount of carbon black initially formed on the sample particles; and $W_e$ represents an amount of carbon black which still remains on the sample particles after the above desorption test.

The closer to zero the desorption percentage (T %), the smaller the amount of carbon black desorbed from the sample particles.

(9) The blackness of the hematite particles, composite particles and black filler was measured by the following method. That is, 0.5 g of sample particles and 0.7 ml of castor oil were intimately kneaded together by a Hoover's muller to form a paste. 4.5 g of clear lacquer was added to the obtained paste and was intimately kneaded to form a paint. The obtained paint was applied on a cast-coated paper by using a 6-mil (150 μm) applicator to produce a coating film piece (having a film thickness of about 30 μm). The thus obtained coating film piece was measured according to JIS Z 8729 by a multi-light source spectrographic colorimeter MSC-IS-2D (manufactured by Suga Testing Machines Manufacturing Co., Ltd.) to determine an L* value of colorimetric indices thereof. The blackness

was expressed by the L* value measured.

Here, the L* value represents a lightness, and the smaller the L* value, the more excellent the blackness.

(10) The volume resistivity of the hematite particles, composite particles and the black filler was measured by the following method.

That is, first, 0.5 g of the sample particles to be measured was weighted, and press-molded at 140 $Kg/cm^2$ (13,720 kPa) using a KBr tablet machine (manufactured by Simazu Seisakusho Co., Ltd.), thereby forming a cylindrical test piece.

Next, the thus obtained cylindrical test piece was exposed to an atmosphere maintained at a temperature of 25°C and a relative humidity of 60 % for 12 hours. Thereafter, the cylindrical test piece was set between stainless steel electrodes, and a voltage of 15V was applied between the electrodes using a Wheatstone bridge (model 4329A, manufactured by Yokogawa-Hokushin Denki Co., Ltd.) to measure a resistance value R (Ω).

The cylindrical test piece was measured with respect to an upper surface area A ($cm^2$) and a thickness $t_0$ (cm) thereof. The measured values were inserted into the following formula, thereby obtaining a volume resistivity X (Ω·cm).

$$X\ (\Omega\cdot cm) = R \times (A/t_0)$$

(11) The myristic acid absorption of the hematite particles, composite particles and black filler was measured by the following method. The lower the myristic acid absorption, the more the fatty acid becomes to ooze on the surface of the magnetic recording layer and the lower the friction coefficient thereof.

100 g of 1.5 mmφ glass beads, 9 g of sample particles to be measured and 45 ml of a tetrahydrofuran solution containing myristic acid in an amount enough to form one layer thereof on each sample particle, were charged into a 140-ml glass bottle, and then mixed and dispersed together for 60 minutes using a paint shaker.

Next, the thus obtained dispersion was taken out, charged into a 50-ml precipitation tube and centrifuged at 10,000 rpm for 15 minutes, thereby separating a solvent portion from a solid portion. The amount (concentration) of myristic acid contained in the solvent portion was determined by a gravimetric method. By subtracting the measured value from an amount of myristic acid initially. charged, the amount of myristic acid contained in the solid portion was obtained as a myristic acid absorption ($mg/m^2$) of the particles to be measured.

(12) The viscosity of the coating composition was obtained by measuring the viscosity of the coating composition at 25°C at a shear rate D of 1.92 $sec^{-1}$ by using "E type viscometer EMD-R" (manufactured by Tokyo Keiki, Co., Ltd.).

(13) The magnetic properties of the magnetic particles and magnetic recording medium were measured under an external magnetic field of 795.8 kA/m (10 kOe) by "Vibration Sample Magnetometer VSM-3S-15 (manufactured by Toei Kogyo, Co., Ltd.)".

(14) The gloss of the surface of the coating film of the magnetic recording layer and non-magnetic undercoat layer was measured at an angle of incidence of 45° by "glossmeter UGV-5D" (manufactured by Suga Shikenki, Co., Ltd.).

(15) The surface roughness Ra is expressed by the average value of the center-line average roughness of the profile curve of the surface of the coating film of the magnetic recording layer by using "Surfcom-575A" (manufactured by Tokyo Seimitsu Co., Ltd.).

(16) The liqht transmittance is expressed by the linear adsorption coefficient calculated by substituting the light transmittance measured by using "UV-Vis Recording Spectrophotometer UV-2100" (manufactured by Shimazu Seisakusho, Ltd.) for the following formula. The larger the value, the more difficult it is for the magnetic recording medium to transmit light:

$$\text{Linear adsorption coefficient}\ (\mu m^{-1}) = \{l\,n\,(l/t)\}/FT$$

wherein t represents a light transmittance (-) at λ = 900 nm, and FT represents thickness (μm) of the coating film used for the measurement.

(17) The electromagnetic performance was expressed by a relative value of an output of a magnetic recording medium (tape) with respect to that of a reference tape which outputs were measured by reproducing signals recorded at a frequency of 4 MHz or 7 MHz by setting a relative speed between magnetic tape and magnetic head to 5.8 m/s, using a DRUM TESTER BX-3168 (manufactured by BELDEX Co., Ltd.).

The reference tape was produced by the same method as used in the present invention except that the black filler in the magnetic coating composition were replaced with alumina (tradename: AKP-30, produced by Sumitomo Kagaku Co., Ltd.), and the alumina was added in an amount of 7.0 parts by weight based on 100 parts by weight of the magnetic particles.

(18) The durability of the magnetic medium was evaluated by the following running durability and the head contamination.

The running durability was evaluated by the actual operating time under the conditions that the load was 1.96 N (200 gw) and the relative speed of the head and the tape was 16 m/s by using "Media Durability Tester MDT-3000" (manufactured by Steinberg Associates). The longer the actual operating time, the higher the running durability.

(19) The head contamination was evaluated by visually observing the magnetic head after running the magnetic tape under a load of 1.96 N (200 gw) for 30 minutes by setting a relative speed between the magnetic tape and the magnetic head to 16 m/s, using a MEDIA DURABILITY TESTER MDT-3000 (manufactured by Steinberg Associates Co. Ltd.). The evaluation results were classified into the following four ranks. The A rank represents the smallest head contamination.

A: Not contaminated
B: Slightly contaminated
C: Contaminated
D: Severely contaminated

(20) The surface electrical resistivity of the coating film of the magnetic recording layer was measured by the following method. That is, the coating film to be measured was exposed to the environment maintained at a temperature of 25°C and a relative humidity of 60 %, for not less than 12 hours. Thereafter, the coating film was slit into 6 mm width, and the slit coating film was placed on two metal electrodes having a width of 6.5 mm such that a coating surface thereof was contacted with the electrodes. 1.7 N (170 gw) were respectively suspended at opposite ends of the coating film so as to bring the coating film into close contact with the electrodes. D.C. 500 V was applied between the electrodes, thereby measuring the surface electrical resistivity of the coating film.

(21) The friction coefficient of the magnetic recording medium was determined by measuring a frictional force between a surface of the magnetic tape and a metal surface (aluminum polished surface) using a tensile tester TENSILON (manufactured by Shimadzu Seisakusho Co., Ltd.), and expressed by the ratio of the measured value to the load.

(22) The thickness of each of the non-magnetic base film, the non-magnetic undercoat layer and the magnetic recording layer constituting the magnetic recording medium was measured in the following manner by using "Digital Electronic Micrometer R351C" (manufactured by Anritsu Corp.)

The thickness (A) of a non-magnetic base film was first measured. Similarly, the thickness (B) (B = the sum of the thicknesses of the non-magnetic base film and the non-magnetic undercoat layer) of a non-magnetic substrate obtained by forming a non-magnetic undercoat layer on the non-magnetic base film was measured. Furthermore, the thickness (C) (C = the sum of the thicknesses of the non-magnetic base film, the non-magnetic undercoat layer and the magnetic recording layer) of a magnetic recording medium obtained by forming a magnetic recording layer on the non-magnetic substrata was measured. The thickness of the non-magnetic undercoat layer is expressed by (B) - (A), and the thickness of the magnetic recording layer is expressed by (C) - (B).

Meanwhile, the thicknesses of non-magnetic base film and magnetic recording layer of a magnetic recording medium were measured by the following method.

The thickness (A) of the non-magnetic base film was first measured by a digital electron micrometer "K351C" (manufactured by Anritsu Denki Co., Ltd.). After forming a magnetic recording layer on the non-magnetic base film, a thickness (B) of the thus obtained magnetic recording medium (a total thickness of the non-magnetic base film and the magnetic recording layer) was measured by the same method as used above. Then, the thickness of the magnetic recording layer is obtained by subtracting (A) from (B).

Example 1:

<Production of black filler>

20 kg of Mn-containing hematite particles (average particle size: 0.30 μm; geometrical standard deviation value: 1.46; BET specific surface area value: 3.6 $m^2/g$; Mn content: 13.3 % by weight (calculated as Mn) based on the weight of the particle; blackness (L* value): 22.6; volume resistivity: $2.0 \times 10^7$ Ω•cm; and myristic acid absorption: 0.72 $mg/m^2$), were deagglomerated in 150 liters of pure water using a stirrer, and further passed through a "TK pipeline homomixer" (tradename, manufactured by Tokushu Kika Kogyo Co., Ltd.) three times, thereby obtaining a slurry containing the Mn-containing hematite particles.

Successively, the obtained slurry containing the Mn-containing hematite particles was passed through a transverse-type sand grinder (tradename "MIGHTY MILL MHG-1.5L", manufactured by Inoue Seisakusho Co., Ltd.) five times at an axis-rotating speed of 2,000 rpm, thereby obtaining a slurry in which the Mn-containing hematite particles were dispersed.

The particles in the obtained slurry which remained on a sieve of 325 meshes (mesh size: 44 μm) was 0 %. The slurry was filtered and washed with water, thereby obtaining a filter cake containing the Mn-containing hematite particles. After the obtained filter cake containing the Mn-containing hematite particles was dried at 120°C, 11.0 kg of the dried particles were then charged into an edge runner "MPUV-2 Model" (tradename, manufactured by Matsumoto Chuzo Tekkosho Co., Ltd.), and mixed and stirred at 30 Kg/cm (294 N/cm) and a stirring speed of 22 rpm for 30 minutes, thereby lightly deagglomerating the particles.

220 g of methyltriethoxysilane (tradename: "TSL8123", produced by GE TOSHIBA SILICONE CO., LTD.) was mixed and diluted with 200 ml of ethanol to obtain a methyltriethoxysilane solution. The methyltriethoxysilane solution was added to the deagglomerated Mn-containing hematite particles under the operation of the edge runner. The Mn-containing hematite particles were continuously mixed and stirred at a linear load of 60 Kg/cm (588 N/cm) and a stirring speed of 22 rpm for 45 minutes.

Next, 1,650 g of carbon black fine particles A (particle shape: granular shape; average particle size: 0.022 μm; geometrical standard deviation value: 1.68; BET specific surface area value: 134 $m^2/g$; and blackness (L* value): 16.6; pH value: 3.4; DBP oil absorption: 89 ml/100 g) were added to the Mn-containing hematite particles coated with methyltriethoxysilane for 10 minutes while operating the edge runner. Further, the mixed particles were continuously stirred at a linear load of 60 Kg/cm (588 N/cm) and a stirring speed of 22 rpm for 60 minutes to form the carbon black coat on the coating layer composed of methyl triethoxysilane, thereby obtaining composite particles.

In order to determine the coating amount of methyl triethoxysilane and the amount of carbon black adhered, a part of the obtained composite particles were sampled and aged at 105°C for 60 minutes using a dryer to evaporate residual components such as water and ethanol therefrom. As a result, it was confirmed that the coating amount of methyl triethoxysilane was 0.30 % by weight (calculated as Si), and the amount of carbon black adhered was 13.00 % by weight (corresponding to 15 parts by weight based on 100 parts by weight of the core particles). Further, as a result of the observation of electron micrograph, it was confirmed that almost whole amount of carbon black added was adhered onto the coating layer of organosilane compounds produced from methyl triethoxysilane.

Next, 220 g of dimethyl polysiloxane was added to the composite particles while operating an edge runner, and the obtained mixture was then mixed and stirred at a linear load of 60 Kg/cm (588 N/cm) for 30 minutes, thereby obtaining composite particles on the surfaces of which dimethyl polysiloxane was uniformly adhered. The stirring speed used in the above treatment was 22 rpm.

Next, 2,200 g of the above carbon black fine particles A were added to the above obtained composite particles for 10 minutes while operating the edge runner. Then, these particles were mixed and stirred with each other at a linear load of 60 Kg/cm (588 N/cm)for 30 minutes to adhere and bond the second carbon black coat onto the surface of the first carbon black coat through dimethyl polysiloxane as an adhesive, thereby obtaining black filler. The stirring speed used in the above treatment was 22 rpm.

The obtained black filler were heat-treated at 105°C for 60 minutes using a dryer. As a result of the observation by electron microscope, it was confirmed that the thus obtained black filler were of a granular shape having a particle size of 0.31 μm, and exhibited a geometrical standard deviation value of 1.46, a BET specific surface area of 8.9 $m^2/g$, a blackness (L* value) of 17.8, a volume resistivity value of $4.8 \times 10^2$ Ω•cm, a myristic acid adsorption of 0.26 $mg/m^2$ and a carbon black desorption percentage of 8.3 %. Further, it was confirmed that the total amount of carbon black adhered and bonded was 25.76 % by weight (calculated as C; corresponding to 35 parts by weight based on 100 parts by weight of the core particles); the thickness of carbon black adhered on the surface of each particle was 0.0027 μm; and the coating amount of dimethyl polysiloxane was 0.71 % by weight (calculated as Si). Meanwhile, as a result of the observation by electron microscope, it was recognized that since substantially no liberated carbon black was observed, almost whole amount of carbon black added was adhered onto the first carbon black coat.

Example 2:

<Production of magnetic recording medium>

100 parts by weight of Co-coated acicular magnetite particles (average major axial diameter: 0.23 µm, aspect ratio: 7.3, BET specific surface area: 30.3 $m^2/g$, coercive force value: 726 Oe (57.8 kA/m), saturation magnetization value: 81.9 emu/g (81.9 $Am^2/kg$), Co content: 2.22 wt. %), 10.0 parts by weight of vinyl chloride-vinyl acetate copolymer resin (tradename: MR-110, produced by Nippon Zeon Co., Ltd.), 23.3 parts by weight of cyclohexanone, 10.0 parts by weight of methyl ethyl ketone, 1.0 part by weight of carbon black fine particles (produced by Mitsubishi Chemical Corp., average diameter: 26 nm, BET specific surface area: 130 $m^2/g$) and 7.0 parts by weight of the above obtained black filler were kneaded together for 20 minutes using a kneader. The obtained kneaded material was diluted by adding 79.6 parts by weight of toluene, 110.2 parts by weight of methyl ethyl ketone and 17.8 parts by weight of cyclohexanone thereto, and then the resultant mixture was mixed and dispersed for 3 hours by a sand grinder, thereby obtaining a dispersion.

The obtained dispersion was mixed with 33.3 parts by weight of a solution prepared by dissolving 10.0 parts weight (solid content) of polyurethane resin (tradename: TI-1075, produced by Sanyo Kasei Kogyo Co., Ltd.) in a mixed solvent containing methyl ethyl ketone and cyclohexanone (weight ratio: 1/1), and the resultant mixture was mixed and dispersed for 30 minutes by a sand grinder. Thereafter, the obtained dispersion was passed through a filter having a mesh size of 1 µm. The obtained filter cake was mixed while stirring with 12.1 parts by weight of a solution prepared by dissolving 1.0 part by weight of myristic acid and 3.0 parts by weight of butyl stearate in a mixed solvent containing methyl ethyl ketone, toluene and cyclohexanone (weight ratio: 5/3/2), and with 15.2 parts by weight of a solution prepared by dissolving 5.0 parts by weight of trifunctional low molecular weight polyisocyanate (tradename: E-31, produced by Takeda Yakuhin Kogyo Co., Ltd.) in a mixed solvent containing methyl ethyl ketone, toluene and cyclohexanone (weight ratio: 5/3/2), thereby producing a magnetic coating composition.

The obtained magnetic coating composition had the following composition:

| | |
|---|---|
| Magnetic particles | 100 parts by weight |
| Vinyl chloride-vinyl acetate copolymer resin | 10 parts by weight |
| Polyurethane resin | 10 parts by weight |
| Black filler | 7.0 parts by weight |
| Carbon black fine particles | 1.0 part by weight |
| Myristic acid | 1.0 part by weight |
| Butyl stearate | 3.0 parts by weight |
| Trifunctional low molecular weight polyisocyanate | 5.0 parts by weight |
| Cyclohexanone | 56.6 parts by weight |
| Methyl ethyl ketone | 141.5 parts by weight |
| Toluene | 85.4 parts by weight |

The obtained magnetic coating composition had a viscosity of 2,432 cP.

The thus obtained magnetic coating composition was passed through a filter having a mesh size of 1 µm. Thereafter, the magnetic coating composition was coated on a 14 µm-thick polyester base film using a slit coater having a gap width of 45 µm, and the magnetic recording medium obtained was oriented and dried in a magnetic field, thereby forming a magnetic layer having a thickness of 3.9 µm on the base film. The surface of the obtained magnetic layer was calendered and smoothened by an ordinary method, and then the obtained film was slit into a width of 1/2 inch (1.27 cm). The obtained tape was allowed to stand in a curing oven maintained at 60°C, for 24 hours, and sufficiently cured therein, thereby producing a magnetic tape. The magnetic layer of the obtained magnetic tape had a thickness of 3.4 µm.

The obtained magnetic tape had a coercive force value of 751 Oe (59.8 kA/m), a squareness (Br/Bm) of 0.88, a gloss of 186 %, a surface roughness (Ra) of 6.8 nm, a linear absorption of 1.36 $\mu m^{-1}$ and a surface electrical resistivity of $8.6 \times 10^8$ $\Omega/cm^2$. As to the electromagnetic performance of the obtained magnetic tape, the output thereof at a recording frequency of 4 MHz was +2.3 dB. The friction coefficient thereof was 0.29. Further, as to the durability of the magnetic tape, the running durability time was not less than 30 minutes, and the head contamination was A.

Meanwhile, the measurement of the electromagnetic performance was conducted using a reference tape 1 described in Tables 10 and 11 hereinafter.

Core particles 1 to 5:

Various hematite particles were prepared by known methods. The same procedure as defined in Example 1 was conducted by using the thus hematite particles, thereby obtaining deagglomerated hematite particles as core particles.
Various properties of the thus obtained hematite particles are shown in Table 1.

Core particles 6:

The same procedure as defined in Example 1 was conducted by using 20 kg of the diaggregated Mn-containing hematite particles (core particles 1) and 150 liters of water, thereby obtaining a slurry containing the Mn-containing hematite particles. The pH value of the obtained re-dispersed slurry containing the Mn-containing hematite particles was adjusted to 10.5, and then the concentration of the solid content in the slurry was adjusted to 98 g/liter by adding water thereto. After 150 liters of the slurry was heated to 60°C, 2722 ml of a 1.0 mol/liter $NaAlO_2$ solution (corresponding to 0.5 % by weight (calculated as Al) based on the weight of the Mn-containing hematite particles) was added to the slurry. After allowing the obtained slurry to stand for 30 minutes, the pH value of the slurry was adjusted to 7.5 by using acetic acid. After further allowing the resultant slurry to stand for 30 minutes, the slurry was subjected to filtration, washing with water, drying and pulverization, thereby obtaining the Mn-containing hematite particles whose surface was coated with hydroxides of aluminum.
Main production conditions are shown in Table 2, and various properties of the obtained Mn-containing hematite particles are shown in Table 3.
In Table 2, "A" denotes a hydroxide of aluminum and "S" denotes an oxide of silicon.

Core particles 7 to 10:

The same procedure as defined above for the production of the core particles 6, was conducted except that kinds of core particles and kinds and amounts of additives used in the above surface treatment were changed variously, thereby obtaining surface-treated hematite particles.
The essential treating conditions are shown in Table 2, and various properties of the obtained surface-treated hematite particles are shown in Table 3.

Examples 3 to 14 and Comparative Examples 1 to 4:

<Production of composite particles>

The same procedure as defined in Example 1 was conducted except that kind of core particles, addition or non-addition, kind and amount of alkoxysilane, polysiloxane or silicon compound upon the coating step, edge runner treatment conditions used in the coating step, kind and amount of carbon black fine particles added in the carbon black-adhering steps and edge runner treatment conditions used in the adhering steps, were changed variously, thereby obtaining composite particles. As a result of observing the composite particles obtained in Examples 3 to 14 by an electron microscope, substantially no liberated carbon black was recognized. Therefore, it was confirmed that almost whole amount of carbon black added was adhered onto the coating layer of organosilane compounds produced from alkoxysilane, or the coating layer of polysiloxane.
Various properties of the carbon black fine particles A to F used, are shown in Table 4. The essential treating conditions are shown in Table 5, and various properties of the obtained composite particles are shown in Table 6.
Meanwhile, all the additives used in Examples 5 to 7 were polysiloxanes. Specifically, "TSF484" (tradename, produced by Toshiba Silicone Co., Ltd.) was methyl hydrogen polysiloxane; "BYK-080" (tradename, produced by BYK-Chemie Japan Co., Ltd.) was modified polysiloxane; and "TSF-4770" (tradename, produced by Toshiba Silicone Co., Ltd.) was terminal carboxyl group-modified polysiloxane.

Examples 15 to 26 and Comparative Examples 5 to 11:

<Production of black filler>

The same procedure as defined in Example 1 was conducted except that kind of composite particles, kind and amount of adhesive added in the bonding step, edge runner treatment conditions used in the bonding step, kind and amount of carbon black fine particles added in carbon black adhering steps and edge runner treatment conditions used in the carbon black adhering steps, were changed variously, thereby obtaining black filler.

Meanwhile, as a result of observing the black filler obtained in Examples 15 to 26 by an electron microscope, substantially no liberated carbon black was recognized. Therefore, it was confirmed that almost whole amount of carbon black added was adhered onto the first carbon black coat.

Main treatment conditions are shown in Table 7, and various properties of the obtained black filler are shown in Table 8.

Examples 27 to 38 and Comparative Examples 12 to 18:

<Production of magnetic recording medium>

The same procedure as defined in Example 2 was conducted except that kind of magnetic particles and kind and amount of filler added, were changed variously, thereby producing magnetic recording media.

Various properties of magnetic particles 1 to 3 used are shown in Table 9.

Meanwhile, the magnetic particles 3 are plate-like magnetic particles. In Table 9, the average major axial diameter of the magnetic particles 3 represents "plate surface diameter"; the average minor axial diameter thereof represents "thickness"; and the aspect ratio thereof represents "plate ratio".

Meanwhile, as to the reference tapes 1 to 4 used for determining the electromagnetic performance of the obtained magnetic recording media, the production conditions thereof are shown in Table 10, and various properties thereof are shown in Table 11.

As to the magnetic recording media obtained in Examples 27 to 38 and Comparative Examples 12 to 18, the production conditions thereof are shown in Table 12, and various properties thereof are shown in Tables 13 and 14.

Example 39:

<Production of black filler>

20 kg of Mn-containing hematite particles (average particle size: 0.30 µm; geometrical standard deviation value: 1.46; BET specific surface area value: 3.6 $m^2/g$; Mn content: 13.3 % by weight (calculated as Mn) based on the weight of the particle; blackness (L* value): 22.6; volume resistivity: 2.0 x $10^7$ Ω·cm; and myristic acid absorption: 0.72 $mg/m^2$), were deagglomerated in 150 liters of pure water using a stirrer, and further passed through a "TK pipeline homomixer" (tradename, manufactured by Tokushu Kika Kogyo Co., Ltd.) three times, thereby obtaining a slurry containing the Mn-containing hematite particles.

Successively, the obtained slurry containing the Mn-containing hematite particles was passed through a transverse-type sand grinder (tradename "MIGHTY MILL MHG-1.5L", manufactured by Inoue Seisakusho Co., Ltd.) five times at an axis-rotating speed of 2,000 rpm, thereby obtaining a slurry in which the Mn-containing hematite particles were dispersed.

The particles in the obtained slurry which remained on a sieve of 325 meshes (mesh size: 44 µm) was 0 %. The slurry was filtered and washed with water, thereby obtaining a filter cake containing the Mn-containing hematite particles. After the obtained filter cake containing the Mn-containing hematite particles was dried at 120°C, 11.0 kg of the dried particles were then charged into an edge runner "MPUV-2 Model" (tradename, manufactured by Matsumoto Chuzo Tekkosho Co., Ltd.), and mixed and stirred at 30 Kg/cm (294 N/cm) and a stirring speed of 22 rpm for 30 minutes, thereby lightly deagglomerating the particles.

165 g of methyltriethoxysilane (tradename: "TSL8123", produced by GE TOSHIBA SILICONE CO., LTD.) was mixed and diluted with 200 ml of ethanol to obtain a solution of methyltriethoxysilane. The methyltriethoxysilane solution was added to the thus diaggregated acicular manganese-containing hematite particles while operating the edge runner. The acicular manganese-containing hematite particles were continuously mixed and stirred at a linear load of 588 N/cm (60 Kg/cm )and a stirring speed of 22 rpm for 20 minutes.

Next, 1,925 g of carbon black fine particles B (particle shape: granular shape; average particle size: 0.022 µm; geometrical standard deviation value: 1.78; BET specific surface area value: 133 $m^2/g$; and blackness (L* value): 14.6; pH value: 3.4; DBP oil absorption: 84 ml/100 g) were added to the Mn-containing hematite particles coated with methyltriethoxysilane for 10 minutes while operating the edge runner. Further, the mixed particles were continuously stirred at a linear load of 30 Kg/cm (294 N/cm) and a stirring speed of 22 rpm for 30 minutes to form the carbon black coat on the coating layer composed of methyltriethoxysilane, thereby obtaining composite particles.

In order to determine the coating amount of methyltriethoxysilane and the amount of carbon black adhered, a part of the thus obtained composite particles was sampled, and heat-treated at 80°C for 120 minutes using a drier. As a result, it was confirmed that the coating amount of methyltriethoxysilane was 0.22 % by weight (calculated as Si), and the amount of carbon black adhered was 14.78 % by weight (equivalent to 17.5 parts by weight based on 100 parts by weight of the core particles). Further, as a result of the observation of electron micrograph, it was confirmed

that almost a whole amount of carbon black added was adhered onto the coating layer of an organosilane compound produced from the methyltriethoxysilane.

5.0 kg of the obtained composite particles were charged into an edge runner "MPUV-2 Model" (tradename, manufactured by Matsumoto Chuzo Tekkosho Co., Ltd.), and then mixed and stirred at a linear load of 30 Kg/cm (294 N/cm) for 30 minutes, thereby lightly deaggregating the particles.

Then, 100 g of dimethyl polysiloxane was added to the composite particles while operating the edge runner, and mixed and stirred together at a linear load of 60 Kg/cm (588 N/cm) for 45 minutes, thereby obtaining composite particles on the surfaces of which dimethyl polysiloxane was uniformly adhered.

Then, 875 g of the above carbon black fine particles B were added to the thus obtained composite particles for 10 minutes while operating the edge runner, and further mixed and stirred together at linear load of 60 Kg/cm (588 N/cm) for 30 minutes to adhere a second carbon black coat onto the surface of the first carbon black coat through dimethyl polysiloxane as an adhesive, thereby obtaining black filler.

The thus obtained black filler was dried at 105°C for 60 minutes using a dryer. As a result of the observation by electron microscope, it was confirmed that the thus obtained black filler were of a granular shape having a particle size of 0.31 µm, and exhibited a geometrical standard deviation value of 1.45, a BET specific surface area of 10.5 $m^2/g$, a blackness (L* value) of 17.1, a volume resistivity value of $3.1 \times 10^2$ Ω•cm, a myristic acid adsorption of 0.26 $mg/m^2$ and a carbon black desorption percentage of 7.9 %. Further, it was confirmed that the total amount of carbon black adhered and bonded was 25.68 % by weight (calculated as C; corresponding to 35 parts by weight based on 100 parts by weight of the core particles); the coating amount of dimethyl polysiloxane was 0.70 % by weight (calculated as Si); and the thickness of carbon black adhered on the surface of each particle was 0.0027 µm. Meanwhile, as a result of the observation by electron microscope, substantially no liberated carbon black was recognized. Therefore, it was confirmed that almost whole amount of the carbon black added was adhered onto the first carbon black coat.

Example 40:

<Production of non-magnetic undercoat layer>

12 g of non-magnetic particles 1 shown in Table 19 below (kind: hematite particles; particle shape: spindle-shaped; average major axial diameter: 0.187 µm; average minor axial diameter: 0.0240 µm; aspect ratio: 7.8:1; geometrical standard deviation value: 1.33; BET specific surface area value: 43.3 $m^2/g$; volume resistivity value: $8.6 \times 10^8$ Ω·cm; blackness (L* value): 32.6) were mixed with a binder resin solution (containing 30 % by weight of vinyl chloride-vinyl acetate copolymer resin having a sodium sulfonate group and 70 % by weight of cyclohexanone) and cyclohexanone, thereby obtaining a mixture (solid content: 72 %). The obtained mixture was further kneaded for 30 minutes using a plast-mill, thereby obtaining a kneaded material.

The thus obtained kneaded material was added to a 140ml glass bottle together with 95 g of 1.5mmϕ glass beads, an additional amount of a binder resin solution (containing 30 % by weight of polyurethane resin having a sodium sulfonate group and 70% by weight of a mixed solvent of methyl ethyl ketone and toluene (1:1)), cyclohexanone, methyl ethyl ketone and toluene. The resultant mixture was mixed and dispersed for 6 hours by a paint shaker, thereby obtaining a coating composition. Thereafter, a lubricant was added to the obtained coating composition, and the mixture was mixed and dispersed for 15 minutes by a paint shaker.

The composition of the obtained non-magnetic coating material was as follows:

| | |
|---|---|
| Non-magnetic particles 1 | 100 parts by weight |
| Vinyl chloride-vinyl acetate copolymer resin having a sodium sulfonate group | 10 parts by weight |
| Polyurethane resin having a sodium sulfonate group | 10 parts by weight |
| Lubricant (myristic acid: butyl stearate = 1:1) | 2 parts by weight |
| Cyclohexanone | 56.9 parts by weight |
| Methyl ethyl ketone | 142.3 parts by weight |
| Toluene | 85.4 parts by weight |

The obtained non-magnetic coating material had a viscosity of 310 cP.

Next, the non-magnetic coating material was coated on a 12 µm-thick polyethylene terephthalate film using an applicator so as to form thereon a 55 µm-thick coating layer, and then dried, thereby producing a non-magnetic undercoat layer.

The thus obtained non-magnetic undercoat layer had a thickness of 3.4 µm, and exhibited a gloss of 193%, a surface roughness Ra of 8.2 nm, a Young's modulus (relative value) of 123, a linear absorption of 1.01 $µm^{-1}$ and a surface electrical resistivity value of $1.1 \times 10^{14}$ Ω•cm.

<Production of magnetic recording medium>

100 parts by weight of Co-coated acicular magnetite particles (average major axial diameter: 0.23 μm, aspect ratio: 7.3, BET specific surface area: 30.3 $m^2/g$, coercive force value: 726 Oe (57.8 kA/m), saturation magnetization value: 81.9 emu/g (81.9 $Am^2/kg$), Co content: 2.22 wt. %), 10.0 parts by weight of vinyl chloride-vinyl acetate copolymer resin (tradename: MR-110, produced by Nippon Zeon Co., Ltd.), 23.3 parts by weight of cyclohexanone, 10.0 parts by weight of methyl ethyl ketone, 1.0 part by weight of carbon black fine particles (produced by Mitsubishi Chemical Corp., average diameter: 26 nm, BET specific surface area: 130 $m^2/g$) and 7.0 parts by weight of the above obtained black filler were kneaded together for 20 minutes using a kneader. The obtained kneaded material was diluted by adding 79.6 parts by weight of toluene, 110.2 parts by weight of methyl ethyl ketone and 17.8 parts by weight of cyclohexanone thereto, and then the resultant mixture was mixed and dispersed for 3 hours by a sand grinder, thereby obtaining a dispersion.

The obtained dispersion was mixed with 33.3 parts by weight of a solution prepared by dissolving 10.0 parts weight (solid content) of polyurethane resin (tradename: TI-1075, produced by Sanyo Kasei Kogyo Co., Ltd.) in a mixed solvent containing methyl ethyl ketone and cyclohexanone (weight ratio: 1/1), and the resultant mixture was mixed and dispersed for 30 minutes by a sand grinder. Thereafter, the obtained dispersion was passed through a filter having a mesh size of 1 μm. The obtained filter cake was mixed while stirring with 12.1 parts by weight of a solution prepared by dissolving 1.0 part by weight of myristic acid and 3.0 parts by weight of butyl stearate in a mixed solvent containing methyl ethyl ketone, toluene and cyclohexanone (weight ratio: 5/3/2), and with 15.2 parts by weight of a solution prepared by dissolving 5.0 parts by weight of trifunctional low molecular weight polyisocyanate (tradename: E-31, produced by Takeda Yakuhin Kogyo Co., Ltd.) in a mixed solvent containing methyl ethyl ketone, toluene and cyclohexanone (weight ratio: 5/3/2), thereby producing a magnetic coating composition.

The obtained magnetic coating composition had the following composition:

| | |
|---|---|
| Magnetic particles | 100 parts by weight |
| Vinyl chloride-vinyl acetate copolymer resin | 10 parts by weight |
| Polyurethane resin | 10 parts by weight |
| Black filler | 7.0 parts by weight |
| Carbon black fine particles | 1.0 part by weight |
| Myristic acid | 1.0 part by weight |
| Butyl stearate | 3.0 parts by weight |
| Trifunctional low molecular weight polyisocyanate | 5.0 parts by weight |
| Cyclohexanone | 56.6 parts by weight |
| Methyl ethyl ketone | 141.5 parts by weight |
| Toluene | 85.4 parts by weight |

The obtained magnetic coating composition had a viscosity of 2,816 cP.

The thus obtained magnetic coating composition was passed through a filter having a mesh size of 1 μm and then was coated on the obtained non-magnetic undercoat layer using a slit coater, and the obtained product was oriented and dried in a magnetic field, thereby forming a magnetic layer on the non-magnetic undercoat layer. The surface of the obtained magnetic layer was calendered and smoothened by an ordinary method, and then the obtained film was slit into a width of 1/2 inch (1.27 cm). The obtained tape was allowed to stand in a curing oven maintained at 60°C, for 24 hours, and sufficiently cured therein, thereby producing a magnetic tape. The magnetic layer of the obtained magnetic tape had a thickness of 3.4 μm.

The obtained magnetic tape had a coercive force value of 754 Oe (60.0 kA/m), a squareness (Br/Bm) of 0.88, a gloss of 194 %, a surface roughness (Ra) of 6.8 nm, a linear absorption of 1.36 $\mu m^{-1}$ and a surface electrical resistivity of $6.8 \times 10^7$ $\Omega/cm^2$. As to the electromagnetic performance of the obtained magnetic tape, the output thereof at a recording frequency of 4 MHz was +2.3 dB. Further, as to the durability of the magnetic tape, the running durability time was 29.2 minutes, and the head contamination was A.

Meanwhile, the measurement of the electromagnetic performance was conducted using a reference tape 5 described in Tables 21 and 22 hereinafter.

Examples 41 to 52:

The same procedure as defined in Example 39 was conducted except that kinds of the core particles, addition or non-addition of alkoxysilanes, polysiloxanes compound or silicon compounds, kinds and amounts of alkoxysilanes,

polysiloxanes compound or silicon compounds added, treating conditions of an edge runner used in the alkoxysilanes, polysiloxanes compound or silicon compounds coating process, kinds and amounts of the carbon black fine particles added, and treating conditions of an edge runner used in the process for forming the carbon black coat, were changed variously, thereby obtaining composite particles.

As a result of the observation by an electron microscope, liberated carbon black fine particles were not recognized in the composite particles obtained in Examples 41 to 52. Therefore, it was confirmed that a substantially whole amount of the carbon black used in Examples 41 to 52 contributed to the formation of the carbon black coat on the coating layer composed of an organosilane compound produced from the alkoxysilane or polysiloxanes.

Main production conditions are shown in Table 15, and various properties of the obtained composite particles are shown in Table 16.

Examples 53 to 64:

The same procedure as defined in Example 39 was conducted except that kind of composite particles, kind and amount of adhesive added in the adhesive-treatment step, edge runner treatment conditions used in the adhesive-treatment step, kind and amount of carbon black fine particles added in the carbon black-adhering steps and edge runner treatment conditions used in the carbon black-adhering steps, were changed variously, thereby obtaining a black filler.

Meanwhile, as a result of observing the black filler obtained in Examples 53 to 64 by an electron microscope, substantially no liberated carbon black was recognized. Therefore, it was confirmed that almost whole amount of carbon black added was adhered onto the first carbon black coat.

Main treatment conditions are shown in Table 17, and various properties of the obtained black filler are shown in Table 18.

<Production of non-magnetic undercoat layers>

Non-magnetic undercoat layers 1 to 6:

Non-magnetic undercoat layers were produced using various non-magnetic particles by the same method as defined in Example 40.

Various properties of the non-magnetic particles 1 to 6 used above are shown in Table 19.

Main production conditions and various properties of the obtained non-magnetic undercoat layers are shown in Table 20.

<Production of reference tapes>

Reference tapes 5 to 8:

Reference tapes were produced using various non-magnetic undercoat layers, various non-magnetic particles and $Al_2O_3$ as a filler by the same method as defined in Example 40.

Main production conditions and various properties of the obtained reference tapes are shown in Tables 21 and 22.

Examples 65 to 76 and Comparative Examples 19 to 26:

<Production of magnetic recording medium>

The same procedure as defined in Example 40 was conducted except that kind of non-magnetic undercoat layer, kind of magnetic particles and kind and amount of black filler added, were changed variously, thereby producing magnetic recording media.

Production conditions of magnetic recording media are shown in Table 23, and various properties thereof are shown in Tables 24 and 25.

Table 1

| Core particles | Properties of hematite particles | |
|---|---|---|
| | Kind | Particle shape |
| Core particles 1 | Mn-containing hematite particles | Granular |
| Core particles 2 | Mn-containing hematite particles | Granular |
| Core particles 3 | Hematite particles | Granular |
| Core particles 4 | Hematite particles | Granular |
| Core particles 5 | Hematite particles | Acicular |

Table 1 (continued)

| Core particles | Properties of hematite particles | | |
|---|---|---|---|
| | Average major axial diameter (Average particle size) (µm) | Average minor axial diameter (µm) | Aspect ratio (-) |
| Core particles 1 | 0.32 | - | - |
| Core particles 2 | 0.18 | - | - |
| Core particles 3 | 0.11 | - | - |
| Core particles 4 | 0.29 | - | - |
| Core particles 5 | 0.23 | 0.029 | 7.9:1 |

Table 1 (continued)

| Core particles | Properties of hematite particles | | |
|---|---|---|---|
| | Geometrical standard deviation value (-) | BET specific surface area value ($m^2/g$) | Mn content (wt. %) |
| Core particles 1 | 1.49 | 3.1 | 13.1 |
| Core particles 2 | 1.41 | 7.8 | 15.6 |
| Core particles 3 | 1.35 | 15.3 | - |
| Core particles 4 | 1.41 | 3.8 | - |
| Core particles 5 | 1.38 | 35.6 | - |

Table 1 (continued)

| Core particles | Properties of hematite particles | | |
|---|---|---|---|
| | Volume resistivity value (Ω·cm) | Blackness (L* value) (-) | Myristic acid adsorption (mg/$m^2$) |
| Core particles 1 | $1.8 \times 10^7$ | 22.4 | 0.76 |
| Core particles 2 | $2.3 \times 10^7$ | 24.4 | 0.73 |
| Core particles 3 | $7.6 \times 10^8$ | 35.5 | 0.56 |
| Core particles 4 | $6.4 \times 10^8$ | 32.1 | 0.61 |
| Core particles 5 | $3.6 \times 10^8$ | 34.0 | 0.63 |

Table 2

| Core particles | Kind of core particles | Surface-treatment step | | |
|---|---|---|---|---|
| | | Additives | | |
| | | Kind | Calculated as | Amount (wt. %) |
| Core particles 6 | Core particles 1 | Sodium aluminate | Al | 0.5 |
| Core particles 7 | Core particles 2 | Water glass #3 | $SiO_2$ | 0.2 |
| Core particles 8 | Core particles 3 | Aluminum sulfate<br>Water glass #3 | Al<br>$SiO_2$ | 0.5<br>1.5 |
| Core particles 9 | Core particles 4 | Sodium aluminate | Al | 2.0 |
| Core particles 10 | Core particles 5 | Aluminum sulfate | Al | 5.5 |

Table 2 (continued)

| Core particles | Surface-treatment step | | |
|---|---|---|---|
| | Coating composition | | |
| | Kind | Calculated as | Amount (wt. %) |
| Core particles 6 | A | Al | 0.49 |
| Core particles 7 | S | $SiO_2$ | 0.18 |
| Core particles 8 | A<br>S | Al<br>$SiO_2$ | 0.48<br>1.45 |
| Core particles 9 | A | Al | 1.90 |
| Core particles 10 | A | Al | 5.21 |

Table 3

| Core particles | Properties of surface-treated hematite particles | | |
|---|---|---|---|
| | Average major axial diameter (Average particle size) (µm) | Average minor axial diameter (µm) | Aspect ratio (-) |
| Core particles 6 | 0.32 | - | - |
| Core particles 7 | 0.18 | - | - |
| Core particles 8 | 0.11 | - | - |
| Core particles 9 | 0.29 | - | - |
| Core particles 10 | 0.23 | 0.030 | 7.7:1 |

Table 3 (continued)

| Core particles | Properties of surface-treated hematite particles | | |
|---|---|---|---|
| | Geometrical standard deviation value (-) | BET specific surface area value ($m^2/g$) | Mn content (wt. %) |
| Core particles 6 | 1.47 | 3.8 | 13.0 |
| Core particles 7 | 1.40 | 7.5 | 15.6 |
| Core particles 8 | 1.35 | 17.1 | - |
| Core particles 9 | 1.41 | 5.2 | - |
| Core particles 10 | 1.38 | 35.2 | - |

Table 3 (continued)

| Core particles | Properties of surface-treated hematite particles | | |
|---|---|---|---|
| | Volume resistivity value (Ω·cm) | Blackness (L* value) (-) | Myristic acid adsorption ($mg/m^2$) |
| Core particles 6 | $3.2 \times 10^7$ | 22.6 | 0.63 |
| Core particles 7 | $4.8 \times 10^7$ | 25.1 | 0.56 |
| Core particles 8 | $9.3 \times 10^8$ | 35.6 | 0.51 |
| Core particles 9 | $7.6 \times 10^8$ | 32.5 | 0.53 |
| Core particles 10 | $5.1 \times 10^8$ | 34.6 | 0.53 |

Table 4

| Kind of carbon black fine particles | Properties of carbon black fine particles | | |
|---|---|---|---|
| | Particle shape | Average particle size (μm) | Geometrical standard deviation value (-) |
| Carbon black A | Granular | 0.022 | 1.68 |
| Carbon black B | Granular | 0.022 | 1.78 |
| Carbon black C | Granular | 0.015 | 1.56 |
| Carbon black D | Granular | 0.030 | 2.06 |
| Carbon black E | Granular | 0.024 | 1.69 |
| Carbon black F | Granular | 0.028 | 1.71 |

Table 4 (continued)

| Kind of carbon black fine particles | Properties of carbon black fine particles | | | |
|---|---|---|---|---|
| | BET specific surface area value ($m^2/g$) | pH value (-) | DBP oil absorption (ml/100g) | Blackness (L* value) (-) |
| Carbon black A | 134.0 | 3.4 | 89 | 16.6 |
| Carbon black B | 133.5 | 3.4 | 84 | 14.6 |
| Carbon black C | 265.3 | 3.7 | 57 | 15.2 |
| Carbon black D | 84.6 | 8.0 | 95 | 17.0 |
| Carbon black E | 113.6 | 10.8 | 102 | 16.2 |
| Carbon black F | 800.0 | 7.0 | 200 | 15.3 |

Table 5

| Examples and Comparative Examples | Kind of core particles | Production of composite particles | |
|---|---|---|---|
| | | Coating step with alkoxysilane, polysiloxane or silicon compound | |
| | | Additives | |
| | | Kind | Amount added (part by weight) |
| Example 3 | Core particles 1 | Methyl triethoxysilane | 1.5 |
| Example 4 | Core particles 2 | Methyl trimethoxysilane | 1.0 |
| Example 5 | Core particles 3 | TSF484 | 1.0 |
| Example 6 | Core particles 4 | BYK-080 | 1.0 |
| Example 7 | Core particles 5 | TSF4770 | 1.0 |
| Example 8 | Core particles 6 | Methyl triethoxysilane | 2.0 |
| Example 9 | Core particles 7 | Methyl trimethoxysilane | 1.0 |
| Example 10 | Core particles 8 | Dimethyl dimethoxysilane | 0.5 |
| Example 11 | Core particles 9 | Phenyl triethoxysilane | 1.0 |
| Example 12 | Core particles 10 | Isobutyl trimethoxysilane | 1.5 |
| Example 13 | Core particles 1 | Methyl triethoxysilane | 2.0 |
| Example 14 | Core particles 1 | Methyl triethoxysilane | 2.0 |
| Comparative Example 1 | Core particles 1 | - | - |
| Comparative Example 2 | Core particles 1 | Methyl triethoxysilane | 0.005 |
| Comparative Example 3 | Core particles 1 | Methyl triethoxysilane | 1.0 |
| Comparative Example 4 | Core particles 1 | γ-aminopropyl triethoxysilane | 1.0 |

Table 5 (continued)

| Examples and Comparative Examples | Production of composite particles | | | |
|---|---|---|---|---|
| | Coating step with alkoxysilane, polysiloxane or silicon compound | | | |
| | Edge runner treatment | | | Coating amount (calculated as Si) (wt. %) |
| | Linear load | | Time (min.) | |
| | (N/cm) | (Kg/cm) | | |
| Example 3 | 588 | 60 | 20 | 0.22 |
| Example 4 | 588 | 60 | 30 | 0.19 |
| Example 5 | 735 | 75 | 20 | 0.43 |
| Example 6 | 294 | 30 | 30 | 0.18 |
| Example 7 | 441 | 45 | 30 | 0.34 |
| Example 8 | 588 | 60 | 30 | 0.28 |
| Example 9 | 441 | 45 | 45 | 0.19 |
| Example 10 | 588 | 60 | 30 | 0.10 |
| Example 11 | 735 | 75 | 20 | 0.12 |
| Example 12 | 588 | 60 | 30 | 0.22 |
| Example 13 | 588 | 60 | 20 | 0.29 |
| Example 14 | 735 | 75 | 30 | 0.30 |
| Comparative Example 1 | - | - | - | - |
| Comparative Example 2 | 294 | 30 | 20 | $7 \times 10^{-4}$ |
| Comparative Example 3 | 294 | 30 | 20 | 0.15 |
| Comparative Example 4 | 294 | 30 | 20 | 0.13 |

Table 5 (continued)

| Examples and Comparative Examples | Production of composite particles<br>Adhesion step with carbon black<br>Carbon black | |
|---|---|---|
| | Kind | Amount added (part by weight) |
| Example 3 | B | 10.0 |
| Example 4 | B | 20.0 |
| Example 5 | C | 10.0 |
| Example 6 | C | 15.0 |
| Example 7 | D | 7.5 |
| Example 8 | D | 10.0 |
| Example 9 | B | 12.5 |
| Example 10 | C | 25.0 |
| Example 11 | D | 15.0 |
| Example 12 | B | 10.0 |
| Example 13 | E | 10.0 |
| Example 14 | F | 10.0 |
| Comparative Example 1 | B | 15.0 |
| Comparative Example 2 | C | 15.0 |
| Comparative Example 3 | D | 35.0 |
| Comparative Example 4 | D | 15.0 |

Table 5 (continued)

| Examples and Comparative Examples | Production of composite particles | | | |
|---|---|---|---|---|
| | Adhesion step with carbon black | | | |
| | Edge runner treatment | | | Amount adhered (calculated as C) (wt. %) |
| | Linear load | | Time (min.) | |
| | (N/cm) | (Kg/cm) | | |
| Example 3 | 588 | 60 | 30 | 9.05 |
| Example 4 | 588 | 60 | 20 | 16.58 |
| Example 5 | 588 | 60 | 20 | 9.08 |
| Example 6 | 588 | 60 | 30 | 13.00 |
| Example 7 | 441 | 45 | 45 | 6.92 |
| Example 8 | 294 | 30 | 45 | 9.05 |
| Example 9 | 441 | 45 | 30 | 11.01 |
| Example 10 | 588 | 60 | 30 | 19.92 |
| Example 11 | 294 | 30 | 20 | 12.98 |
| Example 12 | 735 | 75 | 20 | 9.09 |
| Example 13 | 441 | 45 | 30 | 9.05 |
| Example 14 | 588 | 60 | 20 | 9.01 |
| Comparative Example 1 | 294 | 30 | 20 | 13.01 |
| Comparative Example 2 | 294 | 30 | 20 | 13.00 |
| Comparative Example 3 | 294 | 30 | 20 | 25.88 |
| Comparative Example 4 | 294 | 30 | 20 | 12.99 |

Table 6

| Examples and Comparative Examples | Properties of composite particles | | |
|---|---|---|---|
| | Average major axial diameter (Average particle size) (μm) | Average minor axial diameter (μm) | Aspect ratio (-) |
| Example 3 | 0.32 | - | - |
| Example 4 | 0.19 | - | - |
| Example 5 | 0.11 | - | - |
| Example 6 | 0.29 | - | - |
| Example 7 | 0.23 | 0.029 | 7.9:1 |
| Example 8 | 0.32 | - | - |
| Example 9 | 0.18 | - | - |
| Example 10 | 0.12 | - | - |
| Example 11 | 0.29 | - | - |
| Example 12 | 0.24 | 0.030 | 8.0:1 |
| Example 13 | 0.32 | - | - |
| Example 14 | 0.32 | - | - |
| Comparative Example 1 | 0.32 | - | - |
| Comparative Example 2 | 0.32 | - | - |
| Comparative Example 3 | 0.33 | - | - |
| Comparative Example 4 | 0.32 | - | - |

Table 6 (continued)

| Examples and Comparative Examples | Properties of composite particles | | |
|---|---|---|---|
| | Geometrical standard deviation value (-) | BET specific surface area value ($m^2/g$) | Mn content (wt. %) |
| Example 3 | 1.49 | 6.9 | 11.7 |
| Example 4 | 1.42 | 11.8 | 12.9 |
| Example 5 | 1.36 | 18.3 | - |
| Example 6 | 1.40 | 7.4 | - |
| Example 7 | 1.38 | 38.1 | - |
| Example 8 | 1.49 | 7.3 | 11.6 |
| Example 9 | 1.41 | 10.9 | 13.7 |
| Example 10 | 1.34 | 21.4 | - |
| Example 11 | 1.41 | 8.1 | - |
| Example 12 | 1.39 | 38.9 | - |
| Example 13 | 1.49 | 6.4 | 11.6 |
| Example 14 | 1.49 | 6.6 | 11.6 |
| Comparative Example 1 | - | 15.8 | 11.4 |
| Comparative Example 2 | - | 14.2 | 11.3 |
| Comparative Example 3 | - | 16.6 | 9.6 |
| Comparative Example 4 | - | 12.8 | 11.3 |

Table 6 (continued)

| Examples and Comparative Examples | Properties of composite particles | |
|---|---|---|
| | Volume resistivity value (Ω·cm) | Blackness (L* value) (-) |
| Example 3 | $4.6 \times 10^3$ | 17.2 |
| Example 4 | $5.8 \times 10^3$ | 17.9 |
| Example 5 | $8.1 \times 10^3$ | 19.5 |
| Example 6 | $5.8 \times 10^3$ | 18.4 |
| Example 7 | $8.5 \times 10^3$ | 18.6 |
| Example 8 | $4.1 \times 10^3$ | 17.8 |
| Example 9 | $5.6 \times 10^3$ | 17.3 |
| Example 10 | $3.2 \times 10^3$ | 18.5 |
| Example 11 | $4.6 \times 10^3$ | 19.2 |
| Example 12 | $5.1 \times 10^3$ | 18.9 |
| Example 13 | $1.9 \times 10^3$ | 17.4 |
| Example 14 | $1.2 \times 10^3$ | 17.4 |
| Comparative Example 1 | $4.1 \times 10^6$ | 19.2 |
| Comparative Example 2 | $2.6 \times 10^6$ | 19.6 |
| Comparative Example 3 | $1.6 \times 10^5$ | 19.2 |
| Comparative Example 4 | $1.3 \times 10^6$ | 19.9 |

Table 6 (continued)

| Examples and Comparative Examples | Properties of composite particles | |
|---|---|---|
| | Myristic acid adsorption (mg/m²) | Carbon black desorption percentage (%) |
| Example 3 | 0.40 | 7.9 |
| Example 4 | 0.37 | 8.4 |
| Example 5 | 0.36 | 8.3 |
| Example 6 | 0.37 | 8.2 |
| Example 7 | 0.38 | 7.6 |
| Example 8 | 0.37 | 3.8 |
| Example 9 | 0.34 | 4.1 |
| Example 10 | 0.32 | 4.8 |
| Example 11 | 0.35 | 4.7 |
| Example 12 | 0.34 | 3.6 |
| Example 13 | 0.43 | 9.5 |
| Example 14 | 0.41 | 9.8 |
| Comparative Example 1 | 0.56 | 69.2 |
| Comparative Example 2 | 0.58 | 56.3 |
| Comparative Example 3 | 0.44 | 23.2 |
| Comparative Example 4 | 0.53 | 51.6 |

Table 7

| Examples and Comparative Examples | Kind of composite particles | Production of black filler | |
|---|---|---|---|
| | | Coating step with dimethyl polysiloxane or silicon compound | |
| | | Additives | |
| | | Kind | Amount added (part by weight) |
| Example 15 | Example 3 | Dimethylpolysiloxane | 1.0 |
| Example 16 | Example 4 | Dimethylpolysiloxane | 2.0 |
| Example 17 | Example 5 | Dimethylpolysiloxane | 1.0 |
| Example 18 | Example 6 | Dimethylpolysiloxane | 1.5 |
| Example 19 | Example 7 | Dimethylpolysiloxane | 1.0 |
| Example 20 | Example 8 | Dimethylpolysiloxane | 2.0 |
| Example 21 | Example 9 | Dimethylpolysiloxane | 1.5 |
| Example 22 | Example 10 | Dimethylpolysiloxane | 2.0 |
| Example 23 | Example 11 | Dimethylpolysiloxane | 1.5 |
| Example 24 | Example 12 | Dimethylpolysiloxane | 2.0 |
| Example 25 | Example 13 | Dimethylpolysiloxane | 1.0 |
| Example 26 | Example 14 | Dimethylpolysiloxane | 1.0 |
| Comparative Example 5 | Comparative Example 1 | Dimethylpolysiloxane | 1.0 |
| Comparative Example 6 | Comparative Example 2 | Dimethylpolysiloxane | 1.0 |
| Comparative Example 7 | Comparative Example 3 | Dimethylpolysiloxane | 1.0 |
| Comparative Example 8 | Comparative Example 4 | Dimethylpolysiloxane | 1.0 |
| Comparative Example 9 | Example 1 | - | - |
| Comparative Example 10 | Example 1 | Dimethylpolysiloxane | 0.005 |
| Comparative Example 11 | Example 1 | Methylethoxysilane | 1.0 |

Table 7 (continued)

| Examples and Comparative Examples | Production of black filler | | | |
|---|---|---|---|---|
| | Coating step with dimethyl polysiloxane or silicon compound | | | |
| | Edge runner treatment | | | Coating amount (calculated as Si) (wt. %) |
| | Linear load | | Time (min.) | |
| | (N/cm) | (Kg/cm) | | |
| Example 15 | 588 | 60 | 20 | 0.30 |
| Example 16 | 588 | 60 | 20 | 0.71 |
| Example 17 | 294 | 30 | 30 | 0.31 |
| Example 18 | 294 | 30 | 45 | 0.54 |
| Example 19 | 441 | 45 | 30 | 0.31 |
| Example 20 | 441 | 45 | 20 | 0.70 |
| Example 21 | 735 | 75 | 20 | 0.51 |
| Example 22 | 588 | 60 | 30 | 0.70 |
| Example 23 | 588 | 60 | 20 | 0.53 |
| Example 24 | 441 | 45 | 20 | 0.71 |
| Example 25 | 294 | 30 | 30 | 0.31 |
| Example 26 | 588 | 60 | 20 | 0.31 |
| Comparative Example 5 | 588 | 60 | 20 | 0.30 |
| Comparative Example 6 | 588 | 60 | 20 | 0.31 |
| Comparative Example 7 | 588 | 60 | 20 | 0.31 |
| Comparative Example 8 | 588 | 60 | 20 | 0.31 |
| Comparative Example 9 | - | - | - | - |
| Comparative Example 10 | 294 | 30 | 20 | $7 \times 10^{-4}$ |
| Comparative Example 11 | 294 | 30 | 20 | 0.15 |

Table 7 (continued)

| Examples and Comparative Examples | Production of black filler | |
|---|---|---|
| | Adhesion step with carbon black | |
| | Carbon black | |
| | Kind | Amount added (part by weight) |
| Example 15 | B | 25.0 |
| Example 16 | C | 15.0 |
| Example 17 | D | 25.0 |
| Example 18 | B | 25.0 |
| Example 19 | C | 25.0 |
| Example 20 | D | 23.0 |
| Example 21 | B | 20.0 |
| Example 22 | C | 10.0 |
| Example 23 | D | 20.0 |
| Example 24 | B | 25.0 |
| Example 25 | E | 25.0 |
| Example 26 | F | 25.0 |
| Comparative Example 5 | B | 20.0 |
| Comparative Example 6 | C | 20.0 |
| Comparative Example 7 | D | 5.0 |
| Comparative Example 8 | D | 20.0 |
| Comparative Example 9 | B | 25.0 |
| Comparative Example 10 | B | 25.0 |
| Comparative Example 11 | B | 25.0 |

Table 7 (continued)

| Examples and Comparative Examples | Production of black filler | | | |
|---|---|---|---|---|
| | Adhesion step with carbon black | | | |
| | Edge runner treatment | | | Amount adhered (calculated as C) (wt. %) |
| | Linear load | | Time (min.) | |
| | (N/cm) | (Kg/cm) | | |
| Example 15 | 588 | 60 | 20 | 19.90 |
| Example 16 | 588 | 60 | 20 | 13.01 |
| Example 17 | 588 | 60 | 30 | 19.89 |
| Example 18 | 441 | 45 | 30 | 19.92 |
| Example 19 | 294 | 30 | 30 | 19.85 |
| Example 20 | 588 | 60 | 20 | 18.59 |
| Example 21 | 588 | 60 | 30 | 16.54 |
| Example 22 | 588 | 60 | 20 | 9.01 |
| Example 23 | 441 | 45 | 30 | 16.57 |
| Example 24 | 294 | 30 | 30 | 19.83 |
| Example 25 | 735 | 75 | 20 | 19.86 |
| Example 26 | 588 | 60 | 20 | 19.91 |
| Comparative Example 5 | 588 | 60 | 20 | 16.55 |
| Comparative Example 6 | 588 | 60 | 20 | 16.58 |
| Comparative Example 7 | 588 | 60 | 20 | 4.71 |
| Comparative Example 8 | 588 | 60 | 20 | 16.54 |
| Comparative Example 9 | 588 | 60 | 20 | 19.90 |
| Comparative Example 10 | 588 | 60 | 20 | 19.88 |
| Comparative Example 11 | 588 | 60 | 20 | 19.82 |

Table 8

| Examples and Comparative Examples | Properties of black filler | | |
|---|---|---|---|
| | Average major axial diameter (Average particle size) (µm) | Average minor axial diameter (µm) | Aspect ratio (-) |
| Example 15 | 0.33 | - | - |
| Example 16 | 0.19 | - | - |
| Example 17 | 0.12 | - | - |
| Example 18 | 0.30 | - | - |
| Example 19 | 0.24 | 0.031 | 7.7:1 |
| Example 20 | 0.33 | - | - |
| Example 21 | 0.19 | - | - |
| Example 22 | 0.12 | - | - |
| Example 23 | 0.30 | - | - |
| Example 24 | 0.24 | 0.032 | 7.5:1 |
| Example 25 | 0.33 | - | - |
| Example 26 | 0.33 | - | - |
| Comparative Example 5 | 0.32 | - | - |
| Comparative Example 6 | 0.32 | | |
| Comparative Example 7 | 0.33 | | |
| Comparative Example 8 | 0.32 | | |
| Comparative Example 9 | 0.32 | - | - |
| Comparative Example 10 | 0.32 | - | - |
| Comparative Example 11 | 0.33 | - | - |

Table 8 (continued)

| Examples and Comparative Examples | Properties of black filler | | |
|---|---|---|---|
| | Geometrical standard deviation value (-) | BET specific surface area value ($m^2/g$) | Mn content (wt. %) |
| Example 15 | 1.48 | 10.3 | 9.3 |
| Example 16 | 1.42 | 13.6 | 11.0 |
| Example 17 | 1.35 | 21.8 | - |
| Example 18 | 1.41 | 11.1 | - |
| Example 19 | 1.38 | 42.3 | - |
| Example 20 | 1.49 | 11.1 | 9.3 |
| Example 21 | 1.40 | 13.4 | 11.3 |
| Example 22 | 1.34 | 22.4 | - |
| Example 23 | 1.42 | 11.4 | - |
| Example 24 | 1.38 | 42.8 | - |
| Example 25 | 1.49 | 10.5 | 9.2 |
| Example 26 | 1.49 | 10.8 | 9.2 |
| Comparative Example 5 | - | 20.8 | 9.4 |
| Comparative Example 6 | | 19.3 | 9.3 |
| Comparative Example 7 | | 16.6 | 9.1 |
| Comparative Example 8 | | 17.4 | 9.3 |
| Comparative Example 9 | - | 18.4 | 9.4 |
| Comparative Example 10 | - | 18.1 | 9.3 |
| Comparative Example 11 | - | 16.9 | 9.3 |

Table 8 (continued)

| Examples and Comparative Examples | Properties of black filler | |
|---|---|---|
| | Volume resistivity value (Ω·cm) | Blackness (L* value) (-) |
| Example 15 | $9.8 \times 10^1$ | 16.9 |
| Example 16 | $3.3 \times 10^2$ | 17.5 |
| Example 17 | $4.3 \times 10^2$ | 18.8 |
| Example 18 | $8.3 \times 10^1$ | 17.9 |
| Example 19 | $4.8 \times 10^2$ | 18.0 |
| Example 20 | $9.6 \times 10^1$ | 17.6 |
| Example 21 | $6.9 \times 10^1$ | 17.3 |
| Example 22 | $5.3 \times 10^1$ | 18.2 |
| Example 23 | $6.8 \times 10^1$ | 18.6 |
| Example 24 | $8.9 \times 10^1$ | 18.0 |
| Example 25 | $3.9 \times 10^1$ | 17.3 |
| Example 26 | $2.8 \times 10^1$ | 17.4 |
| Comparative Example 5 | $3.8 \times 10^4$ | 18.6 |
| Comparative Example 6 | $2.6 \times 10^4$ | 18.8 |
| Comparative Example 7 | $7.5 \times 10^3$ | 18.7 |
| Comparative Example 8 | $3.9 \times 10^4$ | 19.2 |
| Comparative Example 9 | $4.2 \times 10^4$ | 17.1 |
| Comparative Example 10 | $4.3 \times 10^4$ | 17.1 |
| Comparative Example 11 | $6.9 \times 10^3$ | 17.0 |

Table 8 (continued)

| Examples and Comparative Examples | Properties of black filler | |
|---|---|---|
| | Myristic acid adsorption ($mg/m^2$) | Carbon black desorption percentage (%) |
| Example 15 | 0.27 | 7.9 |
| Example 16 | 0.26 | 6.8 |
| Example 17 | 0.24 | 7.5 |
| Example 18 | 0.24 | 7.8 |
| Example 19 | 0.25 | 6.6 |
| Example 20 | 0.23 | 4.6 |
| Example 21 | 0.21 | 4.2 |
| Example 22 | 0.20 | 3.4 |
| Example 23 | 0.23 | 4.0 |
| Example 24 | 0.21 | 3.8 |
| Example 25 | 0.29 | 9.2 |
| Example 26 | 0.27 | 9.8 |
| Comparative Example 5 | 0.41 | 38.1 |
| Comparative Example 6 | 0.40 | 31.8 |
| Comparative Example 7 | 0.36 | 23.6 |
| Comparative Example 8 | 0.39 | 29.8 |
| Comparative Example 9 | 0.35 | 53.7 |
| Comparative Example 10 | 0.35 | 44.5 |
| Comparative Example 11 | 0.33 | 21.2 |

Table 9

| Magnetic particles | Kind of magnetic particles | Properties of magnetic particles | |
|---|---|---|---|
| | | Average major axial diameter (µm) | Average minor axial diameter (µm) |
| Magnetic particles 1 | Co-coated magnetite particles | 0.181 | 0.0250 |
| Magnetic particles 2 | Magnetic metal particles | 0.133 | 0.0188 |
| Magnetic particles 3 | Ba ferrite particles | 0.052 | 0.0159 |

Table 9 (continued)

| Magnetic particles | Properties of magnetic particles | |
|---|---|---|
| | Geometrical standard deviation value (-) | Aspect ratio (-) |
| Magnetic particles 1 | 1.36 | 7.2:1 |
| Magnetic particles 2 | 1.37 | 7.1:1 |
| Magnetic particles 3 | 1.21 | 3.3:1 |

Table 9 (continued)

| Magnetic particles | Properties of magnetic particles | | | | |
|---|---|---|---|---|---|
| | BET specific surface area Value ($m^2/g$) | Coercive force value | | Saturation magnetization value | |
| | | (kA/m) | (Oe) | ($Am^2/kg$) | (emu/g) |
| Magnetic particles 1 | 41.7 | 75.8 | 953 | 78.3 | 78.3 |
| Magnetic particles 2 | 53.4 | 175.9 | 2,210 | 135.2 | 135.2 |
| Magnetic particles 3 | 58.2 | 199.0 | 2,500 | 52.6 | 52.6 |

Table 10

| Reference tape | Production conditions of reference tape | |
|---|---|---|
| | Magnetic particles | |
| | Kind | Amount blended (part by weight) |
| Reference tape 1 | Particles obtained in Example 1 | 100.0 |
| Reference tape 2 | Magnetic particles 1 | 100.0 |
| Reference tape 3 | Magnetic particles 2 | 100.0 |
| Reference tape 4 | Magnetic particles 3 | 100.0 |

Table 10 (continued)

| Reference tape | Production conditions of reference tape | | Properties of magnetic coating composition |
|---|---|---|---|
| | Filler | | |
| | Kind | Amount blended (part by weight) | Viscosity of coating composition (cP) |
| Reference tape 1 | $Al_2O_3$ | 7.0 | 2,623 |
| Reference tape 2 | $Al_2O_3$ | 7.0 | 2,511 |
| Reference tape 3 | $Al_2O_3$ | 7.0 | 8,795 |
| Reference tape 4 | $Al_2O_3$ | 7.0 | 6,418 |

Table 11

| Reference tape | Properties of reference tape | | | |
|---|---|---|---|---|
| | Coercive force value | | Squareness | Gloss |
| | (kA/m) | (Oe) | (Br/Bm) | (%) |
| Reference tape 1 | 59.3 | 745 | 0.81 | 135 |
| Reference tape 2 | 78.9 | 991 | 0.83 | 147 |
| Reference tape 3 | 180.5 | 2,268 | 0.82 | 180 |
| Reference tape 4 | 196.4 | 2,468 | 0.80 | 156 |

Table 11 (continued)

| Reference tape | Properties of reference tape | | | |
|---|---|---|---|---|
| | Surface roughness Ra (nm) | Linear absorption ($\mu m^{-1}$) | Electromagnetic performance | |
| | | | 4 MHz (dB) | 7 MHz (dB) |
| Reference tape 1 | 12.4 | 1.08 | ±0 | - |
| Reference tape 2 | 11.9 | 1.06 | ±0 | - |
| Reference tape 3 | 10.8 | 1.13 | - | ±0 |
| Reference tape 4 | 12.3 | 1.12 | - | ±0 |

Table 11 (continued)

| Reference tape | Properties of reference tape | |
|---|---|---|
| | Durability | |
| | Running durability time (min.) | Head contamination (head cleaning property) |
| Reference tape 1 | 23.1 | A |
| Reference tape 2 | 22.6 | A |
| Reference tape 3 | 22.8 | B |
| Reference tape 4 | 22.0 | B |

Table 11 (continued)

| Reference tape | Properties of reference tape | |
|---|---|---|
| | Friction coefficient (-) | Surface electrical resistivity value (Ω/cm2) |
| Reference tape 1 | 0.31 | $2.4 \times 10^{10}$ |
| Reference tape 2 | 0.33 | $4.8 \times 10^{10}$ |
| Reference tape 3 | 0.36 | $3.2 \times 10^{10}$ |
| Reference tape 4 | 0.34 | $8.3 \times 10^{10}$ |

Table 12

| Examples and Comparative Examples | Production conditions of magnetic recording medium | |
|---|---|---|
| | Magnetic particles | |
| | Kind | Amount blended (part by weight) |
| Example 27 | Magnetic particles 1 | 100.0 |
| Example 28 | Magnetic particles 1 | 100.0 |
| Example 29 | Magnetic particles 2 | 100.0 |
| Example 30 | Magnetic particles 2 | 100.0 |
| Example 31 | Magnetic particles 2 | 100.0 |
| Example 32 | Magnetic particles 2 | 100.0 |
| Example 33 | Magnetic particles 2 | 100.0 |
| Example 34 | Magnetic particles 2 | 100.0 |
| Example 35 | Magnetic particles 2 | 100.0 |
| Example 36 | Magnetic particles 2 | 100.0 |
| Example 37 | Magnetic particles 3 | 100.0 |
| Example 38 | Magnetic particles 3 | 100.0 |
| Comparative Example 12 | Magnetic particles 1 | 100.0 |
| Comparative Example 13 | Magnetic particles 1 | 100.0 |
| Comparative Example 14 | Magnetic particles 2 | 100.0 |
| Comparative Example 15 | Magnetic particles 2 | 100.0 |
| Comparative Example 16 | Magnetic particles 2 | 100.0 |
| Comparative Example 17 | Magnetic particles 2 | 100.0 |
| Comparative Example 18 | Magnetic particles 2 | 100.0 |

Table 12 (continued)

| Examples and Comparative Examples | Production conditions of magnetic recording medium | | Properties of magnetic coating composition |
|---|---|---|---|
| | Filler | | |
| | Kind | Amount blended (part by weight) | Viscosity of coating composition (cP) |
| Example 27 | Example 15 | 7.0 | 2,340 |
| Example 28 | Example 16 | 7.0 | 2,560 |
| Example 29 | Example 17 | 10.0 | 6,016 |
| Example 30 | Example 18 | 14.0 | 5,888 |
| Example 31 | Example 19 | 21.0 | 5,760 |
| Example 32 | Example 20 | 7.0 | 6,400 |
| Example 33 | Example 21 | 7.0 | 5,863 |
| Example 34 | Example 22 | 15.0 | 7,680 |
| Example 35 | Example 23 | 10.0 | 6,693 |
| Example 36 | Example 24 | 7.0 | 5,863 |
| Example 37 | Example 25 | 7.0 | 6,272 |
| Example 38 | Example 26 | 7.0 | 6,016 |
| Comparative Example 12 | Comparative Example 5 | 7.0 | 2,384 |
| Comparative Example 13 | Comparative Example 6 | 7.0 | 2,560 |
| Comparative Example 14 | Comparative Example 7 | 7.0 | 6,246 |
| Comparative Example 15 | Comparative Example 8 | 7.0 | 5,832 |
| Comparative Example 16 | Comparative Example 9 | 7.0 | 6,013 |
| Comparative Example 17 | Comparative Example 10 | 7.0 | 5,682 |
| Comparative Example 18 | Comparative Example 11 | 7.0 | 5,812 |

Table 13

| Examples | Reference tape | Properties of magnetic recording medium | | | |
|---|---|---|---|---|---|
| | | Coercive force value | | Squareness (-) | Gloss (%) |
| | | (kA/m) | (Oe) | | |
| Example 27 | Reference tape 2 | 79.0 | 993 | 0.90 | 186 |
| Example 28 | Reference tape 2 | 78.8 | 990 | 0.91 | 183 |
| Example 29 | Reference tape 3 | 180.9 | 2,273 | 0.88 | 221 |
| Example 30 | Reference tape 3 | 180.7 | 2,271 | 0.88 | 228 |
| Example 31 | Reference tape 3 | 181.5 | 2,281 | 0.89 | 231 |
| Example 32 | Reference tape 3 | 181.1 | 2,276 | 0.88 | 235 |
| Example 33 | Reference tape 3 | 181.6 | 2,282 | 0.89 | 235 |
| Example 34 | Reference tape 3 | 180.9 | 2,273 | 0.89 | 230 |
| Example 35 | Reference tape 3 | 181.1 | 2,276 | 0.90 | 241 |
| Example 36 | Reference tape 3 | 181.5 | 2,281 | 0.88 | 218 |
| Example 37 | Reference tape 4 | 195.7 | 2,459 | 0.88 | 193 |
| Example 38 | Reference tape 4 | 196.5 | 2,469 | 0.88 | 188 |

Table 13 (continued)

| Examples | Properties of magnetic recording medium | | | |
|---|---|---|---|---|
| | Surface roughness Ra (nm) | Linear absorption ($\mu m^{-1}$) | Electromagnetic performance | |
| | | | 4 MHz (dB) | 7 MHz (dB) |
| Example 27 | 8.0 | 1.36 | +2.0 | - |
| Example 28 | 7.6 | 1.38 | +2.3 | - |
| Example 29 | 7.8 | 1.41 | - | +2.0 |
| Example 30 | 7.6 | 1.46 | - | +2.5 |
| Example 31 | 7.2 | 1.43 | - | +2.4 |
| Example 32 | 6.8 | 1.44 | - | +2.4 |
| Example 33 | 6.4 | 1.46 | - | +2.2 |
| Example 34 | 7.2 | 1.51 | - | +2.2 |
| Example 35 | 6.2 | 1.48 | - | +2.3 |
| Example 36 | 7.4 | 1.44 | - | +2.5 |
| Example 37 | 7.8 | 1.36 | - | +2.2 |
| Example 38 | 8.3 | 1.35 | - | +2.1 |

Table 13 (continued)

| Examples | Properties of magnetic recording medium | |
|---|---|---|
| | Durability | |
| | Running durability time (min.) | Head contamination (head cleaning property) |
| Example 27 | ≥30 | A |
| Example 28 | ≥30 | A |
| Example 29 | 27.1 | A |
| Example 30 | 29.6 | A |
| Example 31 | 27.8 | A |
| Example 32 | ≥30 | A |
| Example 33 | ≥30 | A |
| Example 34 | ≥30 | A |
| Example 35 | 28.5 | A |
| Example 36 | 29.2 | B |
| Example 37 | 25.9 | B |
| Example 38 | 26.8 | B |

Table 13 (continued)

| Examples | Properties of magnetic recording medium | |
|---|---|---|
| | Friction coefficient (-) | Surface electrical resistivity value ($\Omega/cm^2$) |
| Example 27 | 0.25 | $5.8 \times 10^7$ |
| Example 28 | 0.20 | $5.4 \times 10^7$ |
| Example 29 | 0.22 | $8.8 \times 10^7$ |
| Example 30 | 0.23 | $7.6 \times 10^7$ |
| Example 31 | 0.25 | $5.4 \times 10^7$ |
| Example 32 | 0.24 | $4.3 \times 10^7$ |
| Example 33 | 0.20 | $3.6 \times 10^7$ |
| Example 34 | 0.21 | $7.4 \times 10^7$ |
| Example 35 | 0.21 | $4.8 \times 10^7$ |
| Example 36 | 0.24 | $7.9 \times 10^7$ |
| Example 37 | 0.30 | $2.6 \times 10^7$ |
| Example 38 | 0.29 | $1.8 \times 10^7$ |

Table 14

| Comparative Examples | Reference tape | Properties of magnetic recording medium | | | |
|---|---|---|---|---|---|
| | | Coercive force value | | Squareness (-) | Gloss (%) |
| | | (kA/m) | (Oe) | | |
| Comparative Example 12 | Reference tape 2 | 78.2 | 983 | 0.85 | 136 |
| Comparative Example 13 | Reference tape 2 | 77.7 | 976 | 0.83 | 140 |
| Comparative Example 14 | Reference tape 3 | 180.5 | 2,268 | 0.85 | 172 |
| Comparative Example 15 | Reference tape 3 | 180.7 | 2,271 | 0.84 | 165 |
| Comparative Example 16 | Reference tape 3 | 180.6 | 2,270 | 0.84 | 160 |
| Comparative Example 17 | Reference tape 3 | 180.4 | 2,267 | 0.85 | 161 |
| Comparative Example 18 | Reference tape 3 | 180.2 | 2,265 | 0.86 | 178 |

Table 14 (continued)

| Comparative Examples | Properties of magnetic recording medium | | | |
|---|---|---|---|---|
| | Surface roughness Ra (nm) | Linear absorption ($\mu m^{-1}$) | Electromagnetic performance | |
| | | | 4 MHz (dB) | 7 MHz (dB) |
| Comparative Example 12 | 13.2 | 1.13 | +0.5 | - |
| Comparative Example 13 | 12.1 | 1.18 | +0.2 | - |
| Comparative Example 14 | 10.6 | 1.20 | - | -0.3 |
| Comparative Example 15 | 14.2 | 1.19 | - | -0.3 |
| Comparative Example 16 | 13.2 | 1.21 | - | -0.6 |
| Comparative Example 17 | 12.6 | 1.21 | - | -0.3 |
| Comparative Example 18 | 10.8 | 1.24 | - | ±0.0 |

Table 14 (continued)

| Comparative Examples | Properties of magnetic recording medium | |
| --- | --- | --- |
| | Durability | |
| | Running durability time (min.) | Head contamination (head cleaning property) (-) |
| Comparative Example 12 | 13.4 | C |
| Comparative Example 13 | 12.3 | C |
| Comparative Example 14 | 14.5 | C |
| Comparative Example 15 | 13.8 | C |
| Comparative Example 16 | 10.4 | D |
| Comparative Example 17 | 11.8 | C |
| Comparative Example 18 | 13.6 | C |

Table 14 (continued)

| Comparative Examples | Properties of magnetic recording medium | |
|---|---|---|
| | Friction coefficient (-) | Surface electrical resistivity value ($\Omega/cm^2$) |
| Comparative Example 12 | 0.35 | $5.3 \times 10^{10}$ |
| Comparative Example 13 | 0.34 | $4.8 \times 10^{10}$ |
| Comparative Example 14 | 0.32 | $7.6 \times 10^{9}$ |
| Comparative Example 15 | 0.33 | $2.4 \times 10^{10}$ |
| Comparative Example 16 | 0.37 | $2.8 \times 10^{10}$ |
| Comparative Example 17 | 0.36 | $1.6 \times 10^{10}$ |
| Comparative Example 18 | 0.34 | $6.8 \times 10^{9}$ |

Table 15

| Examples | Kind of core particles | Production of composite particles | |
|---|---|---|---|
| | | Coating step with alkoxysilane, polysiloxane or silicon compound | |
| | | Additives | |
| | | Kind | Amount added (part by weight) |
| Example 41 | Core particles 1 | Methyl triethoxysilane | 1.0 |
| Example 42 | Core particles 2 | Methyl trimethoxysilane | 2.0 |
| Example 43 | Core particles 3 | Dimethyl dimethoxysilane | 1.5 |
| Example 44 | Core particles 4 | Phenyl triethoxysilane | 2.0 |
| Example 45 | Core particles 5 | Isobutyl trimethoxysilane | 1.0 |
| Example 46 | Core particles 6 | Methyl triethoxysilane | 1.5 |
| Example 47 | Core particles 7 | Methyl trimethoxysilane | 1.5 |
| Example 48 | Core particles 8 | TSF484 | 1.0 |
| Example 49 | Core particles 9 | BYK-080 | 1.0 |
| Example 50 | Core particles 10 | TSF4770 | 1.5 |
| Example 51 | Core particles 1 | Methyl triethoxysilane | 1.5 |
| Example 52 | Core particles 1 | Methyl triethoxysilane | 1.5 |

Table 15 (continued)

| Examples | Production of composite particles | | | |
|---|---|---|---|---|
| | Coating step with alkoxysilane, polysiloxane or silicon compound | | | |
| | Edge runner treatment | | | Coating amount (calculated as Si) (wt. %) |
| | Linear load | | Time (min.) | |
| | (N/cm) | (Kg/cm) | | |
| Example 41 | 392 | 40 | 30 | 0.15 |
| Example 42 | 441 | 45 | 30 | 0.39 |
| Example 43 | 735 | 75 | 30 | 0.21 |
| Example 44 | 588 | 60 | 20 | 0.13 |
| Example 45 | 588 | 60 | 30 | 0.22 |
| Example 46 | 588 | 60 | 20 | 0.23 |
| Example 47 | 392 | 40 | 45 | 0.29 |
| Example 48 | 588 | 60 | 20 | 0.65 |
| Example 49 | 735 | 75 | 20 | 0.36 |
| Example 50 | 441 | 45 | 35 | 0.34 |
| Example 51 | 392 | 40 | 25 | 0.22 |
| Example 52 | 735 | 75 | 20 | 0.23 |

Table 15 (continued)

| Examples | Production of composite particles | |
|---|---|---|
| | Adhesion step with carbon black | |
| | Carbon black | |
| | Kind | Amount added (part by weight) |
| Example 41 | A | 15.0 |
| Example 42 | A | 25.0 |
| Example 43 | B | 7.5 |
| Example 44 | B | 17.5 |
| Example 45 | C | 10.0 |
| Example 46 | C | 20.0 |
| Example 47 | D | 10.0 |
| Example 48 | D | 15.0 |
| Example 49 | B | 12.5 |
| Example 50 | B | 15.0 |
| Example 51 | E | 15.0 |
| Example 52 | F | 15.0 |

Table 15 (continued)

| Examples | Production of composite particles | | | |
|---|---|---|---|---|
| | Adhesion step with carbon black | | | |
| | Edge runner treatment | | | Amount adhered (calculated as C) (wt. %) |
| | Linear load | | Time (min.) | |
| | (N/cm) | (Kg/cm) | | |
| Example 41 | 588 | 60 | 20 | 13.01 |
| Example 42 | 588 | 60 | 30 | 19.88 |
| Example 43 | 392 | 40 | 30 | 6.92 |
| Example 44 | 735 | 75 | 25 | 14.69 |
| Example 45 | 392 | 40 | 45 | 9.05 |
| Example 46 | 294 | 30 | 40 | 16.48 |
| Example 47 | 735 | 75 | 30 | 9.00 |
| Example 48 | 588 | 60 | 25 | 12.99 |
| Example 49 | 588 | 60 | 20 | 11.04 |
| Example 50 | 294 | 30 | 20 | 12.96 |
| Example 51 | 588 | 60 | 20 | 13.00 |
| Example 52 | 588 | 60 | 30 | 12.96 |

Table 16

| Examples | Properties of composite particles | | |
|---|---|---|---|
| | Average major axial diameter (Average particle size) (µm) | Average minor axial diameter (µm) | Aspect ratio (-) |
| Example 41 | 0.32 | - | - |
| Example 42 | 0.19 | - | - |
| Example 43 | 0.11 | - | - |
| Example 44 | 0.29 | - | - |
| Example 45 | 0.23 | 0.029 | 7.9:1 |
| Example 46 | 0.32 | - | - |
| Example 47 | 0.18 | - | - |
| Example 48 | 0.12 | - | - |
| Example 49 | 0.29 | - | - |
| Example 50 | 0.24 | 0.030 | 8.0:1 |
| Example 51 | 0.32 | - | - |
| Example 52 | 0.32 | - | - |

Table 16 (continued)

| Examples | Properties of composite particles | | |
|---|---|---|---|
| | Geometrical standard deviation value (-) | BET specific surface area value ($m^2/g$) | Mn content (wt. %) |
| Example 41 | 1.48 | 7.4 | 11.3 |
| Example 42 | 1.42 | 13.3 | 12.3 |
| Example 43 | 1.37 | 17.6 | - |
| Example 44 | 1.41 | 7.6 | - |
| Example 45 | 1.37 | 38.9 | - |
| Example 46 | 1.49 | 8.8 | 10.7 |
| Example 47 | 1.41 | 10.0 | 13.9 |
| Example 48 | 1.35 | 18.7 | - |
| Example 49 | 1.40 | 7.5 | - |
| Example 50 | 1.38 | 40.1 | - |
| Example 51 | 1.49 | 7.6 | 11.2 |
| Example 52 | 1.49 | 9.2 | 11.2 |

Table 16 (continued)

| Examples | Properties of composite particles | |
|---|---|---|
| | Volume resistivity value (Ω·cm) | Blackness (L* value) (-) |
| Example 41 | $4.0 \times 10^3$ | 17.4 |
| Example 42 | $5.3 \times 10^3$ | 17.9 |
| Example 43 | $8.4 \times 10^3$ | 19.6 |
| Example 44 | $5.6 \times 10^3$ | 18.4 |
| Example 45 | $7.9 \times 10^3$ | 18.3 |
| Example 46 | $3.5 \times 10^3$ | 17.3 |
| Example 47 | $6.0 \times 10^3$ | 18.0 |
| Example 48 | $4.4 \times 10^3$ | 19.2 |
| Example 49 | $5.1 \times 10^3$ | 18.6 |
| Example 50 | $5.8 \times 10^3$ | 18.0 |
| Example 51 | $1.6 \times 10^3$ | 17.4 |
| Example 52 | $1.1 \times 10^3$ | 17.4 |

Table 16 (continued)

| Examples | Properties of composite particles | |
|---|---|---|
| | Myristic acid adsorption ($mg/m^2$) | Carbon black desorption percentage (%) |
| Example 41 | 0.39 | 8.1 |
| Example 42 | 0.36 | 8.6 |
| Example 43 | 0.37 | 7.9 |
| Example 44 | 0.37 | 8.2 |
| Example 45 | 0.36 | 7.8 |
| Example 46 | 0.34 | 4.7 |
| Example 47 | 0.35 | 3.8 |
| Example 48 | 0.34 | 4.6 |
| Example 49 | 0.34 | 4.5 |
| Example 50 | 0.33 | 4.1 |
| Example 51 | 0.43 | 9.8 |
| Example 52 | 0.40 | 9.9 |

Table 17

| Examples | Kind of composite particles | Production of black filler | |
|---|---|---|---|
| | | Treating step with dimethyl polysiloxane or alkoxysilane | |
| | | Additives | |
| | | Kind | Amount added (part by weight) |
| Example 53 | Example 41 | Dimethylpolysiloxane | 2.0 |
| Example 54 | Example 42 | Dimethylpolysiloxane | 1.0 |
| Example 55 | Example 43 | Dimethylpolysiloxane | 1.5 |
| Example 56 | Example 44 | Dimethylpolysiloxane | 1.5 |
| Example 57 | Example 45 | Dimethylpolysiloxane | 2.0 |
| Example 58 | Example 46 | Dimethylpolysiloxane | 1.0 |
| Example 59 | Example 47 | Dimethylpolysiloxane | 1.5 |
| Example 60 | Example 48 | Dimethylpolysiloxane | 1.5 |
| Example 61 | Example 49 | Dimethylpolysiloxane | 1.0 |
| Example 62 | Example 50 | Dimethylpolysiloxane | 2.0 |
| Example 63 | Example 51 | Dimethylpolysiloxane | 2.0 |
| Example 64 | Example 52 | Dimethylpolysiloxane | 2.0 |

Table 17 (continued)

| Examples | Production of black filler | | | |
|---|---|---|---|---|
| | Treating step with dimethyl polysiloxane or alkoxysilane | | | |
| | Edge runner treatment | | | Coating amount (calculated as Si) (wt. %) |
| | Linear load | | Time (min.) | |
| | (N/cm) | (Kg/cm) | | |
| Example 53 | 588 | 60 | 30 | 0.70 |
| Example 54 | 392 | 40 | 20 | 0.30 |
| Example 55 | 735 | 75 | 30 | 0.52 |
| Example 56 | 441 | 45 | 45 | 0.53 |
| Example 57 | 588 | 60 | 30 | 0.71 |
| Example 58 | 294 | 30 | 20 | 0.31 |
| Example 59 | 735 | 75 | 25 | 0.51 |
| Example 60 | 294 | 30 | 40 | 0.50 |
| Example 61 | 441 | 45 | 20 | 0.30 |
| Example 62 | 588 | 60 | 20 | 0.71 |
| Example 63 | 588 | 60 | 20 | 0.70 |
| Example 64 | 588 | 60 | 30 | 0.70 |

Table 17 (continued)

| Examples | Production of black filler | |
|---|---|---|
| | Adhesion step with carbon black | |
| | Carbon black | |
| | Kind | Amount added (part by weight) |
| Example 53 | B | 25.0 |
| Example 54 | C | 10.0 |
| Example 55 | D | 25.0 |
| Example 56 | B | 17.5 |
| Example 57 | C | 25.0 |
| Example 58 | D | 13.0 |
| Example 59 | B | 22.0 |
| Example 60 | C | 20.0 |
| Example 61 | D | 20.0 |
| Example 62 | B | 20.0 |
| Example 63 | E | 20.0 |
| Example 64 | F | 20.0 |

Table 17 (continued)

| Examples | Production of black filler | | | |
|---|---|---|---|---|
| | Adhesion step with carbon black | | | |
| | Edge runner treatment | | | Amount adhered (calculated as C) (wt. %) |
| | Linear load | | Time (min.) | |
| | (N/cm) | (Kg/cm) | | |
| Example 53 | 735 | 75 | 30 | 19.86 |
| Example 54 | 588 | 60 | 30 | 9.00 |
| Example 55 | 441 | 45 | 45 | 19.90 |
| Example 56 | 588 | 60 | 20 | 14.81 |
| Example 57 | 588 | 60 | 30 | 18.88 |
| Example 58 | 294 | 30 | 30 | 11.44 |
| Example 59 | 588 | 60 | 40 | 17.89 |
| Example 60 | 392 | 40 | 25 | 16.57 |
| Example 61 | 735 | 75 | 20 | 16.57 |
| Example 62 | 294 | 30 | 45 | 16.60 |
| Example 63 | 588 | 60 | 20 | 16.55 |
| Example 64 | 441 | 45 | 20 | 16.52 |

Table 18

| Examples | Properties of black filler | | |
|---|---|---|---|
| | Average major axial diameter (Average particle size) (μm) | Average minor axial diameter (μm) | Aspect ratio (-) |
| Example 53 | 0.33 | - | - |
| Example 54 | 0.19 | - | - |
| Example 55 | 0.12 | - | - |
| Example 56 | 0.30 | - | - |
| Example 57 | 0.24 | 0.031 | 7.7:1 |
| Example 58 | 0.33 | - | - |
| Example 59 | 0.19 | - | - |
| Example 60 | 0.12 | - | - |
| Example 61 | 0.30 | - | - |
| Example 62 | 0.24 | 0.032 | 7.5:1 |
| Example 63 | 0.33 | - | - |
| Example 64 | 0.33 | - | - |

Table 18 (continued)

| Examples | Properties of black filler | | |
|---|---|---|---|
| | Geometrical standard deviation value (-) | BET specific surface area value ($m^2/g$) | Mn content (wt. %) |
| Example 53 | 1.48 | 10.6 | 8.9 |
| Example 54 | 1.42 | 14.1 | 11.1 |
| Example 55 | 1.36 | 21.5 | - |
| Example 56 | 1.41 | 10.4 | - |
| Example 57 | 1.38 | 42.2 | - |
| Example 58 | 1.48 | 10.8 | 9.4 |
| Example 59 | 1.40 | 12.9 | 11.3 |
| Example 60 | 1.35 | 21.6 | - |
| Example 61 | 1.41 | 10.9 | - |
| Example 62 | 1.38 | 43.0 | - |
| Example 63 | 1.48 | 10.4 | 9.2 |
| Example 64 | 1.49 | 12.8 | 9.2 |

Table 18 (continued)

| Examples | Properties of black filler | |
|---|---|---|
| | Volume resistivity value (Ω•cm) | Blackness (L* value) (-) |
| Example 53 | $9.2 \times 10^1$ | 17.0 |
| Example 54 | $3.4 \times 10^2$ | 17.6 |
| Example 55 | $4.5 \times 10^2$ | 18.9 |
| Example 56 | $8.6 \times 10^1$ | 18.0 |
| Example 57 | $4.2 \times 10^2$ | 17.8 |
| Example 58 | $9.4 \times 10^1$ | 17.2 |
| Example 59 | $7.3 \times 10^1$ | 17.6 |
| Example 60 | $4.8 \times 10^1$ | 18.5 |
| Example 61 | $6.9 \times 10^1$ | 18.2 |
| Example 62 | $9.7 \times 10^1$ | 17.6 |
| Example 63 | $3.7 \times 10^1$ | 17.3 |
| Example 64 | $2.6 \times 10^1$ | 17.3 |

Table 18 (continued)

| Examples | Properties of black filler | |
|---|---|---|
| | Myristic acid adsorption ($mg/m^2$) | Carbon black desorption percentage (%) |
| Example 53 | 0.25 | 8.4 |
| Example 54 | 0.26 | 6.6 |
| Example 55 | 0.26 | 8.2 |
| Example 56 | 0.26 | 7.8 |
| Example 57 | 0.24 | 7.9 |
| Example 58 | 0.23 | 3.5 |
| Example 59 | 0.22 | 4.3 |
| Example 60 | 0.20 | 4.1 |
| Example 61 | 0.23 | 4.0 |
| Example 62 | 0.21 | 4.0 |
| Example 63 | 0.29 | 9.6 |
| Example 64 | 0.27 | 9.8 |

Table 19

| Kind of non-magnetic particles | Properties of non-magnetic particles for non-magnetic undercoat layer | |
|---|---|---|
| | Kind | Particle shape |
| Non-magnetic particles 1 | Hematite particles | Spindle-shaped |
| Non-magnetic particles 2 | Goethite particles | Acicular |
| Non-magnetic particles 3 | Hematite particles | Acicular |
| Non-magnetic particles 4 | Hematite particles | Acicular |
| Non-magnetic particles 5 | Hematite particles | Acicular |
| Non-magnetic particles 6 | Goethite particles | Acicular |

Table 19 (continued)

| Kind of non-magnetic particles | Properties of non-magnetic particles for non-magnetic undercoat layer | | |
|---|---|---|---|
| | Average major axial diameter (μm) | Average minor axial diameter (μm) | Aspect ratio (-) |
| Non-magnetic particles 1 | 0.187 | 0.0240 | 7.8:1 |
| Non-magnetic particles 2 | 0.240 | 0.0272 | 8.8:1 |
| Non-magnetic particles 3 | 0.143 | 0.0210 | 6.8:1 |
| Non-magnetic particles 4 | 0.115 | 0.0179 | 6.42:1 |
| Non-magnetic particles 5 | 0.143 | 0.0211 | 6.8:1 |
| Non-magnetic particles 6 | 0.240 | 0.0273 | 8.8:1 |

Table 19 (continued)

| Kind of non-magnetic particles | Properties of non-magnetic particles for non-magnetic undercoat layer | |
|---|---|---|
| | Geometrical standard deviation value (-) | BET specific surface area value ($m^2/g$) |
| Non-magnetic particles 1 | 1.33 | 43.3 |
| Non-magnetic particles 2 | 1.37 | 86.3 |
| Non-magnetic particles 3 | 1.37 | 54.9 |
| Non-magnetic particles 4 | 1.35 | 58.3 |
| Non-magnetic particles 5 | 1.37 | 55.6 |
| Non-magnetic particles 6 | 1.35 | 88.1 |

Table 19 (continued)

| Kind of non-magnetic particles | Properties of non-magnetic particles for non-magnetic undercoat layer | | |
|---|---|---|---|
| | Coating amount of Al (wt. %) | Al content (wt. %) | Amount of carbon black adhered (calculated as C) (wt. %) |
| Non-magnetic particles 1 | - | - | - |
| Non-magnetic particles 2 | - | - | - |
| Non-magnetic particles 3 | 0.98 | - | - |
| Non-magnetic particles 4 | - | 0.67 | - |
| Non-magnetic particles 5 | - | - | 4.75 |
| Non-magnetic particles 6 | - | - | 4.81 |

Table 19 (continued)

| Kind of non-magnetic particles | Properties of non-magnetic particles for non-magnetic undercoat layer | |
|---|---|---|
| | Volume resistivity value (Ω·cm) | Blackness (L* value) (-) |
| Non-magnetic particles 1 | $8.6 \times 10^{8}$ | 32.6 |
| Non-magnetic particles 2 | $9.6 \times 10^{7}$ | 34.6 |
| Non-magnetic particles 3 | $4.6 \times 10^{8}$ | 28.4 |
| Non-magnetic particles 4 | $3.2 \times 10^{8}$ | 29.6 |
| Non-magnetic particles 5 | $3.6 \times 10^{4}$ | 18.5 |
| Non-magnetic particles 6 | $5.8 \times 10^{3}$ | 20.3 |

Table 20

| Undercoat layer | Production of non-magnetic coating composition | | Properties of coating composition |
|---|---|---|---|
| | Kind of non-magnetic particles | Weight ratio of particles to resin (-) | Viscosity (cP) |
| Undercoat layer 1 | Non-magnetic particles 1 | 5.0:1 | 310 |
| Undercoat layer 2 | Non-magnetic particles 2 | 5.0:1 | 1,139 |
| Undercoat layer 3 | Non-magnetic particles 3 | 5.0:1 | 448 |
| Undercoat layer 4 | Non-magnetic particles 4 | 5.0:1 | 403 |
| Undercoat layer 5 | Non-magnetic particles 5 | 5.0:1 | 399 |
| Undercoat layer 6 | Non-magnetic particles 6 | 5.0:1 | 1,336 |

Table 20 (continued)

| Undercoat layer | Properties of non-magnetic undercoat layer | | |
|---|---|---|---|
| | Thickness (μm) | Gloss (%) | Surface roughness Ra (nm) |
| Undercoat layer 1 | 3.4 | 193 | 8.2 |
| Undercoat layer 2 | 3.5 | 180 | 12.0 |
| Undercoat layer 3 | 3.4 | 205 | 6.3 |
| Undercoat layer 4 | 3.4 | 211 | 6.2 |
| Undercoat layer 5 | 3.4 | 199 | 7.1 |
| Undercoat layer 6 | 3.5 | 185 | 9.0 |

Table 20 (continued)

| Undercoat layer | Properties of non-magnetic undercoat layer | |
|---|---|---|
| | Linear absorption ($\mu m^{-1}$) | Surface electrical resistivity value ($\Omega/cm^2$) |
| Undercoat layer 1 | 1.01 | $1.1 \times 10^{14}$ |
| Undercoat layer 2 | 0.79 | $2.1 \times 10^{13}$ |
| Undercoat layer 3 | 1.01 | $3.5 \times 10^{13}$ |
| Undercoat layer 4 | 0.98 | $3.6 \times 10^{13}$ |
| Undercoat layer 5 | 1.52 | $4.1 \times 10^{9}$ |
| Undercoat layer 6 | 1.46 | $2.3 \times 10^{10}$ |

Table 21

| Reference tape | Production conditions of reference tape | |
|---|---|---|
| | Magnetic particles | |
| | Kind | Amount blended (part by weight) |
| Reference tape 5 | Particles obtained in Example 1 | 100.0 |
| Reference tape 6 | Magnetic particles 1 | 100.0 |
| Reference tape 7 | Magnetic particles 2 | 100.0 |
| Reference tape 8 | Magnetic particles 3 | 100.0 |

Table 21 (continued)

| Reference tape | Production conditions of reference tape | | Properties of magnetic coating composition |
|---|---|---|---|
| | Filler | | |
| | Kind | Amount blended (part by weight) | Viscosity of coating composition (cP) |
| Reference tape 5 | $Al_2O_3$ | 7.0 | 2,623 |
| Reference tape 6 | $Al_2O_3$ | 7.0 | 2,511 |
| Reference tape 7 | $Al_2O_3$ | 7.0 | 8,795 |
| Reference tape 8 | $Al_2O_3$ | 7.0 | 6,418 |

Table 22

| Reference tape | Properties of reference tape | | | |
|---|---|---|---|---|
| | Coercive force value | | Squareness | Gloss |
| | (kA/m) | (Oe) | (-) | (%) |
| Reference tape 5 | 60.0 | 754 | 0.82 | 136 |
| Reference tape 6 | 79.7 | 1,001 | 0.83 | 147 |
| Reference tape 7 | 178.7 | 2,246 | 0.82 | 180 |
| Reference tape 8 | 197.4 | 2,480 | 0.80 | 157 |

Table 22 (continued)

| Reference tape | Properties of reference tape | | | |
|---|---|---|---|---|
| | Surface roughness Ra (nm) | Linear absorption ($\mu m^{-1}$) | Electromagnetic performance | |
| | | | 4 MHz (dB) | 7 MHz (dB) |
| Reference tape 5 | 12.5 | 1.11 | ±0 | - |
| Reference tape 6 | 11.9 | 1.08 | ±0 | - |
| Reference tape 7 | 10.6 | 1.17 | - | ±0 |
| Reference tape 8 | 12.0 | 1.10 | - | ±0 |

Table 22 (continued)

| Reference tape | Properties of reference tape | |
|---|---|---|
| | Durability | |
| | Running durability time (min.) | Head contamination (head cleaning property) |
| Reference tape 5 | 23.5 | A |
| Reference tape 6 | 22.0 | A |
| Reference tape 7 | 20.6 | B |
| Reference tape 8 | 21.3 | B |

Table 22 (continued)

| Reference tape | Properties of reference tape | |
|---|---|---|
| | Friction coefficient (-) | Surface electrical resistivity value ($\Omega/cm^2$) |
| Reference tape 5 | 0.32 | $1.6 \times 10^{10}$ |
| Reference tape 6 | 0.32 | $4.0 \times 10^{10}$ |
| Reference tape 7 | 0.35 | $3.8 \times 10^{10}$ |
| Reference tape 8 | 0.40 | $7.1 \times 10^{10}$ |

Table 23

| Examples and Comparative Examples | Production conditions of magnetic recording medium |
|---|---|
| | Undercoat layer |
| | Kind |
| Example 65 | Undercoat layer 1 |
| Example 66 | Undercoat layer 1 |
| Example 67 | Undercoat layer 1 |
| Example 68 | Undercoat layer 1 |
| Example 69 | Undercoat layer 1 |
| Example 70 | Undercoat layer 5 |
| Example 71 | Undercoat layer 6 |
| Example 72 | Undercoat layer 2 |
| Example 73 | Undercoat layer 3 |
| Example 74 | Undercoat layer 4 |
| Example 75 | Undercoat layer 3 |
| Example 76 | Undercoat layer 3 |
| Comparative Example 19 | Undercoat layer 1 |
| Comparative Example 20 | Undercoat layer 1 |
| Comparative Example 21 | Undercoat layer 1 |
| Comparative Example 22 | Undercoat layer 1 |
| Comparative Example 23 | Undercoat layer 1 |
| Comparative Example 24 | Undercoat layer 1 |
| Comparative Example 25 | Undercoat layer 1 |
| Comparative Example 26 | Undercoat layer 1 |

Table 23 (continued)

| Examples and Comparative Examples | Production conditions of magnetic recording medium | |
|---|---|---|
| | Magnetic particles | |
| | Kind | Amount blended (part by weight) |
| Example 65 | Magnetic particles 1 | 100.0 |
| Example 66 | Magnetic particles 1 | 100.0 |
| Example 67 | Magnetic particles 2 | 100.0 |
| Example 68 | Magnetic particles 2 | 100.0 |
| Example 69 | Magnetic particles 2 | 100.0 |
| Example 70 | Magnetic particles 2 | 100.0 |
| Example 71 | Magnetic particles 2 | 100.0 |
| Example 72 | Magnetic particles 2 | 100.0 |
| Example 73 | Magnetic particles 2 | 100.0 |
| Example 74 | Magnetic particles 3 | 100.0 |
| Example 75 | Magnetic particles 2 | 100.0 |
| Example 76 | Magnetic particles 2 | 100.0 |
| Comparative Example 19 | Magnetic particles 2 | 100.0 |
| Comparative Example 20 | Magnetic particles 2 | 100.0 |
| Comparative Example 21 | Magnetic particles 2 | 100.0 |
| Comparative Example 22 | Magnetic particles 2 | 100.0 |
| Comparative Example 23 | Magnetic particles 2 | 100.0 |
| Comparative Example 24 | Magnetic particles 2 | 100.0 |
| Comparative Example 25 | Magnetic particles 2 | 100.0 |
| Comparative Example 26 | Magnetic particles 2 | 100.0 |

Table 23 (continued)

| Examples and Comparative Examples | Production conditions of magnetic recording medium | | Properties of magnetic coating composition |
|---|---|---|---|
| | Filler | | |
| | Kind | Amount blended (part by weight) | Viscosity (cP) |
| Example 65 | Example 53 | 7.0 | 2,883 |
| Example 66 | Example 54 | 7.0 | 2,768 |
| Example 67 | Example 55 | 10.0 | 6,140 |
| Example 68 | Example 56 | 14.0 | 5,768 |
| Example 69 | Example 57 | 21.0 | 4,843 |
| Example 70 | Example 58 | 7.0 | 5,652 |
| Example 71 | Example 59 | 7.0 | 5,321 |
| Example 72 | Example 60 | 15.0 | 5,963 |
| Example 73 | Example 61 | 10.0 | 6,410 |
| Example 74 | Example 62 | 7.0 | 3,814 |
| Example 75 | Example 63 | 10.0 | 5,862 |
| Example 76 | Example 64 | 7.0 | 5,326 |
| Comparative Example 19 | Comparative Example 3 | 7.0 | 10,240 |
| Comparative Example 20 | Comparative Example 5 | 7.0 | 8,864 |
| Comparative Example 21 | Comparative Example 6 | 7.0 | 9,682 |
| Comparative Example 22 | Comparative Example 7 | 7.0 | 10,086 |
| Comparative Example 23 | Comparative Example 8 | 7.0 | 8,628 |
| Comparative Example 24 | Comparative Example 9 | 7.0 | 6,814 |
| Comparative Example 25 | Comparative Example 10 | 7.0 | 7,238 |
| Comparative Example 26 | Comparative Example 11 | 7.0 | 8,324 |

Table 24

| Examples | Reference tape | Properties of magnetic recording medium | | | |
|---|---|---|---|---|---|
| | | Coercive force value | | Square-ness (-) | Gloss (%) |
| | | (kA/m) | (Oe) | | |
| Example 65 | Reference tape 6 | 79.0 | 993 | 0.90 | 198 |
| Example 66 | Reference tape 6 | 79.4 | 998 | 0.91 | 196 |
| Example 67 | Reference tape 7 | 180.9 | 2,273 | 0.89 | 221 |
| Example 68 | Reference tape 7 | 182.7 | 2,296 | 0.89 | 225 |
| Example 69 | Reference tape 7 | 183.1 | 2,301 | 0.88 | 227 |
| Example 70 | Reference tape 7 | 182.7 | 2,296 | 0.89 | 230 |
| Example 71 | Reference tape 7 | 181.5 | 2,281 | 0.89 | 227 |
| Example 72 | Reference tape 7 | 182.9 | 2,298 | 0.90 | 233 |
| Example 73 | Reference tape 7 | 183.0 | 2,299 | 0.90 | 231 |
| Example 74 | Reference tape 8 | 205.8 | 2,586 | 0.88 | 236 |
| Example 75 | Reference tape 7 | 180.9 | 2,273 | 0.91 | 215 |
| Example 76 | Reference tape 7 | 181.3 | 2,278 | 0.90 | 218 |

Table 24 (continued)

| Examples | Properties of magnetic recording medium | | | |
| --- | --- | --- | --- | --- |
| | Surface roughness Ra (nm) | Linear absorption ($\mu m^{-1}$) | Electromagnetic performance | |
| | | | 4 MHz (dB) | 7 MHz (dB) |
| Example 65 | 6.6 | 1.51 | +2.4 | - |
| Example 66 | 6.8 | 1.53 | +2.5 | - |
| Example 67 | 6.5 | 1.52 | - | +2.5 |
| Example 68 | 6.3 | 1.54 | - | +2.6 |
| Example 69 | 6.4 | 1.53 | - | +2.4 |
| Example 70 | 6.4 | 1.62 | - | +2.6 |
| Example 71 | 6.0 | 1.68 | - | +2.8 |
| Example 72 | 6.5 | 1.57 | - | +2.6 |
| Example 73 | 6.1 | 1.55 | - | +2.5 |
| Example 74 | 6.5 | 1.54 | - | +2.6 |
| Example 75 | 6.6 | 1.46 | - | +2.4 |
| Example 76 | 6.7 | 1.51 | - | +2.3 |

Table 24 (continued)

| Examples | Properties of magnetic recording medium | |
|---|---|---|
| | Durability | |
| | Running durability time (min.) | Head contamination (head cleaning property) |
| Example 65 | 28.8 | A |
| Example 66 | ≥30 | A |
| Example 67 | 28.9 | A |
| Example 68 | 29.3 | A |
| Example 69 | 27.7 | A |
| Example 70 | ≥30 | A |
| Example 71 | ≥30 | A |
| Example 72 | ≥30 | A |
| Example 73 | 29.2 | A |
| Example 74 | 28.1 | A |
| Example 75 | 26.2 | B |
| Example 76 | 26.9 | B |

Table 24 (continued)

| Examples | Properties of magnetic recording medium | |
|---|---|---|
| | Friction coefficient (-) | Surface electrical resistivity value ($\Omega/cm^2$) |
| Example 65 | 0.27 | $2.6 \times 10^7$ |
| Example 66 | 0.27 | $1.8 \times 10^7$ |
| Example 67 | 0.26 | $4.6 \times 10^7$ |
| Example 68 | 0.25 | $4.9 \times 10^7$ |
| Example 69 | 0.25 | $3.4 \times 10^7$ |
| Example 70 | 0.24 | $6.4 \times 10^6$ |
| Example 71 | 0.25 | $8.2 \times 10^6$ |
| Example 72 | 0.23 | $9.6 \times 10^6$ |
| Example 73 | 0.22 | $1.2 \times 10^7$ |
| Example 74 | 0.24 | $1.6 \times 10^7$ |
| Example 75 | 0.30 | $8.3 \times 10^6$ |
| Example 76 | 0.29 | $7.4 \times 10^6$ |

Table 25

| Comparative Examples | Reference tape | Properties of magnetic recording medium | | | |
|---|---|---|---|---|---|
| | | Coercive force value | | Square-ness (-) | Gloss (%) |
| | | (kA/m) | (Oe) | | |
| Comparative Example 19 | Reference tape 7 | 180.5 | 2,268 | 0.80 | 158 |
| Comparative Example 20 | Reference tape 7 | 181.5 | 2,281 | 0.78 | 153 |
| Comparative Example 21 | Reference tape 7 | 181.1 | 2,276 | 0.80 | 161 |
| Comparative Example 22 | Reference tape 7 | 180.9 | 2,273 | 0.82 | 153 |
| Comparative Example 23 | Reference tape 7 | 180.8 | 2,272 | 0.83 | 146 |
| Comparative Example 24 | Reference tape 7 | 180.5 | 2,268 | 0.83 | 152 |
| Comparative Example 25 | Reference tape 7 | 179.5 | 2,256 | 0.84 | 173 |
| Comparative Example 26 | Reference tape 7 | 181.5 | 2,281 | 0.85 | 178 |

Table 25 (continued)

| Comparative Examples | Properties of magnetic recording medium | | | |
|---|---|---|---|---|
| | Surface roughness Ra (nm) | Linear absorption ($\mu m^{-1}$) | Electromagnetic performance | |
| | | | 4 MHz (dB) | 7 MHz (dB) |
| Comparative Example 19 | 18.3 | 1.19 | - | -1.3 |
| Comparative Example 20 | 15.6 | 1.23 | - | -1.0 |
| Comparative Example 21 | 14.3 | 1.22 | - | -1.1 |
| Comparative Example 22 | 18.3 | 1.26 | - | -1.6 |
| Comparative Example 23 | 21.3 | 1.21 | - | -2.1 |
| Comparative Example 24 | 26.5 | 1.23 | - | -1.3 |
| Comparative Example 25 | 18.2 | 1.26 | - | -0.6 |
| Comparative Example 26 | 16.5 | 1.28 | - | -0.3 |

Table 25 (continued)

| Comparative Examples | Properties of magnetic recording medium | |
|---|---|---|
| | Durability | |
| | Running durability time (min.) | Head contamination (head cleaning property) |
| Comparative Example 19 | 15.2 | C |
| Comparative Example 20 | 8.3 | D |
| Comparative Example 21 | 9.6 | D |
| Comparative Example 22 | 12.1 | C |
| Comparative Example 23 | 10.5 | D |
| Comparative Example 24 | 9.3 | D |
| Comparative Example 25 | 11.3 | C |
| Comparative Example 26 | 14.8 | C |

Table 25 (continued)

| Comparative Examples | Properties of magnetic recording medium | |
|---|---|---|
| | Friction coefficient (-) | Surface electrical resistivity value ($\Omega/cm^2$) |
| Comparative Example 19 | 0.43 | $8.3 \times 10^9$ |
| Comparative Example 20 | 0.42 | $4.1 \times 10^9$ |
| Comparative Example 21 | 0.41 | $3.3 \times 10^9$ |
| Comparative Example 22 | 0.38 | $2.2 \times 10^9$ |
| Comparative Example 23 | 0.41 | $2.6 \times 10^9$ |
| Comparative Example 24 | 0.43 | $4.3 \times 10^9$ |
| Comparative Example 25 | 0.41 | $3.8 \times 10^9$ |
| Comparative Example 26 | 0.36 | $1.2 \times 10^9$ |

## Claims

**1.** A magnetic recording medium comprising:

(a) a non-magnetic base film; and
(b) a magnetic recording layer comprising a binder resin, magnetic particles and a black filler having an average diameter of 0.08 to 1.0 µm and comprising:

- hematite particles as core particles;
- a coating layer on the surface of said hematite particles, comprising at least one organosilicon compound selected from:

  (1) organosilane compounds obtainable from alkoxysilane compounds, and
  (2) polysiloxanes or modified polysiloxanes; and

- a carbon black coat which is provided on said coating layer in an amount of from more than 30 to 60 parts by weight based on 100 parts by weight of said hematite particles.

**2.** A magnetic recording medium according to claim 1, wherein said hematite particles are manganese-containing

hematite particles.

**3.** A magnetic recording medium according to claim 1 or 2, wherein said hematite particles are particles which have a coat on at least a part of the surface thereof comprising at least one compound selected from hydroxides of aluminum, oxides of aluminum, hydroxides of silicon and oxides of silicon in an amount of 0.01 to 50 % by weight, calculated as Al or $SiO_2$, based on the total weight of the hematite particles.

**4.** A magnetic recording medium according any one of the preceding claims, wherein said alkoxysilane compound is represented by the general formula (I):

$$R^1{}_aSiX_{4-a} \qquad (I)$$

wherein $R^1$ is $C_6H_5$-, $(CH_3)_2CHCH_2$- or n-$C_bH_{2b+1}$- (wherein b is an integer of 1 to 18); X is $CH_3O$- or $C_2H_5O$-; and a is an integer of 0 to 3.

**5.** A magnetic recording medium according to claim 4, wherein said alkoxysilane compound is methyltriethoxysilane, dimethyldiethoxysilane, phenyltriethoxysilane, diphenyldiethoxysilane, methyltrimethoxysilane, dimethyldimethoxysilane, phenyltrimethoxysilane, diphenyldimethoxysilane, isobutyltrimethoxysilane or decyltrimethoxysilane.

**6.** A magnetic recording medium according any one of the preceding claims, wherein said polysiloxanes are represented by the general formula (II):

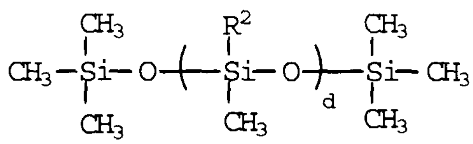
(II)

wherein $R^2$ is H- or $CH_3$- and d is an integer of 15 to 450.

**7.** A magnetic recording medium according to claim 6, wherein said polysiloxanes are ones having methyl hydrogen siloxane units.

**8.** A magnetic recording medium according to any one of the preceding claims, wherein said modified polysiloxanes are ones selected from:

(A) polysiloxanes modified with at least one compound selected from polyethers, polyesters and epoxy compounds, and
(B) polysiloxanes whose molecular terminal is modified with at least one group selected from carboxylic acid groups, alcohol groups and a hydroxyl group.

**9.** A magnetic recording medium according to claim 8, wherein said polysiloxanes (A) are represented by the general formula (III), (IV) or (V):

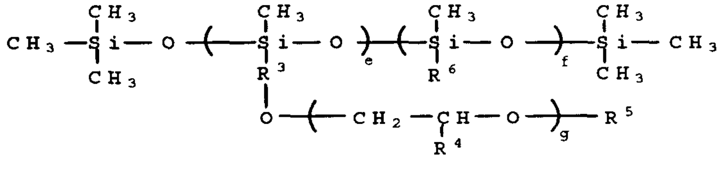
(III)

wherein $R^3$ is $-(-CH_2-)_h-$; $R^4$ is $-(-CH_2-)_i-CH_3$; $R^5$ is -OH, -COOH, $-CH=CH_2$, $-C(CH_3)=CH_2$ or $-(-CH_2-)_j-CH_3$; $R^6$ is $-(-CH_2-)_k-CH_3$; g and h are an integer of 1 to 15; i, j and k are an integer of 0 to 15; e is an integer of 1 to 50; and f is an integer of 1 to 300;

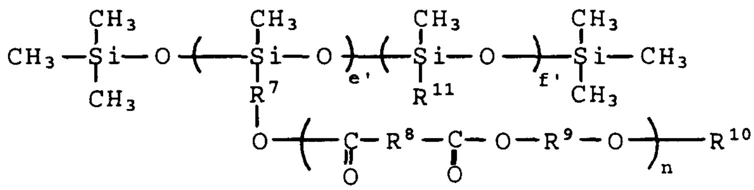

(IV)

wherein $R^7$, $R^8$ and $R^9$ are $-(-CH_2-)_q-$ and may be the same or different; $R^{10}$ is -OH, -COOH, $-CH=CH_2$, $-C(CH_3)=CH_2$ or $-(-CH_2-)_r-CH_3$; $R^{11}$ is $-(-CH_2-)_s-CH_3$; n and q are an integer of 1 to 15; r and s are an integer of 0 to 15; e' is an integer of 1 to 50; and f' is an integer of 1 to 300; or

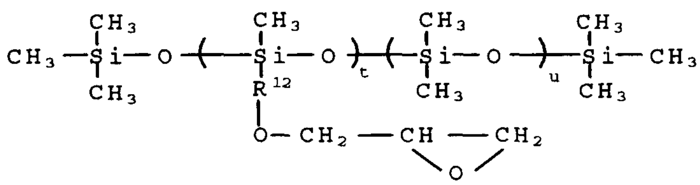

(V)

wherein $R^{12}$ is $-(-CH_2-)_v-$; v is an integer of 1 to 15; t is an integer of 1 to 50; and u is an integer of 1 to 300.

**10.** A magnetic recording medium according to claim 8 or 9, wherein said polysiloxanes (B) are represented by the general formula (VI):

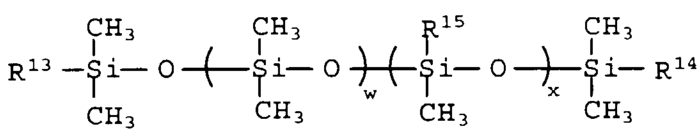

(VI)

wherein $R^{13}$ and $R^{14}$ are -OH, $R^{16}OH$ or $R^{17}COOH$ and may be the same or different; $R^{15}$ is $-CH_3$ or $-C_6H_5$; $R^{16}$ and $R^{17}$ are $-(-CH_2-)y-$; y is an integer of 1 to 15; w is an integer of 1 to 200; and x is an integer of 0 to 100.

**11.** A magnetic recording medium according to any one of the preceding claims, wherein the amount of said organosilicon compound coating is 0.02 to 5.0 % by weight, calculated as Si, based on the total weight of the organosilicon compound(s) and said hematite particles.

**12.** A magnetic recording medium according to any one of the preceding claims, wherein said carbon black coat is obtainable by mixing, while applying a shear force, carbon black particles having a particle size of 0.002 to 0.05 μm with the hematite particles coated with at least one organosilicon compound.

**13.** A magnetic recording medium according to any one of the preceding claims, wherein the thickness of said carbon black coat is not more than 0.06 μm.

**14.** A magnetic recording medium according to any one of the preceding claims, wherein said black-filler has an absorption amount of myristic acid of 0.01 to 0.3 $mg/m^2$.

**15.** A magnetic recording medium according to any one of the preceding claims, wherein the amount of said black filler is 1 to 30 parts by weight per 100 parts by weight of said magnetic particles.

**16.** A magnetic recording medium according to any one of the preceding claims, wherein said magnetic particles are magnetic acicular metal particles containing iron as a main component.

**17.** A magnetic recording medium according to any one of the preceding claims, which further comprises a non-magnetic undercoat layer disposed between said non-magnetic base film (a) and said magnetic recording layer (b).

**18.** A magnetic recording medium according to claim 1, which exhibits a gloss of coating film of 165 to 300 %, a surface roughness Ra of coating film of not more than 9.4 nm, a linear absorption of coating film of 1.25 to 5.00 $\mu m^{-1}$, a surface electrical resistivity of not more than $5.0 \times 10^8$ $\Omega/cm^2$ and a friction coefficient of 0.25 to 0.30.

**19.** A magnetic recording medium according to claim 3, which exhibits a gloss of coating film of 170 to 300 %, a surface roughness Ra of coating film of not more than 9.0 nm, a linear absorption of coating film of 1.25 to 5.00 $\mu m^{-1}$, a surface electrical resistivity of not more than $5.0 \times 10^8$ $\Omega/cm^2$ and a friction coefficient of 0.25 to 0.30.

**20.** A magnetic recording medium according to claim 17, which exhibits a gloss of coating film of 165 to 300 %, a surface roughness Ra of coating film of not more than 9.5 nm, a linear absorption of coating film of 1.40 to 5.00 $\mu m^{-1}$, and a surface electrical resistivity of not more than $5.0 \times 10^8$ $\Omega/cm^2$ and a friction coefficient of 0.25 to 0.30.

**21.** A black filler as defined in any one of claims 1 to 14.

**22.** Use in a magnetic recording medium of a black filler as defined in any one of claims 1 to 14.

European Patent Office

# EUROPEAN SEARCH REPORT

Application Number
EP 00 31 0100

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 825 235 A (TODA KOGYO CORP) 25 February 1998 (1998-02-25) * claim 10 * | 1 | G11B5/708 C09C3/12 C09C1/24 |
| A | EP 0 945 766 A (TODA KOGYO CORP) 29 September 1999 (1999-09-29) * claim 1 * | 21 | |
| A | EP 0 924 690 A (TODA KOGYO CORP) 23 June 1999 (1999-06-23) * claim 1 * | 1 | |
| A | EP 0 913 431 A (TODA KOGYO CORP) 6 May 1999 (1999-05-06) * claims 1,13; examples * | 21 | |
| E | EP 1 076 266 A (TODA KOGYO CORP) 14 February 2001 (2001-02-14) * claim 1 * | 21 | |
| E | EP 1 074 980 A (TODA KOGYO CORP) 7 February 2001 (2001-02-07) * claim 1 * | 21 | TECHNICAL FIELDS SEARCHED (Int.Cl.7) C09C G11B |

The present search report has been drawn up for all claims

| Place of search | Date of completion of the search | Examiner |
|---|---|---|
| THE HAGUE | 23 March 2001 | Heywood, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT ON EUROPEAN PATENT APPLICATION NO.** EP 00 31 0100

This annex lists the patent family membersrelating to the patent documents cited in the above-mentioned European search report.
The members are as contained in the European Patent Office EDP file on
The European Patent Office is in no way liable for these particulars which are merely given for the purpose of information.

23-03-2001

| Patent document cited in search report | Publication date | Patent family member(s) | Publication date |
|---|---|---|---|
| EP 0825235 A | 25-02-1998 | JP 10064044 A | 06-03-1998 |
| | | JP 10279314 A | 20-10-1998 |
| | | US 6117540 A | 12-09-2000 |
| | | US 6087004 A | 11-07-2000 |
| EP 0945766 A | 29-09-1999 | JP 11338191 A | 10-12-1999 |
| EP 0924690 A | 23-06-1999 | JP 11242812 A | 07-09-1999 |
| EP 0913431 A | 06-05-1999 | JP 11323174 A | 26-11-1999 |
| EP 1076266 A | 14-02-2001 | NONE | |
| EP 1074980 A | 07-02-2001 | NONE | |

EPO FORM P0459

For more details about this annex : see Official Journal of the European Patent Office, No. 12/82